(19) Europäisches Patentamt
European Patent Office
Office européen des brevets

(11) EP 4 618 352 A1

(12) **EUROPEAN PATENT APPLICATION**
published in accordance with Art. 153(4) EPC

(43) Date of publication:
17.09.2025 Bulletin 2025/38

(21) Application number: 23890178.9

(22) Date of filing: 27.06.2023

(51) International Patent Classification (IPC):
H02J 3/38 (2006.01)        H02J 3/48 (2006.01)
H02J 3/50 (2006.01)        H02J 3/16 (2006.01)

(52) Cooperative Patent Classification (CPC):
H02J 3/16; H02J 3/38; H02J 3/48; H02J 3/50

(86) International application number:
PCT/CN2023/102935

(87) International publication number:
WO 2024/103736 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.11.2022 CN 202211430310

(71) Applicant: Huawei Digital Power Technologies
Co., Ltd.
Shenzhen, Guangdong 518043 (CN)

(72) Inventors:
• TAN, Tian
  Shenzhen, Guangdong 518043 (CN)
• XIN, Kai
  Shenzhen, Guangdong 518043 (CN)
• WANG, Shuo
  Shenzhen, Guangdong 518043 (CN)

(74) Representative: Maiwald GmbH
Engineering
Elisenhof
Elisenstrasse 3
80335 München (DE)

(54) **MICRO-GRID CLUSTER AND MICRO-GRID CONTROL METHOD**

(57) This application provides a microgrid cluster and a microgrid control method, to increase power regulation response speeds of microgrids, reduce communication layers, and reduce a communication delay. The microgrid cluster may include a plurality of microgrids. A point of common coupling of any one microgrid is coupled to a tie line. The tie line may be configured to transmit electric energy. The microgrid includes a microgrid controller and a plurality of distributed energy resources. The plurality of distributed energy resources are coupled to the point of common coupling of the microgrid to which the plurality of distributed energy resources belong. The microgrid controller is configured to control output powers of the plurality of distributed energy resources. The microgrid controller is communicatively connected to a microgrid controller or microgrid controllers of one or more other microgrids. The microgrid controller is configured to: send output power information of the microgrid to which the microgrid controller belongs, to the communicatively-connected microgrid controller in response to a cluster island operation mode.

FIG. 1

**Description**

**CROSS-REFERENCE TO RELATED APPLICATIONS**

This application claims priority to Chinese Patent Application No. 202211430310.8, filed with the China National Intellectual Property Administration on November 15, 2022 and entitled "MICROGRID CLUSTER, AND MICROGRID CONTROL METHOD", which is incorporated herein by reference in its entirety.

**TECHNICAL FIELD**

This application relates to the field of electronic technologies, and in particular, to a microgrid cluster and a microgrid control method.

**BACKGROUND**

As a quantity of microgrids increases, neighboring microgrids can be connected to each other to form an independent grid or can be connected to a distribution network together to form a microgrid cluster. The microgrid cluster has more advantages than a single microgrid. For example, energy can flow in a plurality of directions between the microgrids, and therefore flexibility is high; and distributed new energy generation in sub-microgrids can complement each other, and therefore power supply reliability is high.
However, power regulation of each microgrid in the microgrid cluster depends on control of a central controller of the microgrid cluster, resulting in low reliability of each microgrid. In addition, a communication distance between the central controller and each microgrid is long, many communication layers are involved, and a communication delay is large. Consequently, a power regulation response speed of each microgrid is low.

**SUMMARY**

This application provides a microgrid cluster and a microgrid control method, to increase power regulation response speeds of microgrids, reduce communication layers, and reduce a communication delay.
According to a first aspect, an embodiment of this application provides a microgrid cluster. The microgrid cluster may include a plurality of microgrids. A point of common coupling of any one microgrid is coupled to a tie line. The tie line may be configured to transmit electric energy. The any one microgrid may be communicatively connected to one or more other microgrids. The any one microgrid in the microgrid cluster includes a microgrid controller and a plurality of distributed energy resources. The plurality of distributed energy resources are coupled to the point of common coupling of the microgrid to which the plurality of distributed energy resources belong. The microgrid controller is configured to control output powers of the plurality of distributed energy resources. The microgrid controller is communicatively connected to a microgrid controller or microgrid controllers of the one or more other microgrids. The microgrid controller is configured to: send output power information of the microgrid to which the microgrid controller belongs, to the communicatively-connected microgrid controller in response to a cluster island operation mode.
In this embodiment of this application, in the microgrid cluster, a microgrid may include a microgrid controller and a plurality of distributed energy resources. The microgrid controller exchanges output power information with another microgrid controller. In addition, the microgrid controller centrally controls the plurality of distributed energy resources. It can be learned that the microgrid cluster provided in this embodiment of this application may include three communication layers. A microgrid controller of each microgrid adjusts an output power of each microgrid through distributed control. In each microgrid, the microgrid controller adjusts output powers of a plurality of distributed energy resources by centrally controlling the distributed energy resources. The microgrid cluster may operate in a cluster island operation mode. In the cluster island operation mode, the microgrid cluster may operate independently and may not be connected to a large grid. In the cluster island operation mode, any one microgrid cluster in the microgrid cluster may provide an output power of the microgrid cluster to the other communicatively-connected microgrid. Based on this design, the any one microgrid can adjust the output power of the microgrid based on output power information of the communicatively-connected microgrid. It can be learned that there is no need to configure a central controller in the microgrid cluster to provide a power instruction to each microgrid. In the microgrid cluster provided in this application, the microgrids exchange output power information with each other, so that there are fewer communication layers, a communication delay is reduced, and power regulation response speeds of the microgrids are higher.
In a possible design, the output power information may include an active power at the point of common coupling of the microgrid. The microgrid controller may determine a total active power adjustment amount of the microgrid based on the active power at the point of common coupling of the microgrid and an active power or active powers at a point or points of common coupling of the one or more other microgrids. The microgrid controller controls active powers output by the plurality of distributed energy resources in the microgrid to which the microgrid controller belongs, so that a variation of the active power at the point of common coupling of the microgrid is the total active power adjustment amount.

In this embodiment of this application, the microgrid controller of each microgrid may send an active power at a point of common coupling of the microgrid to which the microgrid controller belongs, to another communicatively-connected microgrid in response to the cluster island operation mode, so that the another communicatively-connected microgrid adjusts an output active power. The microgrid may perform active power regulation based on the active power output by the microgrid and the active power output by the another communicatively-connected microgrid. The microgrid may not need to learn of an active power output by each microgrid in the cluster, and may perform regulation based on only the active power output by the microgrid and the active power output by the communicatively-connected microgrid. Based on such a design, complexity of communication and information exchange in the cluster can be reduced, and the microgrid can regulate the active power without depending on a central controller.

In a possible design, the microgrid controller is specifically configured to: determine a first active-power-adjustment component of the microgrid based on the active power at the point of common coupling of the microgrid and the active power or the active powers at the point or points of common coupling of the one or more other microgrids; determine a second active-power-adjustment component of the microgrid based on a frequency at the point of common coupling of the microgrid and a reference frequency of the cluster; and use a sum of the first active-power-adjustment component and the second active-power-adjustment component as the total active power adjustment amount of the microgrid. For example, the first active-power-adjustment component is used to adjust the active power output at the point of common coupling of the microgrid; and the second active-power-adjustment component is used to adjust the output frequency at the point of common coupling of the microgrid.

In this embodiment of this application, each microgrid may perform operations of active power regulation and frequency regulation. The microgrid controller may determine an adjustment amount for active power regulation based on the active power at the point of common coupling of the microgrid controller and the active power at the point of common coupling of the other communicatively-connected microgrid, and determine an adjustment amount for frequency regulation based on the reference frequency of the cluster and the frequency at the point of common coupling of the microgrid controller. In this field, frequency regulation is also implemented through active power adjustment. It can be learned that in this embodiment of this application, the total active power adjustment amount of the microgrid includes the adjustment amount for active power regulation and the adjustment amount for frequency regulation. This facilitates adjusting the active power output by the microgrid and keeping the frequency at the point of common coupling stable at the reference frequency of the cluster.

In a possible design, the microgrid controller may obtain an active power adjustment amount of each distributed energy resource based on the total active power adjustment amount and a preset active power regulation proportional parameter of each distributed energy resource, and control, based on the active power adjustment amount of each distributed energy resource, each distributed energy resource to adjust the output active power, so that the active power output by each distributed energy resource is a sum of an optimal active power of the distributed energy resource and the active power adjustment amount of the distributed energy resource.

In this embodiment of this application, in the microgrid, the microgrid controller centrally controls the distributed energy resources, so that response speeds at which the distributed energy resources adjust the output powers can be improved.

In some examples, in response to the cluster island operation mode, the microgrid controller may allocate an active power adjustment amount of each distributed energy resource based on the total active power adjustment amount and a preset active power regulation proportional parameter of each distributed energy resource, so that the active power adjustment amount of each distributed energy resource is determined. The microgrid controller may send an active power control instruction to a controller of each distributed energy resource, to control the distributed energy resource to output the active power. The active power control instruction indicates a sum of the active power adjustment amount of each distributed energy resource and an optimal active power operating point of each distributed energy resource.

In a possible design, the output power information may include a reactive power at the point of common coupling of the microgrid; and the microgrid controller is further configured to: determine a reference voltage of the point of common coupling of the microgrid based on the reactive power at the point of common coupling of the microgrid, a reactive power or reactive powers at the point or points of common coupling of the one or more other microgrids, and a reference voltage of the cluster; determine a total reactive power adjustment amount of the microgrid based on a reference voltage of the microgrid and a voltage at the point of common coupling of the microgrid; obtain a reactive power adjustment amount of each distributed energy resource based on the total reactive power adjustment amount and a preset reactive power regulation proportional parameter of each distributed energy resource; and control, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

In this embodiment of this application, the microgrid may be a non-critical voltage node. In response to the cluster island operation mode, a microgrid controller in the non-critical voltage node may adjust, based on a reactive power at a point of common coupling of another communicatively-connected microgrid and a reactive power at a point of common coupling of the non-critical voltage node, a reactive power output by the non-critical voltage node. The microgrid controller may communicate with and exchange reactive power information with the another microgrid, and determine a reactive power adjustment amount of the non-critical voltage node. The microgrid controller may centrally control the distributed energy resources to adjust reactive powers.

In some examples, the microgrid controller may determine a reference voltage of the microgrid based on a reactive power output by the microgrid controller, a reactive power at the point of common coupling of the other communicatively-connected microgrid, and a reference voltage of the cluster, and determine a total reactive power adjustment amount of the microgrid based on the reference voltage of the microgrid and a voltage at the point of common coupling of the microgrid. In this way, the total reactive power adjustment amount can be determined. The microgrid may allocate a reactive power adjustment amount of each distributed energy resource based on the total reactive power adjustment amount and a preset reactive power regulation proportional parameter of each distributed energy resource, so that the reactive power adjustment amount of each distributed energy resource is determined. The microgrid may send a reactive power control instruction to a controller of each distributed energy resource, to control the distributed energy resource to adjust an output reactive power. The reactive power control instruction indicates a sum of the reactive power adjustment amount of each distributed energy resource and an optimal reactive power operating point of each distributed energy resource.

In a possible design, the microgrid controller is further configured to: determine a total reactive power adjustment amount of the microgrid based on a reference voltage of the cluster and a voltage at the point of common coupling of the microgrid; obtain a reactive power adjustment amount of each distributed energy resource based on the total reactive power adjustment amount and a preset reactive power regulation proportional parameter of each distributed energy resource; and control, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource. For example, the total reactive power adjustment amount of the microgrid is used to adjust the output voltage at the point of common coupling of the microgrid to the reference voltage of the cluster.

In this embodiment of this application, the microgrid may be a critical voltage node. The microgrid controller may perform voltage regulation in response to the cluster island operation mode. In this field, voltage regulation is implemented through reactive power regulation. The microgrid controller may adjust and determine the total reactive power adjustment amount of the microgrid based on the reference voltage of the cluster and the voltage at the point of common coupling of the microgrid to which the microgrid controller belongs. The microgrid controller may centrally control the distributed energy resources to adjust reactive powers.

According to a second aspect, an embodiment of this application further provides a microgrid control method, applied to a microgrid cluster. The microgrid cluster includes a plurality of microgrids. A point of common coupling of any one microgrid is coupled to a tie line. The tie line is configured to transmit electric energy. The any one microgrid is communicatively connected to one or more other microgrids. The microgrid includes a microgrid controller and a plurality of distributed energy resources. The plurality of distributed energy resources are coupled to the point of common coupling of the microgrid to which the plurality of distributed energy resources belong. The method includes: The microgrid controller sends output power information of the microgrid to which the microgrid controller belongs, to a communicatively-connected microgrid controller in response to a cluster island operation mode; and the microgrid controller controls output powers of the plurality of distributed energy resources.

In a possible design, in the microgrid control method provided in this embodiment of this application, the output power information includes an active power at the point of common coupling of the microgrid; and after the microgrid controller sends the output power information of the microgrid to which the microgrid controller belongs, to the communicatively-connected microgrid controller in response to the cluster island operation mode, the method further includes: The microgrid controller determines a total active power adjustment amount of the microgrid based on the active power at the point of common coupling of the microgrid and an active power or active powers at a point or points of common coupling of the one or more other microgrids; and the microgrid controller controls active powers output by the plurality of distributed energy resources in the microgrid to which the microgrid controller belongs, so that a variation of the active power at the point of common coupling of the microgrid is the total active power adjustment amount.

In a possible design, that the microgrid controller determines a total active power adjustment amount of the microgrid based on the active power at the point of common coupling of the microgrid and an active power or active powers at a point or points of common coupling of the one or more other microgrids includes: determining a first active-power-adjustment component of the microgrid based on the active power at the point of common coupling of the microgrid and the active power or the active powers at the point or points of common coupling of the one or more other microgrids; determining a second active-power-adjustment component of the microgrid based on a frequency at the point of common coupling of the microgrid and a reference frequency of the cluster; and using a sum of the first active-power-adjustment component and the second active-power-adjustment component as the total active power adjustment amount of the microgrid.

In a possible design, the first active-power-adjustment component is used to adjust the active power output at the point of common coupling of the microgrid; and the second active-power-adjustment component is used to adjust the output frequency at the point of common coupling of the microgrid.

In a possible design, that the microgrid controller controls active powers output by the plurality of distributed energy resources in the microgrid to which the microgrid controller belongs includes: The microgrid controller obtains an active power adjustment amount of each distributed energy resource based on the total active power adjustment amount and a preset active power regulation proportional parameter of each distributed energy resource; and the microgrid controller controls, based on the active power adjustment amount of each distributed energy resource, each distributed energy resource to adjust the output active power, so that the active power output by each distributed energy resource is a sum of an optimal active power of the distributed energy resource and the active power adjustment amount of the distributed energy resource.

In a possible design, the output power information includes a reactive power at the point of common coupling of the microgrid; and after the microgrid controller sends the output power information of the microgrid to which the microgrid controller belongs, to the communicatively-connected microgrid controller in response to the cluster island operation mode, the method further includes: The microgrid controller determines a reference voltage of the point of common coupling of the microgrid based on the reactive power at the point of common coupling of the microgrid, a reactive power or reactive powers at the point or points of common coupling of the one or more other microgrids, and a reference voltage of the cluster; the microgrid controller determines a total reactive power adjustment amount of the microgrid based on a reference voltage of the microgrid and a voltage at the point of common coupling of the microgrid; the microgrid controller obtains a reactive power adjustment amount of each distributed energy resource based on the total reactive power adjustment amount and a preset reactive power regulation proportional parameter of each distributed energy resource; and the microgrid controller controls, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

In a possible design, the output power information includes a reactive power at the point of common coupling of the microgrid; and after the microgrid controller sends the output power information of the microgrid to which the microgrid controller belongs, to the communicatively-connected microgrid controller in response to the cluster island operation mode, the method further includes: determining, by the microgrid controller, a total reactive power adjustment amount of the microgrid based on a reference voltage of the cluster and a voltage at the point of common coupling of the microgrid; allocating, by the microgrid controller, a reactive power adjustment amount of each distributed energy resource based on the total reactive power adjustment amount and a preset reactive power regulation proportional parameter of each distributed energy resource; and controlling, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

In a possible design, the total reactive power adjustment amount of the microgrid is used to adjust the output voltage at the point of common coupling of the microgrid to the reference voltage of the cluster.

According to a third aspect, this application provides a microgrid controller, where the microgrid controller can perform the microgrid control method according to any one of the second aspect and the designs of the second aspect.

According to a fourth aspect, this application provides a distributed energy resource, where the distributed energy resource and a microgrid controller can form the microgrid according to any one of the first aspect and the designs of the first aspect.

According to a fifth aspect, this application provides a computer-readable storage medium, where the computer-readable storage medium stores a computer program. When the computer program is run on a computer, the computer is enabled to perform the method according to any one of the second aspect or the possible designs of the third aspect.

According to a sixth aspect, this application provides a computer program product, where the computer program product includes a computer program or instructions. When the computer program or the instructions are run on a computer, the computer is enabled to perform the method according to any one of the second aspect or the possible designs of the third aspect.

For technical effects that can be achieved in any one of the second aspect to the sixth aspect, refer to the descriptions of the technical effects that can be achieved in any one of the first aspect and the possible designs of the first aspect. Repeated descriptions are not provided.

## BRIEF DESCRIPTION OF DRAWINGS

FIG. 1 is a diagram of a structure of a microgrid cluster according to an embodiment of this application;

FIG. 2 is a diagram of a structure of a microgrid cluster according to an embodiment of this application;

FIG. 3 is a diagram of interaction between a first microgrid and second microgrids;

FIG. 4 is a diagram of interaction between a microgrid controller and distributed energy resources and interaction between the microgrid controller and second microgrids;

FIG. 5 is a diagram of interaction between a microgrid controller and distributed energy resources and interaction between the microgrid controller and second microgrids;

FIG. 6 is a diagram of interaction between a microgrid controller and distributed energy resources and interaction between the microgrid controller and second microgrids;

FIG. 7 is a diagram of a control loop;

FIG. 8(a) is a diagram of an example of a control branch 701;

FIG. 8(b) is a diagram of an example of a control branch 701;

FIG. 8(c) is a diagram of an example of a control branch 701;

FIG. 9(a) is a diagram of an example of a control branch 702;

FIG. 9(b) is a diagram of an example of a control branch 702;

FIG. 9(c) is a diagram of an example of a control branch 702;

FIG. 10(a) is a diagram of an example of a control branch 702;

FIG. 10(b) is a diagram of an example of a control branch 702;

FIG. 10(c) is a diagram of an example of a control branch 702;

FIG. 11 is a diagram of a specific structure of a control loop; and

FIG. 12A to FIG. 12D are a diagram of a specific structure of a control loop.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the descriptions of this application, "at least one" means one or more, and "a plurality of" means two or more. In view of this, in embodiments of this application, "a plurality of" may also be understood as "at least two". The term "and/or" describes an association relationship between associated objects and indicates that three relationships may exist. For example, A and/or B may indicate the following three cases: Only A exists, both A and B exist, and only B exists. In addition, the character "/", unless otherwise specified, generally indicates an "or" relationship between the associated objects. In addition, it should be understood that in the descriptions of this application, terms such as "first" and "second" are merely used for distinguishing and description, but should not be understood as indicating or implying relative importance, or should not be understood as indicating or implying a sequence.

It should be noted that, "coupling" in embodiments of this application may be understood as an electrical connection, and coupling between two electrical elements may be direct or indirect coupling between the two electrical elements. For example, that A is connected to B may be that A is directly coupled to B, or may be that A is indirectly coupled to B through one or more other electrical elements. For example, that A is coupled to B may be that A is directly coupled to C, C is directly coupled to B, and A is coupled to B through C. In some scenarios, "coupling" may also be understood as connection. In short, coupling between A and B may enable electrical energy to be transmitted between A and B.

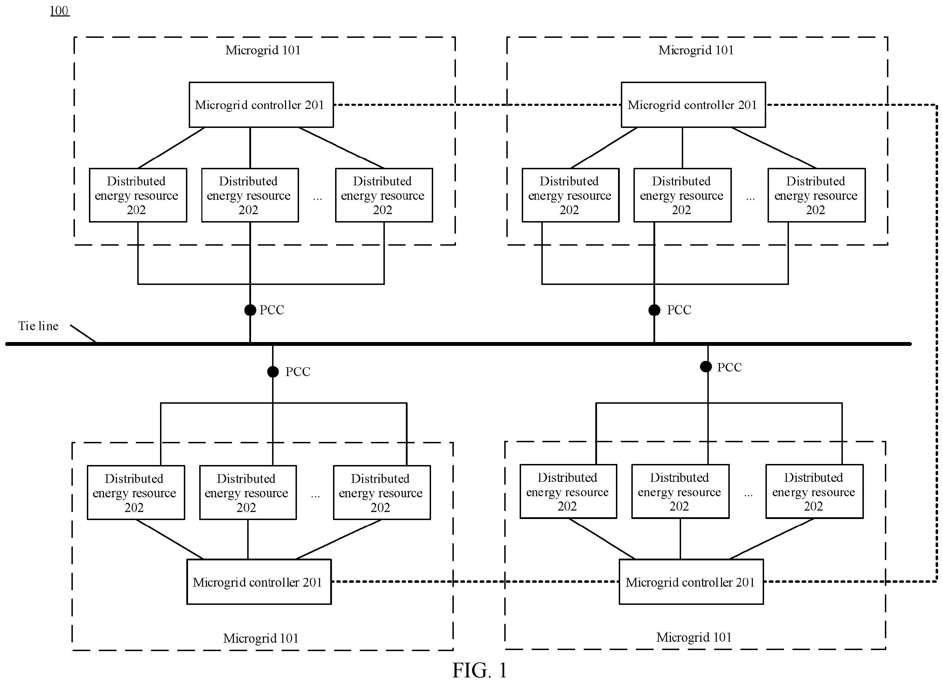

The following clearly and completely describes the technical solutions in embodiments of this application with reference to the accompanying drawings in embodiments of this application. An embodiment of this application provides a microgrid cluster (topology). As shown in FIG. 1, a microgrid cluster 100 may include a plurality of microgrids 101. The microgrid 101 may also be referred to as a sub-microgrid in the microgrid cluster 100.

The microgrid 101 may be considered as a small-scale power network that can achieve basic internal power balance. In some scenarios, the microgrid 101 may operate independently, and may have one or more functions such as supplying power to a load and storing energy. In some other scenarios, the microgrid 101 may be coupled to another microgrid to form a microgrid cluster, and operate in connection to the another microgrid.

In the plurality of microgrids 101, one microgrid 101 has a corresponding point of common coupling PCC. The microgrid 101 is connected to a tie line through the corresponding point of common coupling PCC. The tie line is configured to transmit electric energy. Optionally, as shown in FIG. 1, in some scenarios, the tie line may be a chain-shaped tie line. In some other scenarios, the tie line may be a ring-shaped tie line. This is not excessively limited in embodiments of this application. The following describes any one of the plurality of microgrids 101.

The microgrid 101 may include a microgrid controller 201 and a plurality of distributed energy resources 202. In the microgrid 101, each distributed energy resource 202 may be coupled to the tie line through a point of common coupling PCC corresponding to the microgrid 101 to which the distributed energy resource 202 belongs. Each distributed energy resource 202 may output electric energy to the tie line. The microgrid controller 201 may be communicatively connected to each distributed energy resource 202, and the microgrid controller 201 may send an instruction to each distributed energy resource 202, so that the microgrid controller 201 controls the distributed energy resources 202 in the microgrid 101 to which the microgrid controller 201 belongs. It can be learned that, there may be no need for a plurality of distributed energy resources 202 in each microgrid 101 to be communicatively connected to each other, and each distributed energy resource 202 may perform power regulation such as voltage regulation or frequency regulation under control of a microgrid controller 201.

In the plurality of microgrids 101, one microgrid 101 may be communicatively connected to at least one other microgrid 101. The microgrid 101 may exchange information with the communicatively-connected microgrid. In embodiments of this application, the other microgrid may be a microgrid other than the microgrid in the plurality of microgrids.

In some examples, still with reference to FIG. 1, in the microgrid cluster 100, a communication link between the microgrid 101 and the at least one other microgrid 101 may be a point-to-point communication link, so that information exchange between the microgrid 101 and the at least one other microgrid 101 is implemented. For example, a dashed line between two microgrid controllers 201 in FIG. 1 shows a communication connection between the two microgrid controllers 201. Optionally, the communication connection may be wired communication or wireless communication. In some application scenarios, the communication connection between the microgrid controllers 201 may be communication through a wired communication line.

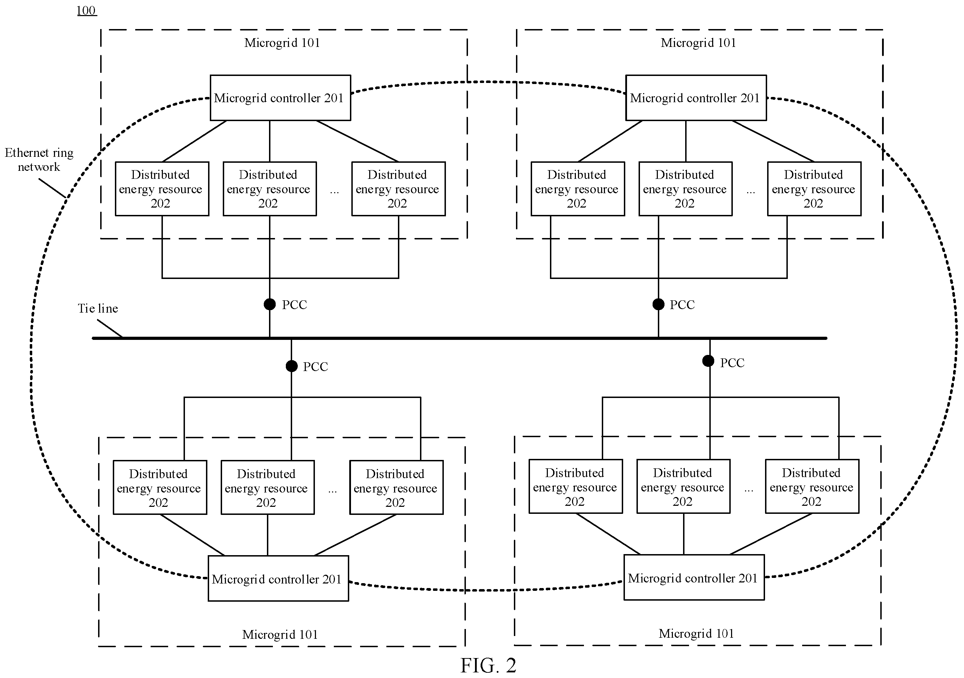

In some other examples, with reference to FIG. 2, in the microgrid cluster 100, each microgrid 101 may be communicatively connected to another microgrid 101 through an Ethernet ring network. Each microgrid 101 may exchange information with one or more other microgrids 101 through the Ethernet ring network. For similarities between FIG. 2 and FIG. 1, refer to related descriptions in FIG. 1. Details are not described herein again.

In embodiments of this application, a communication connection between microgrid controllers of two microgrids is also a communication connection between the two microgrids. This is not specifically distinguished in this application.

The microgrid cluster 100 provided in embodiments of this application may have a plurality of operation modes. Optionally, the plurality of operation modes may include a cluster grid-connected operation mode, a cluster island operation mode, and the like. In the cluster island operation mode, the microgrid cluster 100 may operate independently as a whole. In the grid-connected operation mode, the microgrid cluster 100, as a whole, may be coupled to another grid or cluster and operate in connection to the another grid or cluster.

Based on topologies of the microgrid cluster 100 provided in embodiments of this application, the following describes an operation process of the microgrid cluster 100 in the cluster island operation mode. The microgrid cluster 100 may send a cluster island operation mode instruction to each microgrid 101 in response to the cluster island operation mode. In the microgrid cluster 100, a microgrid controller 201 of each microgrid 101 may receive the cluster island operation mode instruction, and perform a control operation corresponding to the cluster island operation mode.

In some examples, in the microgrid cluster 100, a microgrid controller 201 of one microgrid 101 may exist as a primary microgrid controller and receive an operation mode instruction. After receiving the cluster island operation mode, the primary microgrid controller may send the cluster island operation mode instruction to each microgrid controller 201 communicatively connected to the primary microgrid controller. After receiving the cluster island operation mode instruction, each microgrid controller 201 may send the cluster island operation mode instruction to a microgrid controller 201 communicatively connected to the microgrid controller 201, so that each microgrid 101 in the microgrid cluster 100 receives the cluster island operation mode instruction.

In some other examples, in the microgrid cluster 100, a microgrid controller 201 of one microgrid 101 may exist as a primary microgrid controller. The primary microgrid controller may be communicatively connected to another microgrid controller in the microgrid cluster 100. After receiving the cluster island operation mode instruction, the primary microgrid controller may send the cluster island operation mode instruction to the another microgrid controller in the microgrid cluster 100, so that each microgrid 101 in the microgrid cluster 100 receives the cluster island operation mode instruction. Optionally, the primary microgrid controller may be communicatively connected to the another microgrid controller in the microgrid cluster 100 separately in a point to point manner, or the primary microgrid controller may be communicatively connected to the another microgrid controller in the microgrid cluster 100 through the Ethernet ring network.

Any one microgrid 101 in the microgrid cluster 100 is used as an example for description. For ease of description, in the following, the any one microgrid 101 in the microgrid cluster 100 is denoted as a first microgrid, and a microgrid communicatively connected to the first microgrid is denoted as a second microgrid. The first microgrid may be communicatively connected to one or more second microgrids.

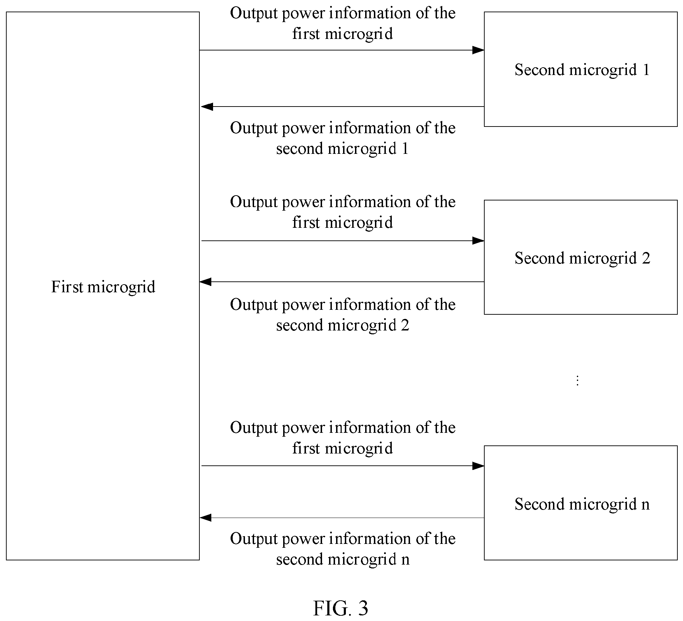

FIG. 3 shows an example of a process of interaction between a first microgrid and second microgrids in the cluster island operation mode. In the cluster island operation mode, the first microgrid may send output power information of the first microgrid to each second microgrid. The output power information of the first microgrid may include but is not limited to one or more of the following: an active power at a point of common coupling of the first microgrid and a reactive power at the point of common coupling of the first microgrid.

In this case, each second microgrid can adjust, based on the output power information of the first microgrid, an active power or a reactive power output at a point of common coupling of the second microgrid. In the microgrid cluster 100, each microgrid 101 sends output power information of the microgrid 101 to a communicatively-connected microgrid. Therefore, each microgrid can receive output power information of another microgrid. Still with reference to FIG. 3, the first microgrid may receive output power information of one or more second microgrids. The first microgrid may adjust, based on the received output power information of the one or more second microgrids, the active power or the reactive power output at the point of common coupling of the first microgrid.

For example, a microgrid controller 201 of the first microgrid may send the output power information of the first microgrid to a microgrid controller 201 of the second microgrid in response to the cluster island operation mode. The microgrid controller 201 of the first microgrid may receive output power information of each second microgrid sent by a microgrid controller 201 of the second microgrid.

In this embodiment of this application, the first microgrid may adjust an output power at the point of common coupling of the first microgrid in response to the cluster island operation mode. Adjusting the output power at the point of common coupling of the first microgrid may include one or more of the following operations: active power regulation at the point of common coupling of the first microgrid and reactive power regulation at the point of common coupling of the first microgrid. The following separately describes the operation of active power regulation at the point of common coupling of the first microgrid in the cluster island operation mode and the operation of reactive power regulation at the point of common coupling of the first microgrid in the cluster island operation mode.

Active power regulation of the first microgrid in the cluster island operation mode is first described.

In a possible design, the microgrid controller 201 of the first microgrid may determine a total active power adjustment amount of the first microgrid based on the active power at the point of common coupling of the first microgrid and an active power at a point of common coupling of another microgrid communicatively connected to the first microgrid. The microgrid controller 201 of the first microgrid may control active powers output by a plurality of distributed energy resources in the first microgrid, namely, a microgrid to which the microgrid controller 201 belongs, so that a variation of the active power at the point of common coupling of the first microgrid is the total active power adjustment amount. In this embodiment of this application, that the variation of the active power at the point of common coupling of the first microgrid is the total active power adjustment amount may mean that the variation of the active power at the point of common coupling of the first microgrid is equal to or approximately equal to the total active power adjustment amount, or may mean that a difference between the variation of the active power at the point of common coupling of the first microgrid and the total active power adjustment amount is less than or equal to a preset difference threshold. This is not specifically limited in this application.

In a possible scenario, output power information of each microgrid may include an active power at a point of common coupling of the microgrid. The active power at the corresponding point of common coupling of the first microgrid is denoted as a first active power $P_{MGk\_sample}$, where k represents an identifier of the first microgrid. The output power information of the second microgrid includes an active power at a corresponding point of common coupling of the second microgrid. The active power at the corresponding point of common coupling of the second microgrid is denoted as a second active power $P_{MGj\_sample}$, where j represents an identifier of the second microgrid, and j is not equal to k.

The microgrid controller 201 of the first microgrid may store or obtain an active power proportional parameter of the first microgrid and an active power proportional parameter of each second microgrid in advance. The active power proportional parameter of the first microgrid is denoted as $P_{MGk\_base}$. The active power proportional parameter of the second microgrid is denoted as $P_{MGj\_base}$.

In the cluster island operation mode, the first microgrid may adjust the active power at the point of common coupling of the first microgrid, and adjust a frequency of an output voltage at the point of common coupling of the first microgrid.

Based on the active power proportional parameter $P_{MGj\_base}$ of each second microgrid, the active power $P_{MGj\_sample}$ output at the point of common coupling of each second microgrid, the active power proportional parameter $P_{MGk\_base}$ of the first microgrid, and the active power $P_{MGk\_sample}$ output at the point of common coupling of the first microgrid, the first microgrid may determine an active power impact amount $\Delta p_{k\_j}$ corresponding to the second microgrid,

where $\Delta p_{k\_j} = \dfrac{P_{MGj\_sample}}{P_{MGj\_base}} - \dfrac{P_{MGk\_sample}}{P_{MGk\_base}}$. The active power impact amount corresponding to the second microgrid may represent an active power adjustment amount determined by the first microgrid based on the active power of the second microgrid.

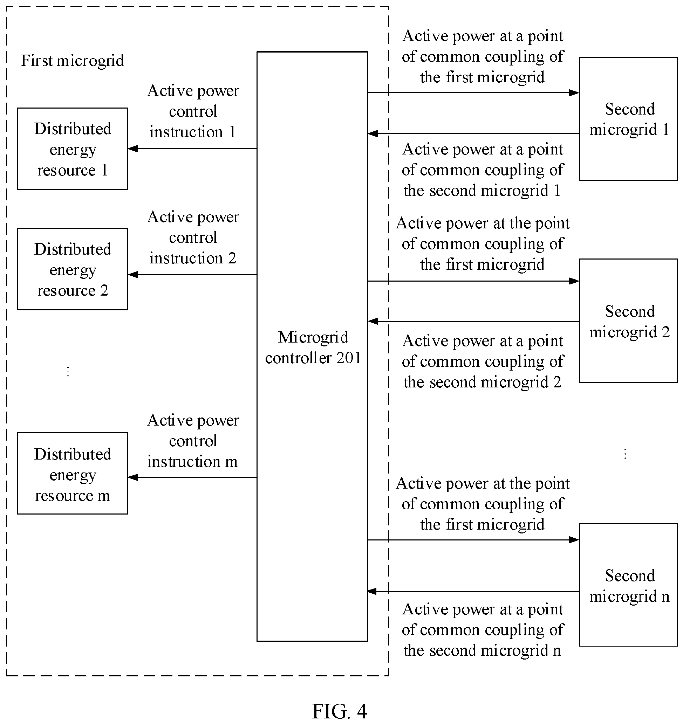

The microgrid controller 201 of the first microgrid may determine a sum of active power impact amounts corresponding to all the second microgrids as a first active-power-adjustment component $\Delta P1_{MGk}$ of the first microgrid. With reference to FIG. 4, other microgrids communicatively connected to the first microgrid are a second microgrid 1, a second microgrid 2, ..., and a second microgrid n. There are n other microgrids communicatively connected to the first microgrid, where n is a positive integer. An active power impact amount corresponding to the second microgrid 1 is denoted as $\Delta p_{k\_1}$, an active power impact amount corresponding to the second microgrid 2 is denoted as $\Delta p_{k\_2}$, and an active power impact amount corresponding to the second microgrid n is denoted as $\Delta p_{k\_n}$. The first active-power-adjustment component of the first microgrid is a sum of active power impact amounts corresponding to all of the second microgrid 1, the second microgrid 2, ..., and the second microgrid n, namely, $\sum_{1}^{n}\left(\dfrac{P_{MGi\_sample}}{P_{MGi\_base}} - \dfrac{P_{MGk\_sample}}{P_{MGk\_base}}\right)$.

The first active-power-adjustment component $\Delta P1_{MGk}$ of the first microgrid may be determined based on a configured proportional integrator for active power regulation and the sum of the active power impact amounts corresponding to all the second microgrids, where

$$\Delta P1_{MGk} = K_{pk} \cdot \sum_{1}^{n} \Delta p_{k\_i} = K_{pk} \cdot \sum_{1}^{n}\left(\frac{P_{MGi\_sample}}{P_{MGi\_base}} - \frac{P_{MGk\_sample}}{P_{MGk\_base}}\right).$$ $P_{MGi\_sample}$ represents an active power at a point of common coupling of a second microgrid i. $P_{MGi\_base}$ represents an active power proportional parameter of the second microgrid i. $P_{MGk\_sample}$ represents the active power at the point of common coupling of the first microgrid. $P_{MGk\_base}$ represents the active power proportional parameter of the first microgrid. $K_{pk}$ represents the configured proportional integrator for active power regulation of the first microgrid.

Optionally, in a process in which the microgrid controller 201 of the first microgrid determines the first active-power-adjustment component $\Delta P1_{MGk}$ of the first microgrid, an active power control loop filter may be used, to filter out interference, and regulate a control bandwidth. The first active-power-adjustment component of the first microgrid

$$\Delta P1_{MGk} = W_{p}K_{pk} \cdot \sum_{1}^{n} \Delta p_{k\_i}.$$ $W_{p}$ represents a configured active power regulation loop filter function that is of the first microgrid and that can filter out interference, and regulate a control bandwidth. Optionally, $W_{p} = \dfrac{\omega_{ps}}{\omega_{ps}+s}$.

$\omega_{ps}$ represents a cut-off frequency of the active power control loop filter of the first microgrid.

The first microgrid performs closed-loop control on the frequency at the point of common coupling, so that zero-error regulation of the frequency at the point of common coupling of the first microgrid is implemented, and therefore the frequency at the point of common coupling of the first microgrid is equal to or close to a reference frequency of the microgrid cluster 100. The reference frequency of the microgrid cluster 100 is represented as a frequency of a voltage in the microgrid cluster 100.

The microgrid controller 201 of the first microgrid may determine a second active-power-adjustment component $\Delta P2_{MGk}$ of the first microgrid based on the frequency $f_{MGk\_sample}$ at the point of common coupling of the first microgrid and the reference frequency $F_{ref}$ of the cluster, where $\Delta P2_{MGk} = G_{fk} \cdot (F_{ref} - f_{MGk\_sample})$. $G_{fk}$ represents a proportional integrator for frequency regulation at the point of common coupling of the first microgrid.

Optionally, in a process in which the microgrid controller 201 of the first microgrid determines the second active-power-adjustment component $\Delta P2_{MGk}$ of the first microgrid, a frequency control loop filter may be used, to filter out interference, and regulate a control bandwidth. $\Delta P2_{MGk} = G_{fk} \cdot (Fref - W_{f} \cdot f_{MGk\_sample})$. $W_{f}$ represents a configured frequency loop filter function that is of the first microgrid and that can filter out interference, and regulate a control bandwidth. $F_{ref}$ represents the reference frequency of the cluster. $f_{MGk\_sample}$ represents the frequency at the point of common coupling of the first microgrid. Optionally, $W_{f} = \dfrac{\omega_{fs}}{\omega_{fs}+s}$. $\omega_{fs}$ represents a cut-off frequency of the frequency control loop filter of the first microgrid.

The microgrid controller 201 of the first microgrid may determine a sum of both the first active-power-adjustment component $\Delta P1_{MGk}$ and the second active-power-adjustment component $\Delta P2_{MGk}$ as the total active power adjustment amount of the first microgrid, where $\Delta PZ_{MGk} = \Delta P1_{MGk} + \Delta P2_{MGk}$, that is,

$$\Delta PZ_{MGk} = K_{pk} \cdot \sum_{1}^{n}\left(\frac{P_{MGi\_sample}}{P_{MGi\_base}} - \frac{P_{MGk\_sample}}{P_{MGk\_base}}\right) + G_{fk} \cdot (F_{ref} - W_{f} \cdot f_{MGk\_sample}).$$ $K_{pk}$ represents

the configured proportional integrator for active power regulation of the first microgrid. $W_{p}$ represents the configured active power regulation loop filter function of the first microgrid. $G_{fk}$ represents the configured proportional integrator for frequency regulation at the point of common coupling of the first microgrid. $W_{f}$ represents the configured frequency loop filter function of the first microgrid. $F_{ref}$ represents the reference frequency of the cluster. $P_{MGi\_sample}$ represents the active power at the point of common coupling of the second microgrid i. $P_{MGi\_base}$ represents the active power proportional parameter of the second microgrid i. $P_{MGk\_sample}$ represents the active power at the point of common coupling of the first microgrid. $P_{MGk\_base}$ represents the active power proportional parameter of the first microgrid. $f_{MGk\_sample}$ represents the frequency at the point of common coupling of the first microgrid.

It can be learned from the foregoing description that the microgrid controller 201 of the first microgrid may determine the first active-power-adjustment component of the microgrid based on the active power at the point of common coupling of the first microgrid and an active power of another communicatively-connected microgrid. The first active-power-adjustment amount may be used to adjust the active power output at the point of common coupling of the first microgrid. The controller 201 of the first microgrid may determine the second active-power-adjustment component of the microgrid based on the frequency at the point of common coupling of the microgrid and the reference frequency of the cluster. The second active-power-adjustment component may be used to adjust an output frequency at a first point of common coupling. It can be learned that in the cluster island operation mode, the first microgrid may adjust the active power at the point of common coupling of the first microgrid, and adjust the frequency of the first microgrid (that is, an operation of secondary frequency regulation). The microgrid controller 201 of the first microgrid may control the active powers output by the plurality of distributed energy resources in the first microgrid, namely, the microgrid to which the microgrid controller 201 belongs, so that the variation of the active power at the point of common coupling of the microgrid is the total active power adjustment amount.

The microgrid controller 201 of the first microgrid may obtain an active power adjustment amount of each distributed energy resource or allocate an active power adjustment amount of each distributed energy resource in the first microgrid based on the total active power adjustment amount $\Delta PZ_{MGk}$ of the first microgrid and an active power regulation proportional parameter of each distributed energy resource in the first microgrid. Usually, a ratio of an active power adjustment amount of a distributed energy resource to the total active power adjustment amount of the first microgrid is an active power regulation proportional parameter of the distributed energy resource. Optionally, active power regulation proportional parameters of all the distributed energy resources may be the same. In other words, in the first microgrid, active power adjustment amounts of distributed energy resources participating in power adjustment are evenly allocated.

The first microgrid controls the distributed energy resources in the first microgrid, so that the variation of the active power output at the point of common coupling of the first microgrid is close to or equal to the total active power adjustment amount, and the frequency at the point of common coupling of the first microgrid is adjusted to the reference frequency of the microgrid cluster 100.

In a possible design, the microgrid controller 201 of the first microgrid may obtain an optimal active power operating point, namely, an optimal active power, of each distributed energy resource. The optimal active power operating point of each distributed energy resource may be provided by an energy management system (energy management system, EMS). The microgrid controller 201 of the first microgrid may control each distributed energy resource 202 to adjust the output active power. An active power output by a distributed energy resource 202 is a sum of an optimal active power of the distributed energy resource and an active power adjustment amount of the distributed energy resource.

In some examples, the microgrid controller 201 of the first microgrid may send an active power control instruction to each distributed energy resource 202. The active power control instruction indicates a sum of the active power adjustment amount allocated to the distributed energy resource 202 and the optimal active power operating point of the distributed energy resource 202.

As shown in FIG. 4, the microgrid controller 201 may send an active power control instruction 1 to a distributed energy resource 1. The active power control instruction 1 indicates a sum of an active power adjustment amount allocated to the distributed energy resource 1 and an optimal active power operating point of the distributed energy resource 1. Likewise, the microgrid controller 201 may send an active power control instruction m to a distributed energy resource m. The active power control instruction m indicates a sum of an active power adjustment amount allocated to the distributed energy resource m and an optimal active power operating point of the distributed energy resource m.

In some application scenarios, the plurality of distributed energy resources 202 in the first microgrid may include one or more of the following: an energy storage power supply and a photovoltaic subarray. Frequency regulation powers that the energy storage power supply and the photovoltaic subarray in the first microgrid can contribute are different.

Frequency regulation of a microgrid is also implemented through active power adjustment. Therefore, the first active-power-adjustment component of the first microgrid may be understood as an active power adjustment amount required for the operation of active power adjustment, and the second active-power-adjustment component of the first microgrid may be understood as an active power adjustment amount required for an operation of frequency adjustment.

The first active-power-adjustment component $\Delta P1_{MGk}$ of the first microgrid may include a first active-power-adjustment component $\Delta P1_{MGk\_ESS}$ of the energy storage power supply and a first active-power-adjustment component $\Delta P1_{MGk\_PV}$ of the photovoltaic subarray. The second active-power-adjustment component $\Delta P2_{MGk}$ of the first microgrid may include a second active-power-adjustment component $\Delta P2_{MGk\_ESS}$ of the energy storage power supply and a second active-power-adjustment component $\Delta P2_{MGk\_PV}$ of the photovoltaic subarray. The following provides separate descriptions.

The first active-power-adjustment component $\Delta P1_{MGk\_ESS}$ of the energy storage power supply may be determined based on the active power impact amount corresponding to each second microgrid and a proportional integrator $K_{pk\_ESS}$ that is for active power regulation and that corresponds to the energy storage battery. For example, the first active-power-adjustment component of the energy storage power supply

$$\Delta P1_{MGk\_ESS} = W_p \cdot K_{pk\_ESS} \cdot \sum_1^n \Delta p_{k\_i}$$ . $K_{pk\_ESS}$ may represent the proportional integrator (namely, a PI controller) for active power regulation of the energy storage power supply of the first microgrid. $W_p$ represents the configured active power loop filter function of the first microgrid. Optionally, $K_{pk\_ESS} = K_{pPk\_ESS} + \frac{K_{iPk\_ESS}}{s}$ . $K_{pPk\_ESS}$ represents a proportional coefficient of the proportional integrator (namely, the PI controller) for active power regulation of the energy storage power supply. $K_{iPk\_ESS}$ represents an integral coefficient of the proportional integrator (namely, the PI controller) for active power regulation of the energy storage power supply.

The first active-power-adjustment component $\Delta P1_{MGk\_PV}$ of the photovoltaic subarray may be determined based on the active power impact amount corresponding to each second microgrid and a proportional integrator $K_{pk\_PV}$ that is for active power regulation and that corresponds to the photovoltaic subarray. For example, the first active-power-adjustment component of the photovoltaic subarray $$\Delta P1_{MGk\_PV} = W_p \cdot K_{pk\_PV} \cdot \sum_1^n \Delta p_{k\_i}$$ . $K_{pk\_PV}$ may represent the proportional integrator (namely, a PI controller) for active power regulation of the photovoltaic subarray of the first microgrid. $W_p$ represents the configured active power loop filter function of the first microgrid. Optionally, $$K_{pk\_PV} = K_{pPk\_PV} + \frac{K_{pIk\_PV}}{s}$$ . $K_{pPk\_PV}$ represents a proportional coefficient of the proportional integrator (namely, the PI controller) for active power regulation of the photovoltaic subarray. $K_{pIk\_PV}$ represents an integral coefficient of the proportional integrator (namely, the PI controller) for active power regulation of the photovoltaic subarray.

The second active-power-adjustment component $\Delta P2_{MGk\_ESS}$ of the energy storage power supply may be determined based on the frequency $f_{MGk\_sample}$ at the point of common coupling of the first microgrid, the reference frequency $F_{ref}$ of the cluster, and a frequency regulation integrator $G_{fk\_ESS}$ corresponding to the energy storage battery. For example, the second active-power-adjustment component of the energy storage power supply $\Delta P2_{MGk\_ESS} = G_{fk\_ESS} \cdot (F_{ref} - W_f \cdot f_{MGk\_sample})$. $G_{fk\_ESS}$ may represent a proportional integrator (namely, a PI controller) for frequency regulation of the energy storage power supply. Optionally, $$G_{fk\_ESS} = K_{fPk\_PV} + \frac{K_{fIk\_PV}}{s}$$ . $K_{fPk\_ESS}$ represents a proportional coefficient of the proportional integrator (namely, the PI controller) for frequency regulation of the energy storage power supply. $K_{fIk\_ESS}$ represents an integral coefficient of the proportional integrator (namely, the PI controller) for frequency regulation of the energy storage power supply.

The second active-power-adjustment component $\Delta P2_{MGk\_PV}$ of the photovoltaic subarray may be determined based on the frequency $f_{MGk\_sample}$ at the point of common coupling of the first microgrid, the reference frequency $F_{ref}$ of the cluster, and a frequency regulation integrator $G_{fk\_PV}$ corresponding to the photovoltaic subarray. For example, the second active-power-adjustment component of the photovoltaic subarray $\Delta P2_{MGk\_PV} = G_{fk\_PV} \cdot (F_{ref} - W_f \cdot f_{MGk\_sample})$. $G_{fk\_PV}$ may represent a proportional integrator (namely, a PI controller) for frequency regulation of the photovoltaic subarray. Optionally, $$G_{fk\_PV} = K_{fPk\_PV} + \frac{K_{fIk\_PV}}{s}$$ . $K_{fPk\_PV}$ represents a proportional coefficient of the proportional integrator (namely, the PI controller) for frequency regulation of the photovoltaic subarray. $K_{fIk\_ESS}$ represents an integral coefficient of the proportional integrator (namely, the PI controller) for frequency regulation of the photovoltaic subarray.

Frequency regulation powers that the energy storage power supply and the photovoltaic subarray in the first microgrid can contribute are different, and voltage regulation powers that the energy storage power supply and the photovoltaic subarray in the first microgrid can contribute are different. Therefore, the total active power adjustment amount of the first microgrid may include a total active power adjustment amount $\Delta PZ_{MGk\_ESS}$ of all energy storage power supplies in the first microgrid and a total active power adjustment amount $\Delta PZ_{MGk\_PV}$ of all photovoltaic subarrays in the first microgrid. A sum of both the first active-power-adjustment component $\Delta P1_{MGk\_ESS}$ of the energy storage power supply and the second active-power-adjustment component $\Delta P2_{MGk\_ESS}$ of the energy storage power supply may be used as the total active power adjustment amount $\Delta PZ_{MGk\_ESS}$ of all the energy storage power supplies in the first microgrid. A sum of both the first active-power-adjustment component $\Delta P1_{MGk\_PV}$ of the photovoltaic subarray and the second active-power-adjustment component $\Delta P2_{MGk\_PV}$ of the photovoltaic subarray may be used as the total active power adjustment amount $\Delta PZ_{MGk\_PV}$ of all the photovoltaic subarrays in the first microgrid.

**In** a possible case, the plurality of distributed energy resources 202 in the first microgrid are all energy storage power supplies. In other words, each distributed energy resource 202 is an energy storage power supply. In this case, the first active-power-adjustment component $\Delta P1_{MGk\_PV}$ of the photovoltaic subarray in the first active-power-adjustment component $\Delta P1_{MGk}$ of the first microgrid may be considered as zero, and the second active-power-adjustment component $\Delta P2_{MGk\_PV}$ of the photovoltaic subarray in the second active-power-adjustment component $\Delta P2_{MGk}$ of the first microgrid may be considered as zero.

The microgrid controller 201 of the first microgrid may allocate an active power adjustment amount of each energy storage power supply in the first microgrid based on the total active power adjustment amount $\Delta PZ_{MGk\_ESS}$ of all the energy storage power supplies. A ratio of an active power adjustment amount of an energy storage power supply to the total active power adjustment amount $\Delta PZ_{MGk\_ESS}$ of all the energy storage power supplies is a regulation proportion of the energy storage power supply. Optionally, active power adjustment amounts of all the energy storage power supplies may be the same. The microgrid controller 201 of the first microgrid may send the allocated active power adjustment amount to each energy storage power supply, so that each energy storage power supply adjusts an output active power.

**In** another possible case, the plurality of distributed energy resources 202 in the first microgrid are all photovoltaic subarrays. In other words, each distributed energy resource 202 is a photovoltaic subarray. In this case, the first active-power-adjustment component of the energy storage power supply in the first active-power-adjustment component $\Delta P1_{MGk}$ of the first microgrid may be considered as zero, and the second active-power-adjustment component $\Delta P2_{MGk\_ESS}$ of the energy storage power supply in the second active-power-adjustment component $\Delta P2_{MGk}$ of the first microgrid may be considered as zero.

The microgrid controller 201 of the first microgrid may allocate an active power adjustment amount of each photovoltaic subarray in the first microgrid based on the total active power adjustment amount $\Delta PZ_{MGk\_PV}$ of the photovoltaic subarrays. A ratio of an active power adjustment amount of a photovoltaic subarray to the total active power adjustment amount $\Delta PZ_{MGk\_PV}$ of the photovoltaic subarrays is a regulation proportion of the photovoltaic subarray. Optionally, active power adjustment amounts of all the photovoltaic subarrays may be the same. The microgrid controller 201 of the first microgrid may send the allocated active power adjustment amount to each photovoltaic subarray, so that each photovoltaic subarray adjusts an output active power.

In still another possible case, the plurality of distributed energy resources 202 in the first microgrid may include an energy storage power supply and a photovoltaic subarray. The microgrid controller 201 of the first microgrid may allocate an active power adjustment amount of each energy storage power supply in the first microgrid based on the total active power adjustment amount $\Delta PZ_{MGk\_ESS}$ of all the energy storage power supplies. A ratio of an active power adjustment amount of an energy storage power supply to the total active power adjustment amount $\Delta PZ_{MGk\_ESS}$ of all the energy storage power supplies is a regulation proportion of the energy storage power supply. Optionally, active power adjustment amounts of all the energy storage power supplies may be the same. The microgrid controller 201 of the first microgrid may send the allocated active power adjustment amount to each energy storage power supply, so that each energy storage power supply adjusts an output active power. The microgrid controller 201 of the first microgrid may allocate an active power adjustment amount of each photovoltaic subarray in the first microgrid based on the total active power adjustment amount $\Delta PZ_{MGk\_PV}$ of the photovoltaic subarrays. A ratio of an active power adjustment amount of a photovoltaic subarray to the total active power adjustment amount $\Delta PZ_{MGk\_PV}$ of the photovoltaic subarrays is a regulation proportion of the photovoltaic subarray. Optionally, active power adjustment amounts of all the photovoltaic subarrays may be the same. The microgrid controller 201 of the first microgrid may send the allocated active power adjustment amount to each photovoltaic subarray, so that each photovoltaic subarray adjusts an output active power.

The microgrid controller 201 of the first microgrid may send the allocated active power adjustment amount to each energy storage power supply, so that each energy storage power supply adjusts an output active power and the frequency at the point of common coupling is adjusted. As a result, active power regulation of the energy storage power supply and secondary frequency regulation of the energy storage power supply are implemented. The microgrid controller 201 of the first microgrid may send the allocated active power adjustment amount to each photovoltaic subarray, so that each photovoltaic subarray adjusts an output active power and the frequency at the point of common coupling is adjusted. As a result, active power regulation of the photovoltaic subarray and secondary frequency regulation of the photovoltaic subarray are implemented.

In a possible design, the microgrid controller 201 of the first microgrid may obtain an optimal active power operating point, namely, an optimal active power, of each distributed energy resource. The optimal active power operating point of each distributed energy resource may be provided by an energy management system (EMS). The microgrid controller 201 of the first microgrid may send an active power control instruction to each distributed energy resource 202. The active power control instruction indicates a sum of the active power adjustment amount allocated to the distributed energy resource 202 and the optimal active power operating point of the distributed energy resource 202.

For example, the microgrid controller 201 of the first microgrid may obtain an optimal active power operating point, namely, an optimal active power, of each energy storage power supply. The microgrid controller 201 of the first microgrid may send an active power control instruction to an energy storage power supply. The active power control instruction for the energy storage power supply indicates a sum of an active power adjustment amount allocated to the energy storage power supply and an optimal active power operating point of the energy storage power supply.

For another example, the microgrid controller 201 of the first microgrid may obtain an optimal active power operating point of each photovoltaic subarray. The microgrid controller 201 of the first microgrid may send an active power control instruction to a photovoltaic subarray. The active power control instruction for the photovoltaic subarray indicates a sum of an active power adjustment amount allocated to the photovoltaic subarray and an optimal active power operating point of the photovoltaic subarray.

The following describes reactive power regulation of the first microgrid in the cluster island operation mode.

In a possible scenario, the output power information of each microgrid may include a reactive power at the point of common coupling of the microgrid. The reactive power at the corresponding point of common coupling of the first microgrid is denoted as a first reactive power $Q_{MGk\_sample}$, where k represents the identifier of the first microgrid. The output power information of the second microgrid includes a reactive power at the corresponding point of common coupling of the second microgrid. The reactive power at the corresponding point of common coupling of the second microgrid is denoted as a second reactive power $Q_{MGj\_sample}$, where j represents the identifier of the second microgrid, and j is not equal to k.

The microgrid controller 201 of the first microgrid may store or obtain a reactive power proportional parameter of the first microgrid and a reactive power proportional parameter of each second microgrid in advance. The reactive power proportional parameter of the first microgrid is denoted as $Q_{MGk\_base}$. The reactive power proportional parameter of the second microgrid is denoted as $Q_{MGj\_base}$.

In the cluster island operation mode, the first microgrid may adjust the reactive power at the point of common coupling of the first microgrid. The microgrid controller 201 of the first microgrid may be based on a reference voltage $V_{MGk\_ref}$ of the first microgrid and a voltage $V_{MGk\_sample}$ at the point of common coupling of the first microgrid.

The plurality of microgrids in the microgrid cluster 100 may include two types of microgrids. One type of microgrid is a critical voltage node. The other type of microgrid is a non-critical voltage node. The critical voltage node may be a microgrid that controls a voltage at a point of common coupling of the microgrid to be stable at a rated voltage of the cluster. Generally, there is one critical voltage node in the microgrid cluster 100. The critical voltage node adjusts a reactive power, to control a voltage at a point of common coupling of the critical voltage node to be stable at the rated voltage of the cluster. The non-critical voltage node may be a microgrid that participates in adjusting reactive power distribution of the microgrid cluster. The non-critical voltage node adjusts an output reactive power, to participate in adjusting reactive power distribution of the microgrid cluster.

In a possible implementation, the first microgrid is a non-critical voltage node in the microgrid cluster 100. In this case, the microgrid controller 201 of the first microgrid may determine the reference voltage $V_{MGK\_ref}$ of the first microgrid based on the reactive power $Q_{MGk\_sample}$ output at the point of common coupling of the first microgrid, a reactive power $Q_{MGj\_sample}$ output at the point of common coupling of each second microgrid, and a reference voltage $V_{ref}$ of the cluster.

For example, based on a reactive power proportional parameter $Q_{MGj\_base}$ of any one second microgrid, a reactive power $Q_{MGj\_sample}$ output at a point of common coupling of the second microgrid, the reactive power proportional parameter $Q_{MGk\_base}$ of the first microgrid, and the reactive power $Q_{MGk\_sample}$ output at the point of common coupling of the first microgrid, the first microgrid may determine a reactive power impact amount $\Delta q_{k\_j}$ corresponding to the second microgrid, where $\Delta q_{k\_j} = \dfrac{Q_{MGj\_sample}}{Q_{MGj\_base}} - \dfrac{Q_{MGk\_sample}}{Q_{MGk\_base}}$. The reactive power impact amount corresponding to the second microgrid may represent a reactive power adjustment amount determined by the first microgrid based on the reactive power of the second microgrid.

The microgrid controller 201 of the first microgrid may determine a sum of reactive power impact amounts corresponding to all the second microgrids as a first reactive-power-adjustment amount $\Delta Q1_{MGk}$ of the first microgrid. With reference to FIG. 3, other microgrids communicatively connected to the first microgrid are a second microgrid 1, a second microgrid 2, ..., and a second microgrid n. There are n other microgrids communicatively connected to the first microgrid, where n is a positive integer.

A reactive power impact amount corresponding to the second microgrid 1 is denoted as $\Delta q_{k\_1}$, a reactive power impact amount corresponding to the second microgrid 2 is denoted as $\Delta q_{k\_2}$, and a reactive power impact amount corresponding to the second microgrid n is denoted as $\Delta q_{k\_n}$. The first reactive-power-adjustment amount of the first microgrid is a sum of reactive power impact amounts corresponding to all of the second microgrid 1, the second microgrid 2, ..., and the second microgrid n, namely, $\sum_{1}^{n}(\dfrac{Q_{MGi\_sample}}{Q_{MGi\_base}} - \dfrac{Q_{MGk\_sample}}{Q_{MGk\_base}})$. The microgrid controller 201 of the first microgrid may determine a total reactive power adjustment amount $\Delta Q1_{MGk}$ of the first microgrid based on a proportional integrator for reactive power regulation of the first microgrid and the sum of the reactive power impact amounts corresponding to all the second microgrids, where

$$\Delta Q1_{MGk} = K_{qk} \cdot \sum_{1}^{n} \Delta q_{k\_i} = K_{qk} \cdot \sum_{1}^{n}(\frac{Q_{MGi\_sample}}{Q_{MGi\_base}} - \frac{Q_{MGk\_sample}}{Q_{MGk\_base}})$$

. $Q_{MGi\_sample}$ represents a reactive power at a point of common coupling of a second microgrid i. $Q_{MGi\_base}$ represents a reactive power proportional parameter of the second microgrid i. $Q_{MGk\_sample}$ represents the reactive power at the point of common coupling of the first microgrid. $Q_{MGk\_base}$ represents the reactive power proportional parameter of the first microgrid. $K_{qk}$ represents the configured proportional integrator for reactive power regulation of the first microgrid.

Optionally, in a process in which the microgrid controller 201 of the first microgrid determines the first reactive-power-adjustment amount $\Delta Q1_{MGk}$ of the first microgrid, a reactive power control loop filter may be used, to filter out interference, and regulate a control bandwidth. The first reactive-power-adjustment amount of the first microgrid

$$\Delta Q1_{MGk} = W_q K_{qk} \cdot \sum_1^n \Delta q_{k\_i}$$ . $W_q$ represents a configured reactive power regulation loop filter function that is of the first microgrid and that can filter out interference, and regulate a control bandwidth. Optionally, $W_q = \frac{\omega_{qs}}{\omega_{qs}+s} \cdot \omega_{qs}$

represents a cut-off frequency of the reactive power control loop filter of the first microgrid.

The microgrid controller 201 of the first microgrid may obtain the reference voltage $V_{MGK\_ref}$ of the first microgrid through calculation based on the reference voltage $V_{ref}$ of the cluster and the first reactive-power-adjustment amount

$\Delta Q1_{MGk}$ of the first microgrid, where $$V_{MGK\_ref} = V_{ref} + \Delta Q1_{MGk} = V_{ref} + W_q K_{qk} \cdot \sum_1^n \Delta q_{k\_i}$$ .

The microgrid controller 201 of the first microgrid may determine the total reactive power adjustment amount $\Delta QZ_{MGk}$ of the first microgrid based on the reference voltage $V_{MGk\_ref}$ of the first microgrid and the voltage $V_{MGk\_sample}$ at the point of common coupling of the first microgrid, where $\Delta QZ_{MGk} = K_{vk}(V_{MGk\_ref} - W_v \cdot V_{MGk\_sample})$. $K_{vk}$ represents a configured proportional integrator for voltage regulation of the first microgrid. $W_v$ represents a configured voltage control loop filter function of the first microgrid. Optionally, $W_v = \frac{\omega_{vs}}{\omega_{vs}+s} \cdot \omega_{vs}$ represents a cut-off frequency of a voltage control loop filter of the first microgrid.

The microgrid controller 201 of the first microgrid may allocate a reactive power adjustment amount of each distributed energy resource in the first microgrid based on the total reactive power adjustment amount $\Delta QZ_{MGk}$ of the first microgrid and a regulation proportion of each distributed energy resource in the first microgrid. A ratio of a reactive power adjustment amount of a distributed energy resource to the total reactive power adjustment amount of the first microgrid is a reactive power regulation proportional parameter of the distributed energy resource. Optionally, reactive power regulation proportional parameters of all the distributed energy resources may be the same. In other words, in the first microgrid, reactive power adjustment amounts of distributed energy resources participating in power adjustment are evenly allocated.

The first microgrid controls the distributed energy resources in the first microgrid, so that a difference between the reactive power output at the point of common coupling of the first microgrid and the total reactive power adjustment amount $\Delta QZ_{MGk}$ is less than a difference threshold. In other words, the first microgrid controls the distributed energy resources in the first microgrid, so that a variation of the reactive power output at the point of common coupling of the first microgrid is close to or equal to the total reactive power adjustment amount.

In some scenarios, the plurality of distributed energy resources 202 in the first microgrid may include one or more of the following: an energy storage power supply and a photovoltaic subarray. Voltage regulation powers that the energy storage power supply and the photovoltaic subarray in the first microgrid can contribute are different. Therefore, the total reactive power adjustment amount $\Delta QZ_{MGk}$ of the first microgrid may include a total reactive power adjustment amount $\Delta QZ_{MGk\_ESS}$ of the energy storage power supply and a total reactive power adjustment amount $\Delta QZ_{MGk\_QV}$ of the photovoltaic subarray.

The total reactive power adjustment amount $\Delta QZ_{MGk\_ESS}$ of the energy storage power supply may be determined based on a reactive power impact amount corresponding to each second microgrid and a proportional integrator $K_{vk\_ESS}$ that is for voltage regulation and that corresponds to the energy storage battery. For example, the total reactive power adjustment amount of the energy storage power supply $\Delta QZ_{MGk\_ESS} = K_{vk\_ESS} \cdot (V_{MGK\_ref} - W_v \cdot V_{MGk\_sample})$. $K_{vk\_ESS}$ may represent a proportional integrator (namely, a PI controller) for reactive power regulation of the energy storage power supply of the first microgrid. Optionally, $$K_{vk\_ESS} = K_{pQk\_ESS} + \frac{K_{iQk\_ESS}}{s}$$ . $K_{pQk\_ESS}$

represents a proportional coefficient of the proportional integrator (namely, the QI controller) for reactive power regulation of the energy storage power supply. $K_{iQk\_ESS}$ represents an integral coefficient of the proportional integrator (namely, the QI controller) for reactive power regulation of the energy storage power supply.

The total reactive power adjustment amount $\Delta QZ_{MGk\_PV}$ of the photovoltaic subarray may be determined based on the reactive power impact amount corresponding to each second microgrid and a proportional integrator $K_{vk\_PV}$ that is for voltage regulation and that corresponds to the photovoltaic subarray. For example, the total reactive power adjustment amount of the photovoltaic subarray $\Delta QZ_{MGk\_PV} = K_{vk\_PV} \cdot (V_{MGK\_ref} - W_v \cdot V_{MGk\_sample})$. $K_{vk\_PV}$ may represent a proportional integrator (namely, a PI controller) for reactive power regulation of the photovoltaic subarray of the first microgrid. Optionally, $$K_{vk\_PV} = K_{pQk\_PV} + \frac{K_{iQkPV}}{s}$$ . $K_{pQk\_PV}$ represents a proportional coefficient of the proportional integrator (namely, the PI controller) for reactive power regulation of the photovoltaic subarray. $K_{iQk\_PV}$ represents an integral coefficient of the proportional integrator (namely, the PI controller) for reactive power regulation of the photovoltaic subarray.

In a possible case, the plurality of distributed energy resources 202 in the first microgrid are all energy storage power supplies. In other words, each distributed energy resource 202 is an energy storage power supply. In this case, the total reactive power adjustment amount $\Delta QZ_{MGk\_PV}$ of the photovoltaic subarray in the total reactive power adjustment amount $\Delta QZ_{MGk}$ of the first microgrid may be considered as zero.

The microgrid controller 201 of the first microgrid may allocate a reactive power adjustment amount of each energy storage power supply in the first microgrid based on a total reactive power adjustment amount $\Delta QZ_{MGk\_ESS}$ of all energy storage power supplies and a reactive power regulation proportional parameter of each energy storage power supply. A ratio of a reactive power adjustment amount of an energy storage power supply to the total reactive power adjustment amount $\Delta QZ_{MGk\_ESS}$ of all the energy storage power supplies is a reactive power regulation proportional parameter of the energy storage power supply. Optionally, reactive power regulation proportional parameters of all the energy storage power supplies may be the same. The microgrid controller 201 of the first microgrid may send the allocated reactive power adjustment amount to each energy storage power supply, so that each energy storage power supply adjusts an output reactive power.

In another possible case, the plurality of distributed energy resources 202 in the first microgrid are all photovoltaic subarrays. In other words, each distributed energy resource 202 is a photovoltaic subarray. In this case, the total reactive power adjustment amount $\Delta QZ_{MGk\_ESS}$ of the energy storage power supply in the total reactive power adjustment amount $\Delta QZ_{MGk}$ of the first microgrid may be considered as zero.

The microgrid controller 201 of the first microgrid may allocate a reactive power adjustment amount of each photovoltaic subarray in the first microgrid based on the total reactive power adjustment amount $\Delta QZ_{MGk\_Pv}$ of the photovoltaic subarray and a reactive power regulation proportional parameter of each photovoltaic subarray. A ratio of a reactive power adjustment amount of a photovoltaic subarray to the total reactive power adjustment amount $\Delta QZ_{MGk\_Pv}$ of the photovoltaic subarray is a reactive power regulation proportional parameter of the photovoltaic subarray. Optionally, reactive power regulation proportional parameters of all the photovoltaic subarrays may be the same. The microgrid controller 201 of the first microgrid may send the allocated reactive power adjustment amount to each photovoltaic subarray, so that each photovoltaic subarray adjusts an output reactive power.

In still another possible case, the plurality of distributed energy resources 202 in the first microgrid may include an energy storage power supply and a photovoltaic subarray. The microgrid controller 201 of the first microgrid may allocate a reactive power adjustment amount of each energy storage power supply in the first microgrid based on a total reactive power adjustment amount $\Delta QZ_{MGk\_ESS}$ of all energy storage power supplies and a reactive power regulation proportional parameter of each energy storage power supply. A ratio of a reactive power adjustment amount of an energy storage power supply to the total reactive power adjustment amount $\Delta QZ_{MGk\_ESS}$ of all the energy storage power supplies is a reactive power regulation proportional parameter of the energy storage power supply. Optionally, reactive power regulation proportional parameters of all the energy storage power supplies may be the same. The microgrid controller 201 of the first microgrid may send the allocated reactive power adjustment amount to each energy storage power supply, so that each energy storage power supply adjusts an output reactive power.

The microgrid controller 201 of the first microgrid may allocate a reactive power adjustment amount of each photovoltaic subarray in the first microgrid based on the total reactive power adjustment amount $\Delta QZ_{MGk\_Pv}$ of the photovoltaic subarray and a reactive power regulation proportional parameter of each photovoltaic subarray. A ratio of a reactive power adjustment amount of a photovoltaic subarray to the total reactive power adjustment amount $\Delta QZ_{MGk\_Pv}$ of the photovoltaic subarray is a reactive power regulation proportional parameter of the photovoltaic subarray. Optionally, reactive power regulation proportional parameters of all the photovoltaic subarrays may be the same. The microgrid controller 201 of the first microgrid may send the allocated reactive power adjustment amount to each photovoltaic subarray, so that each photovoltaic subarray adjusts an output reactive power.

The microgrid controller 201 of the first microgrid may send the allocated reactive power adjustment amount to each energy storage power supply, so that each energy storage power supply adjusts the output reactive power and the frequency at the point of common coupling is adjusted. As a result, reactive power regulation of the energy storage power supply is implemented. The microgrid controller 201 of the first microgrid may send the allocated reactive power adjustment amount to each photovoltaic subarray, so that each photovoltaic subarray adjusts the output reactive power.

In a possible design, the microgrid controller 201 of the first microgrid may obtain an optimal reactive power operating point of each distributed energy resource. The optimal reactive power operating point of each distributed energy resource may be provided by the energy management system (EMS). The microgrid controller 201 of the first microgrid may send a reactive power control instruction to each distributed energy resource 202. The reactive power control instruction indicates a sum of the reactive power adjustment amount allocated to the distributed energy resource 202 and the optimal reactive power operating point of the distributed energy resource 202.

For example, the microgrid controller 201 of the first microgrid may obtain an optimal reactive power operating point of each energy storage power supply. The microgrid controller 201 of the first microgrid may send a reactive power control instruction to an energy storage power supply. The reactive power control instruction for the energy storage power supply indicates a sum of a reactive power adjustment amount allocated to the energy storage power supply and an optimal reactive power operating point of the energy storage power supply.

For another example, the microgrid controller 201 of the first microgrid may obtain an optimal reactive power operating point of each photovoltaic subarray. The microgrid controller 201 of the first microgrid may send a reactive power control instruction to a photovoltaic subarray. The reactive power control instruction for the photovoltaic subarray indicates a sum of a reactive power adjustment amount allocated to the photovoltaic subarray and an optimal reactive power operating point of the photovoltaic subarray.

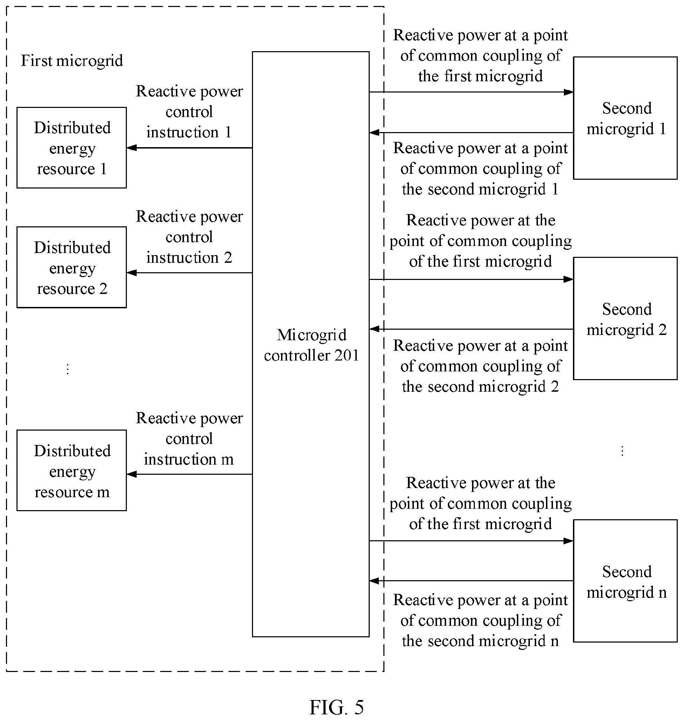

As shown in FIG. 5, the first microgrid may include the microgrid controller 201 and m distributed energy resources. The microgrid controller 201 may receive a reactive power of each second microgrid, and send a reactive power of the first microgrid to each second microgrid. The microgrid controller 201 may calculate the total reactive power adjustment amount of the first microgrid based on the reactive power of each second microgrid.

The microgrid controller 201 may send a reactive power control instruction 1 to a distributed energy resource 1. The reactive power control instruction 1 indicates a sum of a reactive power adjustment amount allocated to the distributed energy resource 1 and an optimal reactive power operating point of the distributed energy resource 1. Likewise, the microgrid controller 201 may send a reactive power control instruction m to a distributed energy resource m. The reactive power control instruction m indicates a sum of a reactive power adjustment amount allocated to the distributed energy resource m and an optimal reactive power operating point of the distributed energy resource m.

For example, the microgrid controller 201 of the first microgrid may obtain an optimal reactive power operating point of each energy storage power supply. The microgrid controller 201 of the first microgrid may send a reactive power control instruction to an energy storage power supply. The reactive power control instruction for the energy storage power supply indicates a sum of a reactive power adjustment amount allocated to the energy storage power supply and an optimal reactive power operating point of the energy storage power supply. As a result, the microgrid controller 201 of the first microgrid controls the energy storage power supply to adjust an output reactive power.

For another example, the microgrid controller 201 of the first microgrid may obtain an optimal reactive power operating point of each photovoltaic subarray. The microgrid controller 201 of the first microgrid may send a reactive power control instruction to a photovoltaic subarray. The reactive power control instruction for the photovoltaic subarray indicates a sum of a reactive power adjustment amount allocated to the photovoltaic subarray and an optimal reactive power operating point of the photovoltaic subarray. As a result, the microgrid controller 201 of the first microgrid controls the photovoltaic subarray to adjust an output reactive power.

In another possible implementation, the first microgrid is a critical voltage node in the microgrid cluster 100. In other words, the voltage at the point of common coupling of the first microgrid needs to keep stable, and the voltage at the point of common coupling is equal to or close to a reference voltage $V_{ref}$ of the cluster. In this case, that the first microgrid adjusts the output voltage at the point of common coupling may be implemented by adjusting a reactive power output by the first microgrid. The microgrid controller 201 of the first microgrid may determine a total reactive power adjustment amount $\Delta QZ_{MGk}$ of the first microgrid based on the voltage $V_{MGk\_sample}$ at the point of common coupling of the first microgrid and the reference voltage $V_{ref}$ of the cluster, where $\Delta QZ_{MGk} = K_{vk} \cdot (V_{ref} - W_v \cdot V_{MGk\_sample})$. $K_{vk}$ represents a configured proportional integrator for voltage regulation of the first microgrid. $W_v$ represents a configured voltage control loop filter function of the first microgrid. Optionally, $W_v = \frac{\omega_{vs}}{\omega_{vs}+s}$. $\omega_{vs}$ represents a cut-off frequency of a voltage control loop filter of the first microgrid.

The microgrid controller 201 of the first microgrid may allocate a reactive power adjustment amount of each distributed energy resource in the first microgrid based on the total reactive power adjustment amount $\Delta QZ_{MGk}$ of the first microgrid and a regulation proportion of each distributed energy resource in the first microgrid. A ratio of a reactive power adjustment amount of a distributed energy resource to the total reactive power adjustment amount of the first microgrid is a reactive power regulation proportional parameter of the distributed energy resource. Optionally, reactive power regulation proportional parameters of all the distributed energy resources may be the same. In other words, in the first microgrid, reactive power adjustment amounts of distributed energy resources participating in power adjustment are evenly allocated.

The first microgrid controls the distributed energy resources in the first microgrid, so that a difference between the reactive power output at the point of common coupling of the first microgrid and the total reactive power adjustment amount $\Delta QZ_{MGk}$ is less than a difference threshold. In other words, the first microgrid controls the distributed energy resources in the first microgrid, so that a variation of the reactive power output at the point of common coupling of the first microgrid is close to or equal to the total reactive power adjustment amount.

In some scenarios, the plurality of distributed energy resources 202 in the first microgrid may include one or more of the following: an energy storage power supply and a photovoltaic subarray. Voltage regulation powers that the energy storage power supply and the photovoltaic subarray in the first microgrid can contribute are different. Therefore, the total reactive power adjustment amount $\Delta QZ_{MGk}$ of the first microgrid may include a total reactive power adjustment amount $\Delta QZ_{MGk\_ESS}$ of the energy storage power supply and a total reactive power adjustment amount $\Delta QZ_{MGk\_QV}$ of the photovoltaic subarray.

The total reactive power adjustment amount $\Delta QZ_{MGk\_ESS}$ of the energy storage power supply may be determined based on a reactive power impact amount corresponding to each second microgrid and a proportional integrator $K_{vk\_ESS}$ that is for voltage regulation and that corresponds to the energy storage battery. For example, the total reactive power adjustment amount of the energy storage power supply $\Delta QZ_{MGk\_ESS} = K_{vk\_ESS} \cdot (V_{ref} - W_v \cdot V_{MGk\_sample})$. $K_{vk\_ESS}$ may represent a proportional integrator (namely, a PI controller) for reactive power regulation of the energy storage power supply of the first microgrid. Optionally, $K_{vk\_ESS} = K_{pQk\_ESS} + \dfrac{K_{iQk\_ESS}}{s}$. $K_{pQk\_ESS}$ represents a proportional coefficient of the proportional integrator (namely, the QI controller) for reactive power regulation of the energy storage power supply. $K_{iQk\_ESS}$ represents an integral coefficient of the proportional integrator (namely, the QI controller) for reactive power regulation of the energy storage power supply.

The total reactive power adjustment amount $\Delta QZ_{MGk\_Pv}$ of the photovoltaic subarray may be determined based on the reactive power impact amount corresponding to each second microgrid and a proportional integrator $K_{vk\_PV}$ that is for voltage regulation and that corresponds to the photovoltaic subarray. For example, the total reactive power adjustment amount of the photovoltaic subarray $\Delta QZ_{MGk\_Pv} = K_{vk\_PV} \cdot (V_{ref} - W_v \cdot V_{MGk\_sample})$. $K_{vk\_PV}$ may represent a proportional integrator (namely, a PI controller) for reactive power regulation of the photovoltaic subarray of the first microgrid. Optionally, $K_{vk\_PV} = K_{pQk\_PV} + \dfrac{K_{iQkPV}}{s}$. $K_{pQk\_PV}$ represents a proportional coefficient of the proportional integrator (namely, the PI controller) for reactive power regulation of the photovoltaic subarray. $K_{iQk\_PV}$ represents an integral coefficient of the proportional integrator (namely, the PI controller) for reactive power regulation of the photovoltaic subarray.

In a possible case, the plurality of distributed energy resources 202 in the first microgrid are all energy storage power supplies. In other words, each distributed energy resource 202 is an energy storage power supply. In this case, the total reactive power adjustment amount $\Delta QZ_{MGk\_PV}$ of the photovoltaic subarray in the total reactive power adjustment amount $\Delta QZ_{MGk}$ of the first microgrid may be considered as zero.

The microgrid controller 201 of the first microgrid may allocate a reactive power adjustment amount of each energy storage power supply in the first microgrid based on a total reactive power adjustment amount $\Delta QZ_{MGk\_ESS}$ of all energy storage power supplies and a reactive power regulation proportional parameter of each energy storage power supply. A ratio of a reactive power adjustment amount of an energy storage power supply to the total reactive power adjustment amount $\Delta QZ_{MGk\_ESS}$ of all the energy storage power supplies is a reactive power regulation proportional parameter of the energy storage power supply. Optionally, reactive power regulation proportional parameters of all the energy storage power supplies may be the same. The microgrid controller 201 of the first microgrid may send the allocated reactive power adjustment amount to each energy storage power supply, so that each energy storage power supply adjusts an output reactive power.

In another possible case, the plurality of distributed energy resources 202 in the first microgrid are all photovoltaic subarrays. In other words, each distributed energy resource 202 is a photovoltaic subarray. In this case, the total reactive power adjustment amount $\Delta QZ_{MGk\_ESS}$ of the energy storage power supply in the total reactive power adjustment amount $\Delta QZ_{MGk}$ of the first microgrid may be considered as zero.

The microgrid controller 201 of the first microgrid may allocate a reactive power adjustment amount of each photovoltaic subarray in the first microgrid based on the total reactive power adjustment amount $\Delta QZ_{MGk\_Pv}$ of the photovoltaic subarray and a reactive power regulation proportional parameter of each photovoltaic subarray. A ratio of a reactive power adjustment amount of a photovoltaic subarray to the total reactive power adjustment amount $\Delta QZ_{MGk\_Pv}$ of the photovoltaic subarray is a reactive power regulation proportional parameter of the photovoltaic subarray. Optionally, reactive power regulation proportional parameters of all the photovoltaic subarrays may be the same. The microgrid controller 201 of the first microgrid may send the allocated reactive power adjustment amount to each photovoltaic subarray, so that each photovoltaic subarray adjusts an output reactive power.

In still another possible case, the plurality of distributed energy resources 202 in the first microgrid may include an energy storage power supply and a photovoltaic subarray. The microgrid controller 201 of the first microgrid may allocate a reactive power adjustment amount of each energy storage power supply in the first microgrid based on a total reactive power adjustment amount $\Delta QZ_{MGk\_ESS}$ of all energy storage power supplies and a reactive power regulation proportional parameter of each energy storage power supply. A ratio of a reactive power adjustment amount of an energy storage power supply to the total reactive power adjustment amount $\Delta QZ_{MGk\_ESS}$ of all the energy storage power supplies is a reactive power regulation proportional parameter of the energy storage power supply. Optionally, reactive power regulation proportional parameters of all the energy storage power supplies may be the same. The microgrid controller 201 of the first microgrid may send the allocated reactive power adjustment amount to each energy storage power supply, so that each energy storage power supply adjusts an output reactive power.

The microgrid controller 201 of the first microgrid may allocate a reactive power adjustment amount of each photovoltaic subarray in the first microgrid based on the total reactive power adjustment amount $\Delta QZ_{MGk\_Pv}$ of the photovoltaic subarray and a reactive power regulation proportional parameter of each photovoltaic subarray. A ratio of a reactive power adjustment amount of a photovoltaic subarray to the total reactive power adjustment amount $\Delta QZ_{MGk\_Pv}$ of the photovoltaic subarray is a reactive power regulation proportional parameter of the photovoltaic subarray. Optionally, reactive power regulation proportional parameters of all the photovoltaic subarrays may be the same. The microgrid controller 201 of the first microgrid may send the allocated reactive power adjustment amount to each photovoltaic subarray, so that each photovoltaic subarray adjusts an output reactive power.

The microgrid controller 201 of the first microgrid may send the allocated reactive power adjustment amount to each energy storage power supply, so that each energy storage power supply adjusts the output reactive power and the frequency at the point of common coupling is adjusted. As a result, reactive power regulation of the energy storage power supply is implemented. The microgrid controller 201 of the first microgrid may send the allocated reactive power adjustment amount to each photovoltaic subarray, so that each photovoltaic subarray adjusts the output reactive power.

In a possible design, the microgrid controller 201 of the first microgrid may obtain an optimal reactive power operating point, namely, an optimal reactive power, of each distributed energy resource. The optimal reactive power operating point of each distributed energy resource may be provided by the energy management system (EMS). The microgrid controller 201 of the first microgrid may control each distributed energy resource 202 to adjust an output reactive power, so that the reactive power output by the distributed energy resource 202 is a sum of the optimal reactive power of the distributed energy resource 202 and the reactive power adjustment amount of the distributed energy resource 202. In some examples, the microgrid controller 201 of the first microgrid may send a reactive power control instruction to each distributed energy resource 202, so that the distributed energy resource 202 adjusts the reactive power output by the distributed energy resource 202 to a reactive power indicated by the received reactive power control instruction. The reactive power control instruction indicates a sum of the reactive power adjustment amount allocated to the distributed energy resource 202 and the optimal reactive power operating point of the distributed energy resource 202.

For example, the microgrid controller 201 of the first microgrid may control each energy storage power supply to adjust an output reactive power, so that the reactive power output by the energy storage power supply is a sum of an optimal reactive power of the energy storage power supply and a reactive power adjustment amount of the energy storage power supply. The microgrid controller 201 of the first microgrid may obtain an optimal reactive power operating point of each energy storage power supply. The microgrid controller 201 of the first microgrid may send a reactive power control instruction to each energy storage power supply, so that the energy storage power supply adjusts the reactive power output by the energy storage power supply to a reactive power indicated by the received reactive power control instruction. The reactive power control instruction for the energy storage power supply indicates a sum of the reactive power adjustment amount allocated to the energy storage power supply and the optimal reactive power operating point of the energy storage power supply.

For another example, the microgrid controller 201 of the first microgrid may control each photovoltaic subarray to adjust an output reactive power, so that the reactive power output by the photovoltaic subarray is a sum of an optimal reactive power of the photovoltaic subarray and a reactive power adjustment amount of the photovoltaic subarray. The microgrid controller 201 of the first microgrid may obtain an optimal reactive power operating point of each photovoltaic subarray. The microgrid controller 201 of the first microgrid may send a reactive power control instruction to each photovoltaic subarray, so that the photovoltaic subarray adjusts the reactive power output by the photovoltaic subarray to a reactive power indicated by the received reactive power control instruction. The reactive power control instruction for the photovoltaic subarray indicates a sum of the reactive power adjustment amount allocated to the photovoltaic subarray and the optimal reactive power operating point of the photovoltaic subarray.

It can be learned from the foregoing descriptions that in a case in which the first microgrid is a critical voltage node, the microgrid controller 201 of the first microgrid may directly determine the total reactive power adjustment amount of the first microgrid based on the voltage at the point of common coupling of the first microgrid and the reference voltage of the cluster. The microgrid controller 201 of the first microgrid may not need to obtain the reactive power at the point of common coupling of the second microgrid.

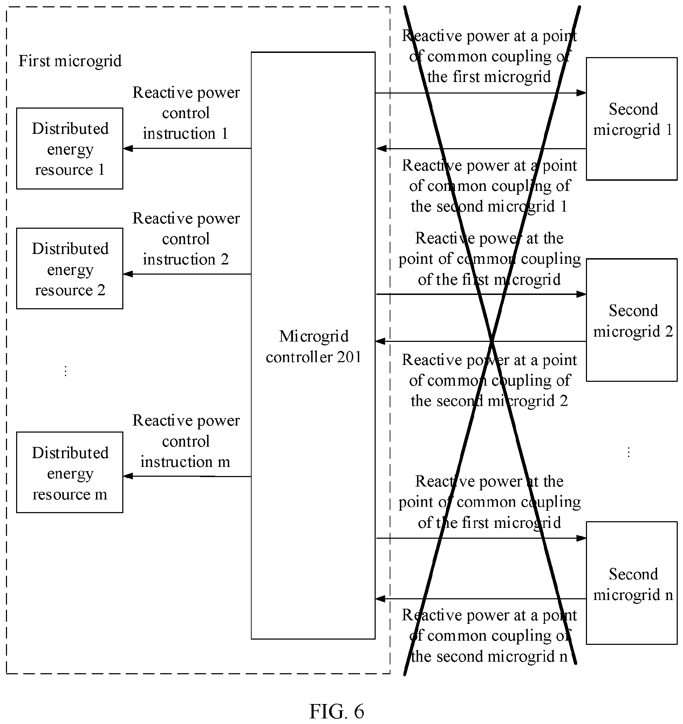

As shown in FIG. 6, the first microgrid may include the microgrid controller 201 and m distributed energy resources. In the case in which the first microgrid is a critical voltage node, the microgrid controller 201 may directly determine the total reactive power adjustment amount of the first microgrid based on the voltage at the point of common coupling of the first microgrid and the reference voltage of the cluster. The microgrid controller 201 may send a reactive power control instruction 1 to a distributed energy resource 1. The reactive power control instruction 1 indicates a sum of a reactive power adjustment amount allocated to the distributed energy resource 1 and an optimal reactive power operating point of the distributed energy resource 1. Likewise, the microgrid controller 201 may send a reactive power control instruction m to a distributed energy resource m. The reactive power control instruction m indicates a sum of a reactive power adjustment amount allocated to the distributed energy resource m and an optimal reactive power operating point of the distributed energy resource m.

For example, the microgrid controller 201 of the first microgrid may obtain an optimal reactive power operating point of each energy storage power supply. The microgrid controller 201 of the first microgrid may send a reactive power control instruction to an energy storage power supply, so that the energy storage power supply adjusts a reactive power output by the energy storage power supply to a reactive power indicated by the received reactive power control instruction. The reactive power control instruction for the energy storage power supply indicates a sum of a reactive power adjustment amount allocated to the energy storage power supply and an optimal reactive power operating point of the energy storage power supply.

For another example, the microgrid controller 201 of the first microgrid may obtain an optimal reactive power operating point of each photovoltaic subarray. The microgrid controller 201 of the first microgrid may send a reactive power control instruction to a photovoltaic subarray, so that the photovoltaic subarray adjusts a reactive power output by the photovoltaic subarray to a reactive power indicated by the received reactive power control instruction. The reactive power control instruction for the photovoltaic subarray indicates a sum of a reactive power adjustment amount allocated to the photovoltaic subarray and an optimal reactive power operating point of the photovoltaic subarray.

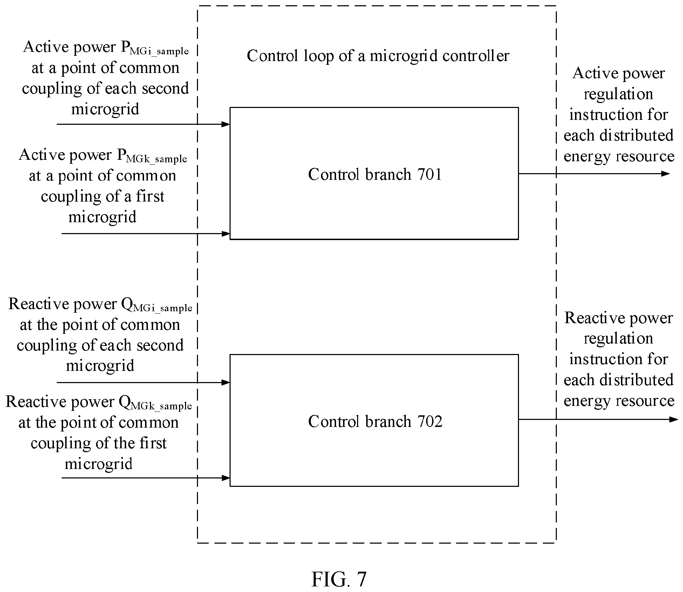

FIG. 7 shows a control loop of a microgrid controller of a first microgrid in a cluster island operation mode according to an example embodiment. The control loop may include: a control branch 701 configured to generate an active power control instruction for a distributed energy resource, and a control branch 702 configured to generate a reactive power control instruction for a distributed energy resource.

It is assumed that the first microgrid is communicatively connected to n other microgrids, where n is a positive integer. The other microgrids communicatively connected to the first microgrid are denoted as second microgrids. Therefore, there are n second microgrids. An $i^{th}$ second microgrid in the n second microgrids is denoted as a second microgrid MGi, and the first microgrid is denoted as a first microgrid MGk, where k is not equal to i. A microgrid controller 201 of the first microgrid may receive an active power $P_{MGi\_sample}$ at a point of common coupling of each second microgrid. The microgrid controller 201 of the first microgrid may obtain an active power $P_{MGk\_sample}$ at a point of common coupling of the first microgrid. The microgrid controller 201 of the first microgrid may receive a reactive power $Q_{MGi\_sample}$ at the point of common coupling of each second microgrid. The microgrid controller 201 of the first microgrid may obtain a reactive power $Q_{MGk\_sample}$ at the point of common coupling of the first microgrid.

The following first describes the control branch 701. The control branch 701 may generate an active power regulation instruction for each distributed energy resource based on the active power $P_{MGi\_sample}$ at the point of common coupling of each second microgrid and the active power $P_{MGk\_sample}$ at the point of common coupling of the first microgrid, and send the active power regulation instruction to a controller of each distributed energy resource, so that each distributed energy resource adjusts an output active power.

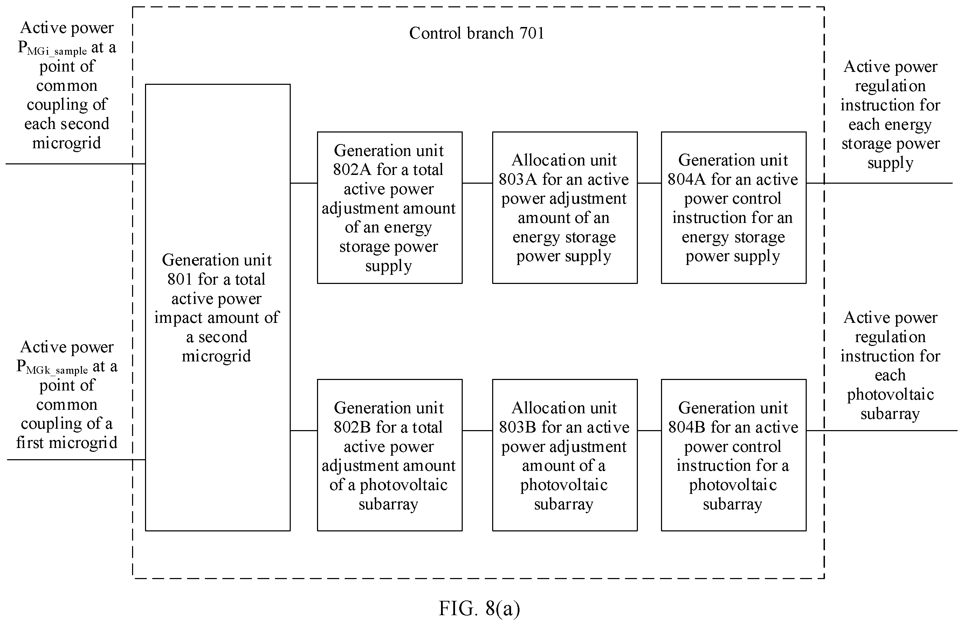

In some examples, as shown in FIG. 8(a), the control branch 701 may include a generation unit 801 for a total active power impact amount of a second microgrid, a generation unit 802A for a total active power adjustment amount of an energy storage power supply, an allocation unit 803A for an active power adjustment amount of an energy storage power supply, a generation unit 804A for an active power control instruction for an energy storage power supply, a generation unit 802B for a total active power adjustment amount of a photovoltaic subarray, an allocation unit 803B for an active power adjustment amount of a photovoltaic subarray, and a generation unit 804B for an active power control instruction for a photovoltaic subarray.

The generation unit 801 for a total active power impact amount of a second microgrid may obtain a total active power impact amount $\sum_{1}^{n}\left(\frac{P_{MGi\_sample}}{P_{MGi\_base}} - \frac{P_{MGk\_sample}}{P_{MGk\_base}}\right)$ of the second microgrids through calculation based on the received active power $P_{MGi\_sample}$ at the point of common coupling of each second microgrid. $P_{MGi\_sample}$ represents an active power at a point of common coupling of a second microgrid i. $P_{MGi\_base}$ represents an active power proportional parameter of the second microgrid i. $P_{MGk\_sample}$ represents the active power at the point of common coupling of the first microgrid. $P_{MGk\_base}$ represents the active power proportional parameter of the first microgrid.

Optionally, the generation unit 801 for a total active power impact amount of a second microgrid may be provided with an active power control loop filter $W_p$. $W_p = \frac{\omega_{ps}}{\omega_{ps}+s}$. $\omega_{ps}$ represents a cut-off frequency of the active power control loop filter of the first microgrid. The generation unit 801 for a total active power impact amount of a second microgrid may provide a filtered total active power impact amount $W_p \cdot \sum_{1}^{n}\left(\frac{P_{MGi\_sample}}{P_{MGi\_base}} - \frac{P_{MGk\_sample}}{P_{MGk\_base}}\right)$ of the second microgrids to each of the generation unit 802A for a total active power adjustment amount of an energy storage power supply and the generation unit 802B for a total active power adjustment amount of a photovoltaic subarray. $P_{MGi\_sample}$ represents the active power at the point of common coupling of the second microgrid i. $P_{MGi\_base}$ represents the active power proportional parameter of the second microgrid i. $P_{MGk\_sample}$ represents the active power at the point of common coupling of the first microgrid. $P_{MGk\_base}$ represents the active power proportional parameter of the first microgrid. $W_p$ represents the

configured active power regulation loop filter of the first microgrid.

The generation unit 802A for a total active power adjustment amount of an energy storage power supply may obtain a first active-power-adjustment component of an energy storage power supply through calculation based on the filtered total active power impact amount of the second microgrids and a configured proportional integrator $K_{pk\_ESS}$ that is for active power regulation and that corresponds to the energy storage power supply, where

$$\Delta P1_{MGk\_ESS} = W_p \cdot K_{pk\_ESS} \cdot \sum_1^n \left( \frac{P_{MGi\_sample}}{P_{MGi\_base}} - \frac{P_{MGk\_sample}}{P_{MGk\_base}} \right)$$ . $K_{pk\_ESS}$ may represent the proportional integrator (namely, a PI controller) for active power regulation of the energy storage power supply of the first microgrid. $P_{MGi\_sample}$ represents the active power at the point of common coupling of the second microgrid i. $P_{MGi\_base}$ represents the active power proportional parameter of the second microgrid i. $P_{MGk\_sample}$ represents the active power at the point of common coupling of the first microgrid. $P_{MGk\_base}$ represents the active power proportional parameter of the first microgrid. $W_p$ represents the configured active power regulation loop filter of the first microgrid.

The generation unit 802A for a total active power adjustment amount of an energy storage power supply may perform an operation of frequency regulation. The generation unit 802A for a total active power adjustment amount of an energy storage power supply may calculate a second active-power-adjustment component $\Delta P2_{MGk\_ESS}$ of the energy storage power supply based on a reference frequency $F_{ref}$ of the cluster and a frequency $f_{MGk\_sample}$ at the point of common coupling of the first microgrid, where $\Delta P2_{MGk\_ESS} = G_{fk\_ESS} \cdot (Fref - W_f \cdot f_{MGk\_sample})$. $W_f$ represents a configured frequency loop filter function of the first microgrid.

A total active power adjustment amount $\Delta PZ_{MGk\_ESS}$ of the energy storage power supply may be a sum of both the first active-power-adjustment component $\Delta P1_{MGk\_ESS}$ of the energy storage power supply and the second active-power-adjustment component $\Delta P2_{MGk\_ESS}$ of the energy storage power supply, that is, $\Delta PZ_{MGk\_ESS} - + \Delta P2_{MGk\_ESS}$.

It is assumed that a plurality of distributed energy resources of the first microgrid include x energy storage power supplies and q photovoltaic subarrays, where both x and q are integers, and x and q are not both zero.

If x is a positive integer, an $a^{th}$ energy storage power supply in the x energy storage power supplies is denoted as an energy storage power supply MGk_ESSa, where a takes on all integer values from 1 to x. The generation unit 802A for a total active power adjustment amount of an energy storage power supply may provide the total active power adjustment amount $\Delta PZ_{MGk\_ESS}$ of the energy storage unit to the allocation unit 803A for an active power adjustment amount of an energy storage power supply. The generation unit 802A for a total active power adjustment amount of an energy storage power supply may allocate an active power adjustment amount $P_{MGk\_ESSa}$ of each energy storage power supply MGk_ESSa based on an active power regulation proportional parameter of each energy storage power supply MGk_ESSa. Active power regulation proportional parameters of all energy storage power supplies MGk_ESSa may be the same or different. A ratio of an active power adjustment amount $P_{MGk\_ESSa}$ of the energy storage power supply MGk_ESSa to the total active power adjustment amount $\Delta PZ_{MGk\_ESS}$ of the energy storage power supply is an active power regulation proportional parameter of the energy storage power supply MGk_ESSa.

The allocation unit 803A for an active power adjustment amount of an energy storage power supply may provide the active power adjustment amount of each energy storage power supply to the generation unit 804A for an active power control instruction for an energy storage power supply. The generation unit 804A for an active power control instruction for an energy storage power supply may obtain an optimal active power operating point $P_{MGk\_ESSa\_EMS}$ of each energy storage power supply. The generation unit 804A for an active power control instruction for an energy storage power supply may generate an active power regulation instruction $P^*_{MGk\_ESSa}$ for the energy storage power supply MGk_ESSa, where $P^*_{MGk\_ESSa} = P_{MGk\_ESSa\_EMS} + P_{MGk\_ESSa}$. In other words, the active power regulation instruction for the energy storage power supply MGk_ESSa indicates a sum of an optimal active power operating point and the active power adjustment amount of the energy storage power supply MGk_ESSa. The generation unit 804A for an active power control instruction for an energy storage power supply may send, to the energy storage power supply MGk_ESSa, the active power regulation instruction $P^*_{MGk\_Essa}$ for the energy storage power supply MGk_ESSa, so that the energy storage power supply MGk_ESSa adjusts a reactive power output by the energy storage power supply MGk_ESSa to a reactive power indicated by a received reactive power control instruction.

Based on this design, each energy storage power supply can perform active power regulation and frequency regulation. Each energy storage power supply may perform, according to an active power regulation instruction $P^*_{MGk\_Essa}$, current-source power-following control or voltage-source frequency/voltage primary support, for example, droop control or virtual synchronous generator (virtual synchronous generator, VSG) control. A specific control method for each energy storage power supply is not limited in this application.

The generation unit 802B for a total active power adjustment amount of a photovoltaic subarray may obtain a first active-power-adjustment component $\Delta P1_{MGk\_PV}$ of a photovoltaic subarray through calculation based on the filtered total active power impact amount $$W_p \cdot \sum_1^n \left( \frac{P_{MGi\_sample}}{P_{MGi\_base}} - \frac{P_{MGk\_sample}}{P_{MGk\_base}} \right)$$ of the second microgrids and a configured proportional integrator $K_{pk\_PV}$ that is for active power regulation and that corresponds to the photovoltaic subarray, where

$$\Delta P1_{MGk\_PV} = W_p \cdot K_{pk\_PV} \cdot \sum_1^n \left( \frac{P_{MGi\_sample}}{P_{MGi\_base}} - \frac{P_{MGk\_sample}}{P_{MGk\_base}} \right)$$ . $W_p$ represents a configured active power regulation loop filter function of the first microgrid. $K_{pk\_PV}$ may represent the proportional integrator (namely, a PI controller) for active power regulation of the photovoltaic subarray of the first microgrid. $P_{MGi\_sample}$ represents the active power at the point of common coupling of the second microgrid i. $P_{MGi\_base}$ represents the active power proportional parameter of the second microgrid i. $P_{MGk\_sample}$ represents the active power at the point of common coupling of the first microgrid. $P_{MGk\_base}$ represents the active power proportional parameter of the first microgrid.

The generation unit 802B for a total active power adjustment amount of a photovoltaic subarray may perform an operation of frequency regulation. The generation unit 802B for a total active power adjustment amount of a photovoltaic subarray may calculate a second active-power-adjustment component $\Delta P2_{MGk\_PV}$ of the photovoltaic subarray based on the reference frequency $F_{ref}$ of the cluster and the frequency $f_{MGk\_sample}$ at the point of common coupling of the first microgrid, where $\Delta P2_{MGk\_PV} = G_{fk\_PV} \cdot (Fref - W_f \cdot f_{MGk\_sample})$ . $G_{fk\_PV}$ may represent a proportional integrator (namely, a PI controller) for frequency regulation of the photovoltaic subarray. $W_f$ represents a configured frequency loop filter of the first microgrid.

A total active power adjustment amount $\Delta PZ_{MGk\_Pv}$ of the photovoltaic subarray may be a sum of both the first active-power-adjustment component $\Delta P1_{MGk\_PV}$ of the photovoltaic subarray and the second active-power-adjustment component $\Delta P2_{MGk\_Pv}$ of the photovoltaic subarray, that is, $\Delta PZ_{MGk\_Pv} = \Delta P1_{MGk\_PV} + \Delta P2_{MGk\_PV}$.

It is assumed that a plurality of distributed energy resources of the first microgrid include x energy storage power supplies and q photovoltaic subarrays, where both s and q are integers, and x and q are not both zero. If q is a positive integer, a $b^{th}$ photovoltaic subarray in the q photovoltaic subarrays is denoted as a photovoltaic subarray MGk_PVb, where b takes on all integer values from 1 to q. The generation unit 802B for a total active power adjustment amount of a photovoltaic subarray may provide the total active power adjustment amount $\Delta PZ_{MGk\_PV}$ of the energy storage unit to the allocation unit 803B for an active power adjustment amount of a photovoltaic subarray. The generation unit 802A for a total active power adjustment amount of a photovoltaic subarray may allocate an active power adjustment amount $P_{MGk\_PVb}$ of each photovoltaic subarray MGk_PVa based on an active power regulation proportional parameter of each photovoltaic subarray MGk_PVb. Active power regulation proportional parameters of all photovoltaic subarrays MGk_PVb may be the same or different. A ratio of an active power adjustment amount $P_{MGk\_PVb}$ of the photovoltaic subarray MGk_PVa to the total active power adjustment amount $\Delta PZ_{MGk\_Pv}$ of the photovoltaic subarray is an active power regulation proportional parameter of the photovoltaic subarray MGk_PVb.

The generation unit 802B for a total active power adjustment amount of a photovoltaic subarray may provide the active power adjustment amount of each photovoltaic subarray to the generation unit 804B for an active power control instruction for a photovoltaic subarray. The generation unit 804B for an active power control instruction for a photovoltaic subarray may obtain an optimal active power operating point $P_{MGk\_PVb\_EMS}$ of each photovoltaic subarray. The generation unit 804B for an active power control instruction for a photovoltaic subarray may generate an active power regulation instruction $P^*_{MGk\_PVb}$ for the photovoltaic subarray MGk_PVa, where $P^*_{MGk\_PVb} = P_{MGk\_PVb\_EMS} + P_{MGk\_PVb}$. In other words, the active power regulation instruction for the photovoltaic subarray MGk_PVb indicates a sum of an optimal active power operating point and the active power adjustment amount of the photovoltaic subarray MGk_PVb. The generation unit 804B for an active power control instruction for a photovoltaic subarray may send, to the photovoltaic subarray MGk_PVb, the active power regulation instruction $P^*_{MGk\_PVb}$ for the photovoltaic subarray MGk_PVb, so that the photovoltaic subarray MGk_PVb adjusts a reactive power output by the photovoltaic subarray MGk_PVb to a reactive power indicated by a received reactive power control instruction.

Based on this design, each photovoltaic subarray can perform active power regulation and voltage regulation. Each photovoltaic subarray may perform, according to an active power regulation instruction $P^*_{MGk\_PVb}$, current-source power-following control or voltage-source frequency/voltage primary support, for example, droop control or VSG control. A specific control method for each photovoltaic subarray is not limited in this application.

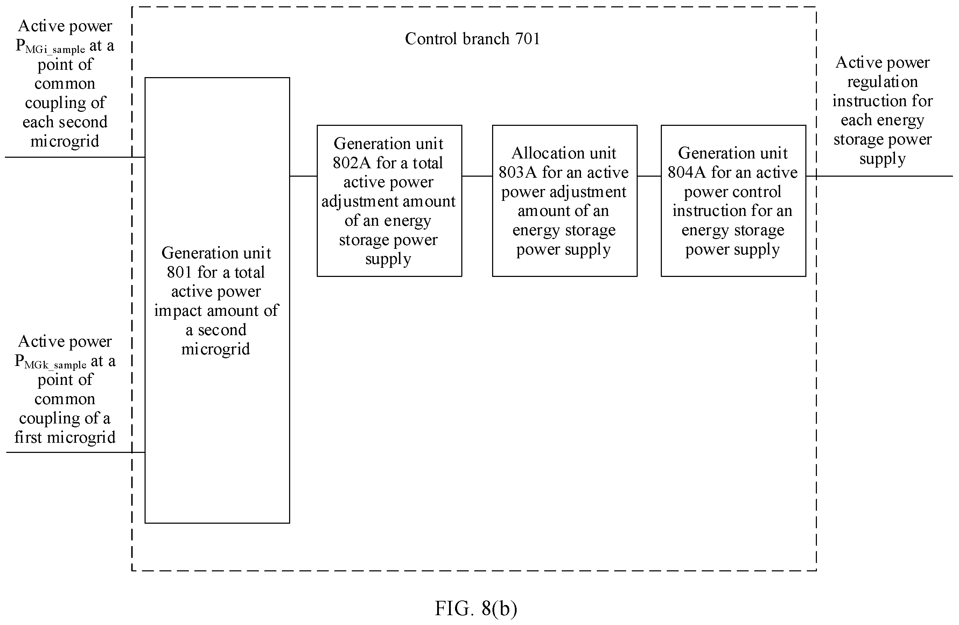

In some other examples, as shown in FIG. 8(b), the control branch 701 may include a generation unit 801 for a total active power impact amount of a second microgrid, a generation unit 802A for a total active power adjustment amount of an energy storage power supply, an allocation unit 803A for an active power adjustment amount of an energy storage power supply, and a generation unit 804A for an active power control instruction for an energy storage power supply. For similarities between FIG. 8(b) and FIG. 8(a), refer to related descriptions in FIG. 8(a). Details are not described herein again.

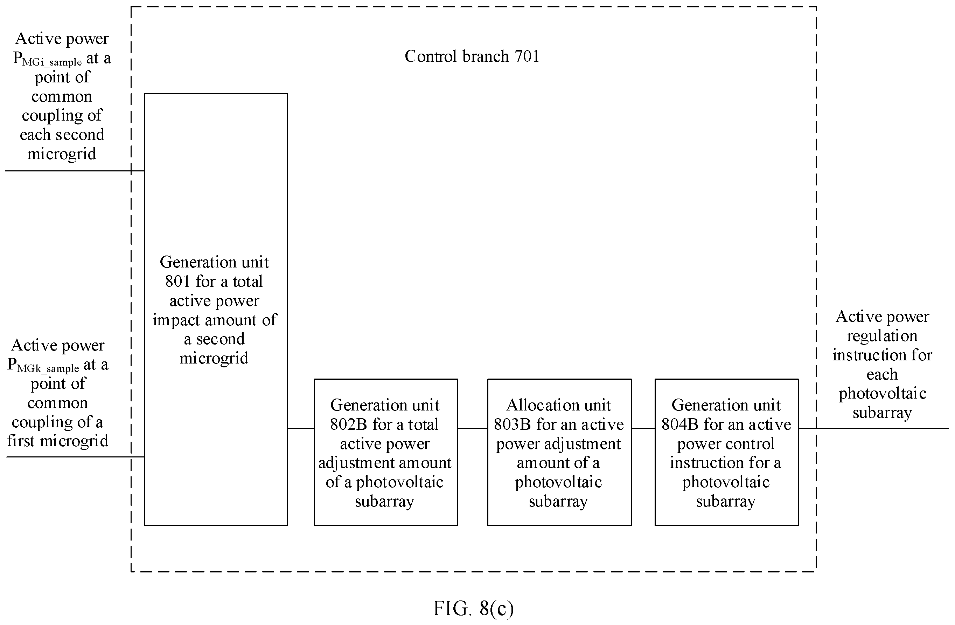

In still some other examples, as shown in FIG. 8(c), the control branch 701 may include a generation unit 801 for a total active power impact amount of a second microgrid, a generation unit 802B for a total active power adjustment amount of a photovoltaic subarray, an allocation unit 803B for an active power adjustment amount of a photovoltaic subarray, and a generation unit 804B for an active power control instruction for a photovoltaic subarray. For similarities between FIG. 8(c) and FIG. 8(a), refer to related descriptions in FIG. 8(a). Details are not described herein again.

The following describes the control branch 702. In a possible implementation, the first microgrid is a non-critical voltage node in the microgrid cluster. The control branch 702 may generate a reactive power regulation instruction for each distributed energy resource based on the reactive power $Q_{MGi\_sample}$ at the point of common coupling of each second microgrid and the reactive power $Q_{MGk\_sample}$ at the point of common coupling of the first microgrid, and send the reactive power regulation instruction to a controller of each distributed energy resource, so that each distributed energy resource adjusts an output reactive power.

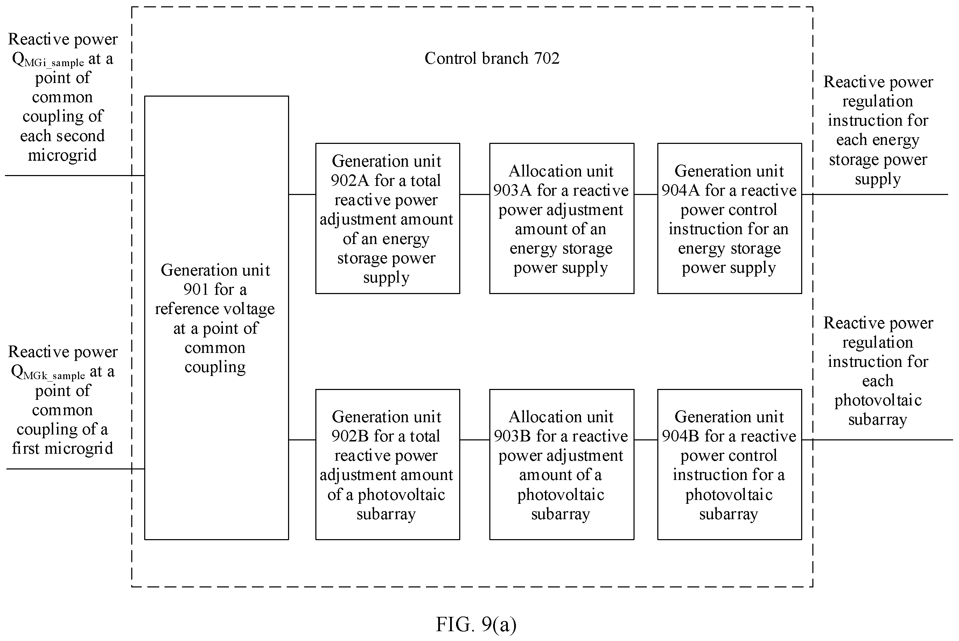

In some examples, as shown in FIG. 9(a), the control branch 702 may include a generation unit 901 for a reference voltage at a point of common coupling, a generation unit 902A for a total reactive power adjustment amount of an energy storage power supply, an allocation unit 903A for a reactive power adjustment amount of an energy storage power supply, a generation unit 904A for a reactive power control instruction for an energy storage power supply, a generation unit 902B for a total reactive power adjustment amount of a photovoltaic subarray, an allocation unit 903B for a reactive power adjustment amount of a photovoltaic subarray, and a generation unit 904B for a reactive power control instruction for a photovoltaic subarray.

The generation unit 901 for a reference voltage at a point of common coupling may obtain a first reactive-power component $\sum_1^n(\frac{Q_{MGi\_sample}}{Q_{MGi\_base}} - \frac{Q_{MGk\_sample}}{Q_{MGk\_base}})$ of the first microgrid through calculation based on the received reactive power $Q_{MGi\_sample}$ at the point of common coupling of each second microgrid. $Q_{MGi\_sample}$ represents a reactive power at a point of common coupling of a second microgrid i. $Q_{MGi\_base}$ represents a reactive power proportional parameter of the second microgrid i. $Q_{MGk\_sample}$ represents the reactive power at the point of common coupling of the first microgrid. $Q_{MGk\_base}$ represents a reactive power proportional parameter of the first microgrid. Optionally, the generation unit 901 for a reference voltage at a point of common coupling may be provided with a reactive power control loop filter $W_q$.

$W_q = \frac{\omega_{qs}}{\omega_{qs}+s}$ . $\omega_{qs}$ represents a cut-off frequency of the reactive power control loop filter of the first microgrid.

The generation unit 901 for a reference voltage at a point of common coupling may obtain a reference voltage $V_{MGK\_ref}$ at the point of common coupling of the first microgrid through calculation based on a filtered first reactive-power component $W_q \cdot \sum_1^n(\frac{Q_{MGi\_sample}}{Q_{MGi\_base}} - \frac{Q_{MGk\_sample}}{Q_{MGk\_base}})$ of the first microgrid, a proportional integrator $K_{qk}$ for reactive power regulation of the first microgrid, and a reference voltage $V_{ref}$ of the cluster, where

$$V_{MGK\_ref} = V_{ref} + W_q \cdot K_{qk} \cdot \sum_1^n(\frac{Q_{MGi\_sample}}{Q_{MGi\_base}} - \frac{Q_{MGk\_sample}}{Q_{MGk\_base}})$$ . $Q_{MGi\_sample}$ represents the reactive power at the point of common coupling of the second microgrid i. $Q_{MGi\_base}$ represents the reactive power proportional parameter of the second microgrid i. $Q_{MGk\_sample}$ represents the reactive power at the point of common coupling of the first microgrid. $Q_{MGk\_base}$ represents the reactive power proportional parameter of the first microgrid. $W_q$ represents the configured reactive power regulation loop filter of the first microgrid. $K_{qk}$ represents the configured proportional integrator for reactive power regulation of the first microgrid.

The generation unit 901 for a reference voltage at a point of common coupling may provide the reference voltage $V_{MGK\_ref}$ at the point of common coupling of the first microgrid to each of the generation unit 902A for a total reactive power adjustment amount of an energy storage power supply and the generation unit 902B for a total reactive power adjustment amount of a photovoltaic subarray.

The generation unit 902A for a total reactive power adjustment amount of an energy storage power supply may calculate a total reactive power adjustment amount $\Delta QZ_{MGk\_ESS}$ of an energy storage power supply based on a voltage $V_{MGk\_sample}$ at the point of common coupling of the first microgrid, the reference voltage $V_{MGK\_ref}$ at the point of common coupling of the first microgrid, and a proportional integrator $K_{vk\_ESS}$ that is for voltage regulation and that corresponds to the energy storage battery, where $\Delta QZ_{MGk\_ESS} = K_{vk\_ESS} \cdot (V_{MGK\_ref} - W_v \cdot V_{MGk\_sample}) \cdot W_v$ represents a configured voltage control loop filter of the first microgrid. $K_{vk\_ESS}$ may represent a proportional integrator (namely, a PI controller) for reactive power regulation of the energy storage power supply of the first microgrid.

It is assumed that a plurality of distributed energy resources of the first microgrid include x energy storage power supplies and q photovoltaic subarrays, where both s and q are integers, and x and q are not both zero.

If x is a positive integer, an $a^{th}$ energy storage power supply in the x energy storage power supplies is denoted as an energy storage power supply MGk_ESSa, where a takes on all integer values from 1 to s. The generation unit 902A for a total reactive power adjustment amount of an energy storage power supply may provide the total reactive power adjustment amount $\Delta QZ_{MGk\_ESS}$ of the energy storage unit to the allocation unit 903A for a reactive power adjustment amount of an energy storage power supply. The generation unit 902A for a total reactive power adjustment amount of an energy storage power supply may allocate a reactive power adjustment amount $Q_{MGk\_ESSa}$ of each energy storage power supply MGk_ESSa based on a reactive power regulation proportional parameter of each energy storage power supply MGk_ESSa. Reactive power regulation proportional parameters of all energy storage power supplies MGk_ESSa may be the same or different. A ratio of a reactive power adjustment amount $Q_{MGk\_ESSa}$ of the energy storage power supply MGk_ESSa to the total reactive power adjustment amount $\Delta QZ_{MGk\_ESS}$ of the energy storage power supply is a reactive power regulation proportional parameter of the energy storage power supply MGk_ESSa.

The generation unit 902A for a total reactive power adjustment amount of an energy storage power supply may provide the reactive power adjustment amount of each energy storage power supply to the generation unit 904A for a reactive power control instruction for an energy storage power supply. The generation unit 904A for a reactive power control instruction for an energy storage power supply may obtain an optimal reactive power operating point $Q_{MGk\_ESSa\_EMS}$ of each energy storage power supply. The generation unit 904A for a reactive power control instruction for an energy storage power supply may generate a reactive power regulation instruction $Q^*_{MGk\_ESSa}$ for the energy storage power supply MGk _ESSa, where $Q^*_{MGk\_ESSa} = Q_{MGk\_ESSa\_EMS} + Q_{MGk\_ESSa}$. In other words, the reactive power regulation instruction for the energy storage power supply MGk_ESSa indicates a sum of an optimal reactive power operating point and the reactive power adjustment amount of the energy storage power supply MGk_ESSa. The generation unit 904A for a reactive power control instruction for an energy storage power supply may send, to the energy storage power supply MGk _ESSa, the reactive power regulation instruction $Q^*_{MGk\_ESSa}$ for the energy storage power supply MGk_ESSa.

Based on this design, each energy storage power supply can perform reactive power regulation and voltage regulation. Each energy storage power supply may perform, according to a reactive power regulation instruction $Q^*_{MGk\_ESSa}$ , current-source power-following control or voltage-source frequency/voltage primary support, for example, droop control or VSG control. A specific control method for each energy storage power supply is not limited in this application.

The generation unit 902B for a total reactive power adjustment amount of a photovoltaic subarray may calculate a total reactive power adjustment amount $\Delta QZ_{MGk\_PV}$ of a photovoltaic subarray based on the voltage $V_{MGk\_sample}$ at the point of common coupling of the first microgrid, the reference voltage $V_{MGK\_ref}$ at the point of common coupling of the first microgrid, and a proportional integrator $K_{vk\_PV}$ that is for voltage regulation and that corresponds to the photovoltaic subarray, where $\Delta QZ_{MGk\_PV} = K_{vk\_PV} \cdot (V_{MGK_{ref}} - W_v \cdot V_{MGk_{sample}})$. $K_{vk\_ESS}$ may represent a proportional integrator (namely, a PI controller) for reactive power regulation of the photovoltaic subarray of the first microgrid. $W_v$ represents the configured voltage control loop filter function of the first microgrid.

It is assumed that a plurality of distributed energy resources of the first microgrid include x energy storage power supplies and q photovoltaic subarrays, where both x and q are integers, and x and q are not both zero. If q is a positive integer, a $b^{th}$ photovoltaic subarray in the q photovoltaic subarrays is denoted as a photovoltaic subarray MGk_PVb, where b takes on all integer values from 1 to q. The generation unit 902B for a total reactive power adjustment amount of a photovoltaic subarray may provide the total reactive power adjustment amount $\Delta QZ_{MGk\_PV}$ of the energy storage unit to the allocation unit 903A for a reactive power adjustment amount of a photovoltaic subarray. The generation unit 902B for a total reactive power adjustment amount of a photovoltaic subarray may allocate a reactive power adjustment amount $Q_{MGk\_PVb}$ of each photovoltaic subarray MGk_PVa based on a reactive power regulation proportional parameter of each photovoltaic subarray MGk_PVb. Reactive power regulation proportional parameters of all photovoltaic subarrays MGk_PVb may be the same or different. A ratio of a reactive power adjustment amount $Q_{MGk\_PVb}$ of the photovoltaic subarray MGk_PVa to the total reactive power adjustment amount $\Delta QZ_{MGk\_PV}$ of the photovoltaic subarray is a reactive power regulation proportional parameter of the photovoltaic subarray MGk_PVb.

The generation unit 902B for a total reactive power adjustment amount of a photovoltaic subarray may provide the reactive power adjustment amount of each photovoltaic subarray to the generation unit 904A for a reactive power control instruction for a photovoltaic subarray. The generation unit 904A for a reactive power control instruction for a photovoltaic subarray may obtain an optimal reactive power operating point $Q_{MGk\_PVb\_EMS}$ of each photovoltaic subarray. The generation unit 904A for a reactive power control instruction for a photovoltaic subarray may generate a reactive power regulation instruction $Q^*_{MGk\_PVb}$ for the photovoltaic subarray MGk_PVa, where $Q^*_{MGk\_PVb} = Q_{MGk\_PVb\_EMS} + Q_{MGk\_PVb}$. In other words, the reactive power regulation instruction for the photovoltaic subarray MGk_PVb indicates a sum of an optimal reactive power operating point and the reactive power adjustment amount of the photovoltaic subarray MGk_PVb. The generation unit 904A for a reactive power control instruction for a photovoltaic subarray may send, to the photovoltaic subarray MGk_PVb, the reactive power regulation instruction $Q^*_{MGk\_PVb}$ for the photovoltaic subarray MGk_PVb.

Based on this design, each photovoltaic subarray can perform reactive power regulation and voltage regulation. Each energy storage power supply may perform, according to a reactive power regulation instruction $Q^*_{MGk\_PVb}$, current-source power-following control or voltage-source frequency/voltage primary support, for example, droop control or VSG control. A specific control method for each energy storage power supply is not limited in this application.

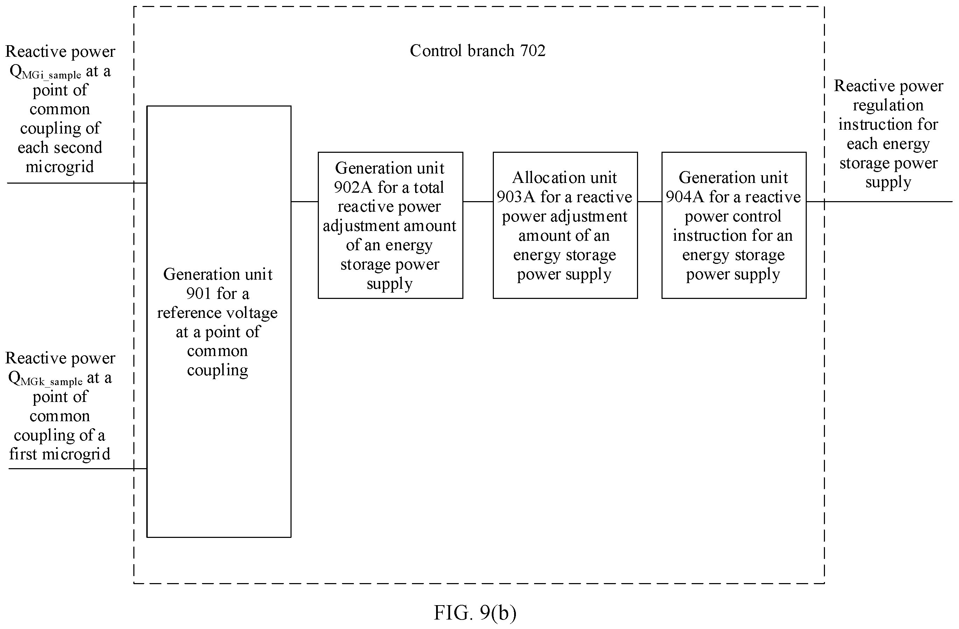

In some other examples, as shown in FIG. 9(b), the control branch 702 may include a generation unit 901 for a reference voltage at a point of common coupling, a generation unit 902A for a total reactive power adjustment amount of an energy storage power supply, an allocation unit 903A for a reactive power adjustment amount of an energy storage power supply, and a generation unit 904A for a reactive power control instruction for an energy storage power supply. For similarities between FIG. 9(b) and FIG. 9(a), refer to related descriptions in FIG. 9(a). Details are not described herein again.

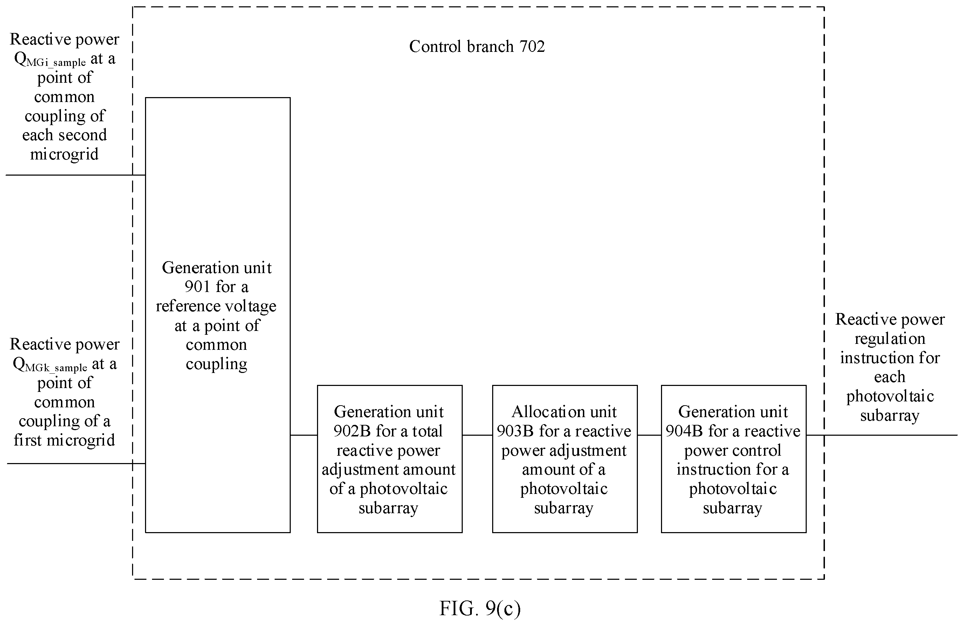

In still some other examples, as shown in FIG. 9(c), the control branch 702 may include a generation unit 901 for a reference voltage at a point of common coupling, a generation unit 902B for a total reactive power adjustment amount of a photovoltaic subarray, an allocation unit 903B for a reactive power adjustment amount of a photovoltaic subarray, and a generation unit 904B for a reactive power control instruction for a photovoltaic subarray. For similarities between FIG. 9(c) and FIG. 9(a), refer to related descriptions in FIG. 9(a). Details are not described herein again.

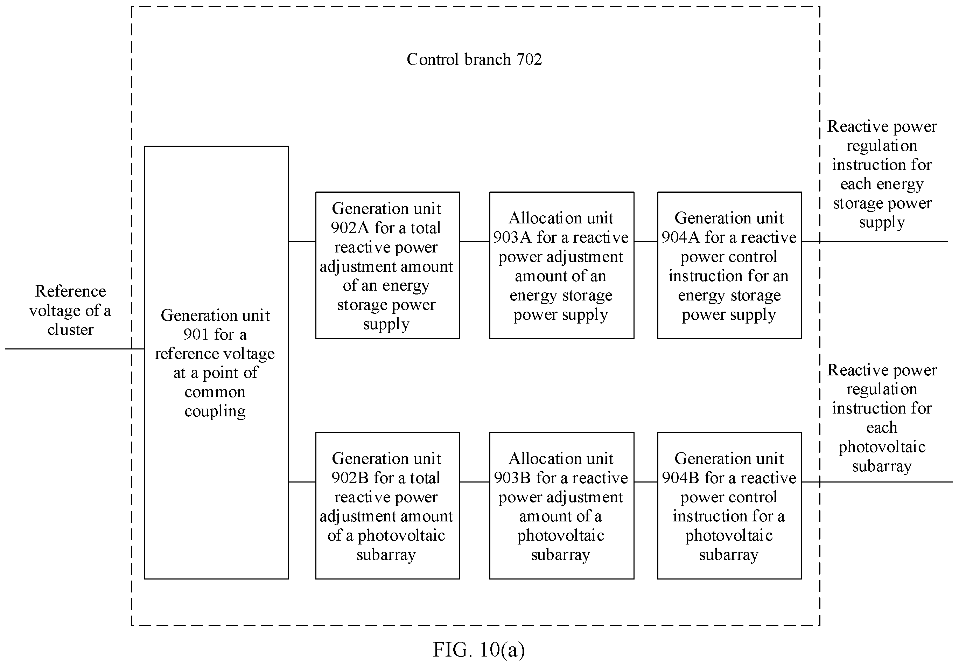

In another possible implementation, the first microgrid is a critical voltage node in the microgrid cluster. In some examples, as shown in FIG. 10(a), the control branch 702 may include a generation unit 901 for a reference voltage at a point of common coupling, a generation unit 902A for a total reactive power adjustment amount of an energy storage power supply, an allocation unit 903A for a reactive power adjustment amount of an energy storage power supply, a generation unit 904A for a reactive power control instruction for an energy storage power supply, a generation unit 902B for a total reactive power adjustment amount of a photovoltaic subarray, an allocation unit 903B for a reactive power adjustment amount of a photovoltaic subarray, and a generation unit 904B for a reactive power control instruction for a photovoltaic subarray.

The generation unit 901 for a reference voltage at a point of common coupling may provide a reference voltage $V_{ref}$ of the cluster as a reference voltage at the point of common coupling of the first microgrid to each of the generation unit 902A for a total reactive power adjustment amount of an energy storage power supply and the generation unit 902B for a total reactive power adjustment amount of a photovoltaic subarray.

The generation unit 902A for a total reactive power adjustment amount of an energy storage power supply may calculate a total reactive power adjustment amount $\Delta QZ_{MGk\_ESS}$ of an energy storage power supply based on the reference voltage $V_{ref}$ of the cluster, the reference voltage $V_{MGK\_ref}$ at the point of common coupling of the first microgrid, and a proportional integrator $K_{vk\_ESS}$ that is for voltage regulation and that corresponds to the energy storage battery, where $\Delta QZ_{MGk\_ESS} = K_{vk\_ESS} \cdot (V_{ref} - W_v \cdot V_{MGk\_sample})$. $W_v$ represents a configured voltage control loop filter function of the first microgrid. $K_{vk\_ESS}$ may represent a proportional integrator (namely, a PI controller) for reactive power regulation of the energy storage power supply of the first microgrid.

The generation unit 902A for a total reactive power adjustment amount of an energy storage power supply may provide the total reactive power adjustment amount $\Delta QZ_{MGk\_ESS}$ of the energy storage unit to the allocation unit 903A for a reactive power adjustment amount of an energy storage power supply. For functions of the allocation unit 903A for a reactive power adjustment amount of an energy storage power supply and the generation energy resource 904A for a reactive power control instruction for an energy storage power supply, refer to related descriptions of FIG. 9(a). Details are not described herein again.

The generation unit 902B for a total reactive power adjustment amount of a photovoltaic subarray may calculate a total reactive power adjustment amount $\Delta QZ_{MGkPV}$ of a photovoltaic subarray based on the voltage $V_{MGksample}$ at the point of common coupling of the first microgrid, the reference voltage $V_{ref}$ of the cluster, and a proportional integrator $K_{vkPV}$ that is for voltage regulation and that corresponds to the photovoltaic subarray, where $\Delta QZ_{MGkPV} = K_{vkPV} \cdot (V_{ref} - W_v \cdot V_{MGksample})$. $W_v$ represents the configured voltage control loop filter function of the first microgrid. $K_{vk\_ESS}$ may represent a proportional integrator (namely, a PI controller) for reactive power regulation of the energy storage power supply of the first microgrid.

For functions of the allocation unit 903B for a reactive power adjustment amount of a photovoltaic subarray and the generation energy resource 904B for a reactive power control instruction for a photovoltaic subarray, refer to related descriptions of FIG. 9(a). Details are not described herein again.

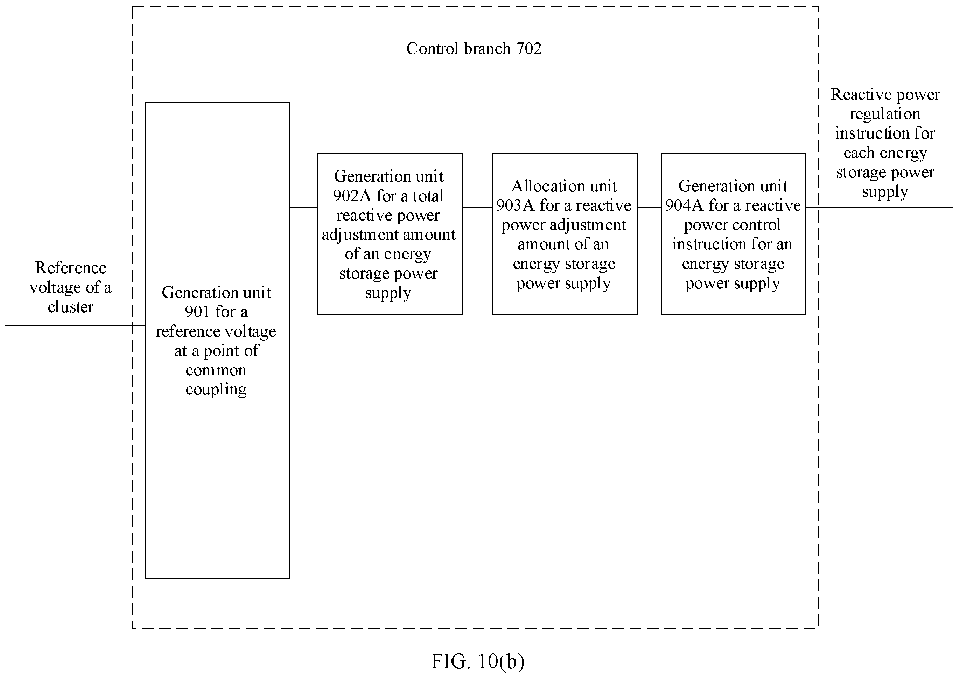

In some other examples, as shown in FIG. 10(b), the control branch 702 may include a generation unit 901 for a reference voltage at a point of common coupling, a generation unit 902A for a total reactive power adjustment amount of an energy storage power supply, an allocation unit 903A for a reactive power adjustment amount of an energy storage power supply, and a generation unit 904A for a reactive power control instruction for an energy storage power supply. For similarities between FIG. 10(b) and FIG. 10(a), refer to related descriptions in FIG. 10(a). Details are not described herein again.

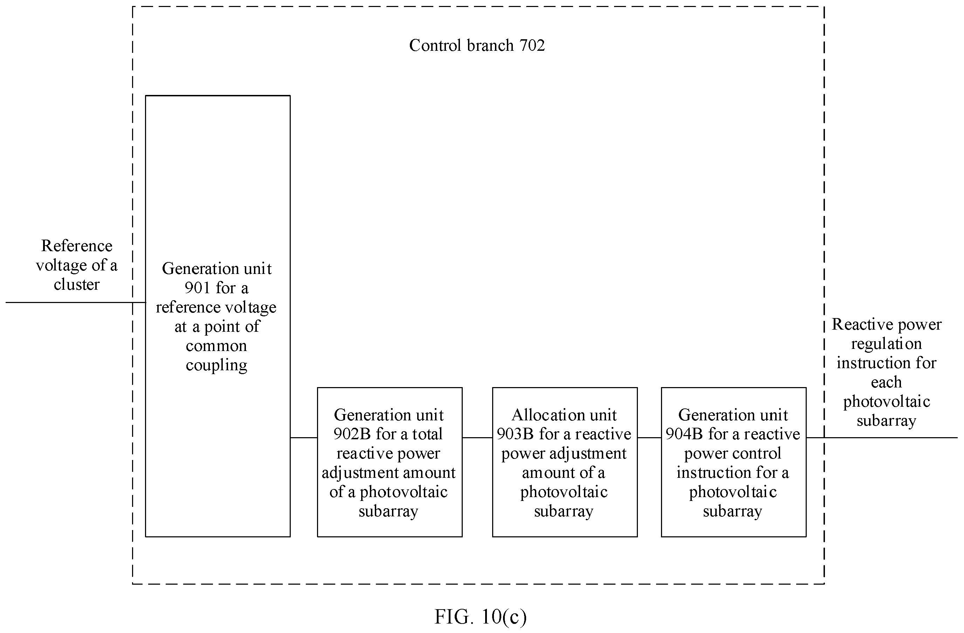

In still some other examples, as shown in FIG. 10(c), the control branch 702 may include a generation unit 901 for a reference voltage at a point of common coupling, a generation unit 902B for a total reactive power adjustment amount of a photovoltaic subarray, an allocation unit 903B for a reactive power adjustment amount of a photovoltaic subarray, and a generation unit 904B for a reactive power control instruction for a photovoltaic subarray. For similarities between FIG. 10(c) and FIG. 10(a), refer to related descriptions in FIG. 10(a). Details are not described herein again.

Based on the topologies of the microgrid cluster 100 provided in embodiments of this application, the following describes an operation process of the microgrid cluster 100 in the cluster grid-connected operation mode. The microgrid cluster 100 may send a cluster grid-connected operation mode to each microgrid 101 in response to the received cluster grid-connected operation mode.

In the microgrid cluster 100, the microgrid controller 201 of each microgrid 101 may receive the cluster grid-connected operation mode, and perform a control operation corresponding to the cluster grid-connected operation mode.

In some examples, in the microgrid cluster 100, a microgrid controller 201 of one microgrid 101 may exist as a primary microgrid controller and receive an operation mode instruction. After receiving the cluster grid-connected operation mode instruction, the primary microgrid controller may send the cluster grid-connected operation mode instruction to each microgrid controller 201 communicatively connected to the primary microgrid controller. After receiving the cluster grid-connected operation mode instruction, each microgrid controller 201 may send the cluster grid-connected operation mode instruction to a microgrid controller 201 communicatively connected to the microgrid controller 201, so that each microgrid 101 in the microgrid cluster 100 receives the cluster grid-connected operation mode instruction.

In some other examples, in the microgrid cluster 100, a microgrid controller 201 of one microgrid 101 may exist as a primary microgrid controller. The primary microgrid controller may be communicatively connected to another microgrid controller in the microgrid cluster 100. After receiving the cluster grid-connected operation mode instruction, the primary microgrid controller may send the cluster grid-connected operation mode instruction to the another microgrid controller in the microgrid cluster 100, so that each microgrid 101 in the microgrid cluster 100 receives the cluster grid-connected operation mode instruction. Optionally, the primary microgrid controller may be communicatively connected to the another microgrid controller in the microgrid cluster 100 separately in a point to point manner, or the primary microgrid controller may be communicatively connected to the another microgrid controller in the microgrid cluster 100 through the Ethernet ring network.

Any one microgrid 101 (namely, the foregoing first microgrid) in the microgrid cluster 100 is used as an example for description.

In some examples, in the cluster grid-connected operation mode, the first microgrid may adjust an active power at a point of common coupling of the first microgrid. A microgrid controller 201 of the first microgrid may obtain a reference active power $P_{MGk\_ref}$ of the first microgrid, an active power proportional parameter $P_{MGk\_base}$ of the first microgrid, and an active power $P_{MGk\_sample}$ output at the point of common coupling of the first microgrid, and determine a first active-power-adjustment component $\Delta P1_{MGk}$ of the first microgrid, where $\Delta P1_{MGk} = K_{pk} \cdot (\frac{P_{MGk\_ref}}{P_{MGk\_base}} - \frac{P_{MGk\_sample}}{P_{MGk\_base}})$ . $K_{pk}$ represents a configured proportional integrator for active power regulation of the first microgrid.

Optionally, in a process in which the microgrid controller 201 of the first microgrid determines the first active-power-adjustment component $\Delta P1_{MGk}$ of the first microgrid, an active power control loop filter may be used, to filter out interference, and regulate a control bandwidth. The first active-power-adjustment component of the first microgrid

$$\Delta P1_{MGk} = W_p K_{pk} \cdot (\frac{P_{MGk\_ref}}{P_{MGk\_base}} - \frac{P_{MGk\_sample}}{P_{MGk\_base}})$$ . $W_p$ represents a configured active power regulation loop filter function that is of the first microgrid and that can filter out interference, and regulate a control bandwidth. Optionally,

$$W_p = \frac{\omega_{ps}}{\omega_{ps}+s}$$ . $\omega_{ps}$ represents a cut-off frequency of the active power control loop filter of the first microgrid.

In this example, in the cluster grid-connected operation mode, the first microgrid may adjust only the active power at the point of common coupling of the first microgrid. The microgrid controller 201 of the first microgrid may use the first active-power-adjustment component $\Delta P1_{MGk}$ of the first microgrid as a total active power adjustment amount $\Delta PZ_{MGk}$ of the first microgrid.

The microgrid controller 201 of the first microgrid may allocate an active power adjustment amount of each distributed energy resource in the first microgrid based on the total active power adjustment amount $\Delta PZ_{MGk}$ of the first microgrid and a regulation proportion of each distributed energy resource in the first microgrid. A ratio of an active power adjustment amount of a distributed energy resource to the total active power adjustment amount of the first microgrid is an active power regulation proportional parameter of the distributed energy resource. Optionally, active power regulation proportional parameters of all distributed energy resources may be the same. In other words, in the first microgrid, active power adjustment amounts of distributed energy resources participating in power adjustment are evenly allocated.

In some other examples, in the cluster grid-connected operation mode, the first microgrid may adjust an active power at a point of common coupling of the first microgrid and a frequency at the point of common coupling of the first microgrid.

A microgrid controller 201 of the first microgrid may obtain a reference active power $P_{MGk\_ref}$ of the first microgrid, an active power proportional parameter $P_{MGk\_base}$ of the first microgrid, and an active power $P_{MGk\_sample}$ output at the point of common coupling of the first microgrid, and determine a first active-power-adjustment component $\Delta P1_{MGk}$ of the first microgrid, where $\Delta P1_{MGk} = K_{pk} \cdot (\frac{P_{MGk\_ref}}{P_{MGk\_base}} - \frac{P_{MGk\_sample}}{P_{MGk\_base}})$ . $K_{pk}$ represents a configured proportional integrator for active power regulation of the first microgrid.

Optionally, in a process in which the microgrid controller 201 of the first microgrid determines the first active-power-adjustment component $\Delta P1_{MGk}$ of the first microgrid, an active power control loop filter may be used, to filter out interference, and regulate a control bandwidth. The first active-power-adjustment component of the first microgrid

$$\Delta P1_{MGk} = W_p K_{pk} \cdot \left(\frac{P_{MGk\_ref}}{P_{MGk\_base}} - \frac{P_{MGk\_sample}}{P_{MGk\_base}}\right) \cdot W_p \text{ represents a configured active power regulation loop}$$

filter function that is of the first microgrid and that can filter out interference, and regulate a control bandwidth. Optionally,

$W_p = \frac{\omega_{ps}}{\omega_{ps}+s}$ . $\omega_{ps}$ represents a cut-off frequency of the active power control loop filter of the first microgrid.

The microgrid controller 201 of the first microgrid may determine a second active-power-adjustment component $\Delta P2_{MGk}$ of the first microgrid based on the frequency $f_{MGk\_sample}$ at the point of common coupling of the first microgrid and a reference frequency $F_{ref}$ of the cluster, where $\Delta P2_{MGk} = G_{fk} \cdot (F_{ref} - f_{MGk\_sample})$. $G_{fk}$ represents a proportional integrator for frequency regulation at the point of common coupling of the first microgrid.

Optionally, in a process in which the microgrid controller 201 of the first microgrid determines the second active-power-adjustment component $\Delta P2_{MGk}$ of the first microgrid, a frequency control loop filter may be used, to filter out interference, and regulate a control bandwidth. $\Delta P2_{MGk} = G_{fk} \cdot (F_{ref} - W_f \cdot f_{MGk\_sample})$. $W_f$ represents a configured frequency loop filter function that is of the first microgrid and that can filter out interference, and regulate a control bandwidth. Optionally, $W_f = \frac{\omega_{fs}}{\omega_{fs}+s}$ . $\omega_{fs}$ represents a cut-off frequency of the frequency control loop filter of the first microgrid.

The microgrid controller 201 of the first microgrid may determine a sum of both the first active-power-adjustment component $\Delta P1_{MGk}$ of the first microgrid and the second active-power-adjustment component $\Delta P2_{MGk}$ of the first microgrid as a total active power adjustment amount $\Delta PZ_{MGk}$ of the first microgrid.

The first microgrid controls the distributed energy resources in the first microgrid, so that the active power output at the point of common coupling of the first microgrid and a frequency of the voltage output at the point of common coupling of the first microgrid are adjusted.

In some scenarios, the plurality of distributed energy resources 202 in the first microgrid may include one or more of the following: an energy storage power supply and a photovoltaic subarray. Frequency regulation powers that the energy storage power supply and the photovoltaic subarray in the first microgrid can contribute are different. Therefore, the first active-power-adjustment component $\Delta P1_{MGk}$ of the first microgrid may include a first active-power-adjustment component $\Delta P1_{MGk\_ESS}$ of the energy storage power supply and a first active-power-adjustment component $\Delta P1_{MGk\_PV}$ of the photovoltaic subarray.

The total active power adjustment amount $\Delta PZ_{MGk}$ of the first microgrid may include a total active power adjustment amount $\Delta PZ_{MGk\_ESS}$ of the energy storage power supply and a total active power adjustment amount $\Delta PZ_{MGk\_PV}$ of the photovoltaic subarray.

The total active power adjustment amount $\Delta PZ_{MGk\_ESS}$ of the energy storage power supply may include the first active-power-adjustment component $\Delta P1_{MGk\_ESS}$ of the energy storage power supply and a second active-power-adjustment component $\Delta P2_{MGk\_ESS}$ of the energy storage power supply.

The microgrid controller 201 of the first microgrid may determine the first active-power-adjustment component $\Delta P1_{MGk\_ESS}$ of the energy storage power supply based on an active power impact amount corresponding to each second microgrid and a proportional integrator $K_{pk\_ESS}$ that is for active power regulation and that corresponds to the energy storage battery. For example, the first active-power-adjustment component of the energy storage power supply

$$\Delta P1_{MGk\_ESS} = W_p \cdot K_{pk\_ESS} \cdot \left(\frac{P_{MGk\_ref}}{P_{MGk\_base}} - \frac{P_{MGk\_sample}}{P_{MGk\_base}}\right) \cdot P_{MGi\_sample} \text{ represents an active power at a point}$$

of common coupling of a second microgrid i. $P_{MGi\_base}$ represents an active power proportional parameter of the second microgrid i. $P_{MGk\_sample}$ represents the active power at the point of common coupling of the first microgrid. $P_{MGk\_base}$ represents the active power proportional parameter of the first microgrid. $K_{pk\_ESS}$ may represent the proportional integrator (namely, a PI controller) for active power regulation of the energy storage power supply of the first microgrid. $W_p$ represents a configured active power loop filter function of the first microgrid. Optionally,

$$K_{pk\_ESS} = K_{pPk\_ESS} + \frac{K_{iPk\_ESS}}{s} \cdot K_{pPk\_ESS} \text{ represents a proportional coefficient of the proportional integrator}$$

(namely, the PI controller) for active power regulation of the energy storage power supply. $K_{iPk\_ESS}$ represents an integral coefficient of the proportional integrator (namely, the PI controller) for active power regulation of the energy storage power supply.

The microgrid controller 201 of the first microgrid may determine the second active-power-adjustment compo-

nent $\Delta P2_{MGk\_ESS}$ of the energy storage power supply based on the frequency $f_{MGk\_sample}$ at the point of common coupling of the first microgrid, the reference frequency $F_{ref}$ of the cluster, and an integrator $G_{fk\_ESS}$ that is for frequency regulation and that corresponds to the energy storage power supply. For example, the second active-power-adjustment component of the energy storage power supply $\Delta P2_{MGk\_ESS} = G_{fk\_ESS} \cdot (F_{ref} - W_f \cdot f_{MGk\_sample})$. $W_f$ represents the configured frequency loop filter of the first microgrid.

The microgrid controller 201 of the first microgrid may allocate an active power adjustment amount of each energy storage power supply in the first microgrid based on a total active power adjustment amount $\Delta PZ_{MGk\_ESS}$ of all energy storage power supplies. A ratio of an active power adjustment amount of an energy storage power supply to the total active power adjustment amount $\Delta PZ_{MGk\_ESS}$ of all the energy storage power supplies is a regulation proportion of the energy storage power supply. Optionally, active power adjustment amounts of all the energy storage power supplies may be the same. The microgrid controller 201 of the first microgrid may send the allocated active power adjustment amount to each energy storage power supply, so that each energy storage power supply adjusts an output active power.

The microgrid controller 201 of the first microgrid may obtain an optimal active power operating point of each energy storage power supply. The microgrid controller 201 of the first microgrid may send an active power control instruction to an energy storage power supply, so that the energy storage power supply adjusts an output active power to an active power indicated by the received active power control instruction. The active power control instruction for the energy storage power supply indicates a sum of an active power adjustment amount allocated to the energy storage power supply and an optimal active power operating point of the energy storage power supply.

The microgrid controller 201 of the first microgrid may determine the first active-power-adjustment component $\Delta P1_{MGk\_PV}$ of the photovoltaic subarray based on the active power impact amount corresponding to each second microgrid and a proportional integrator $K_{pk\_PV}$ that is for active power regulation and that corresponds to the photovoltaic subarray. For example, the first active-power-adjustment component of the photovoltaic subarray

$$\Delta P1_{MGk\_PV} = W_p \cdot K_{pk\_PV} \cdot \left(\frac{P_{MGk\_ref}}{P_{MGk\_base}} - \frac{P_{MGk\_sample}}{P_{MGk\_base}}\right)$$ . $P_{MGi\_sample}$ represents the active power at the point of common coupling of the second microgrid i. $P_{MGi\_base}$ represents the active power proportional parameter of the second microgrid i. $P_{MGk\_sample}$ represents the active power at the point of common coupling of the first microgrid. $P_{MGk\_base}$ represents the active power proportional parameter of the first microgrid. $K_{pk\_PV}$ may represent the proportional integrator (namely. a PI controller) for active power regulation of the photovoltaic subarray of the first microgrid. $W_p$ represents the configured active power loop filter function of the first microgrid. Optionally,

$$K_{pk\_PV} = K_{pPk\_PV} + \frac{K_{pIk\_PV}}{s}$$ . $K_{pPk\_PV}$ represents a proportional coefficient of the proportional integrator (namely, the PI controller) for active power regulation of the photovoltaic subarray. $K_{pIk\_PV}$ represents an integral coefficient of the proportional integrator (namely, the PI controller) for active power regulation of the photovoltaic subarray.

The microgrid controller 201 of the first microgrid may determine a second active-power-adjustment component $\Delta P2_{MGk\_PV}$ of the photovoltaic subarray based on the frequency $f_{MGk\_sample}$ at the point of common coupling of the first microgrid, the reference frequency $F_{ref}$ of the cluster, and an integrator $G_{fk\_PV}$ that is for frequency regulation and that corresponds to the photovoltaic subarray. For example, the second active-power-adjustment component of the photovoltaic subarray $\Delta P2_{MGk\_PV} = G_{fk\_PV} \cdot (F_{ref} - W_f \cdot f_{MGk\_sample}) \cdot W_f$ represents the configured frequency loop filter of the first microgrid. $G_{fk\_ESS}$ may represent a proportional integrator (namely, a PI controller) for frequency regulation of the photovoltaic subarray. Optionally, $$G_{fk\_ESS} = K_{fPk\_PV} + \frac{K_{fIk\_PV}}{s}$$ . $K_{fPk\_PV}$ represents a proportional coefficient of the proportional integrator (namely, the PI controller) for frequency regulation of the photovoltaic subarray. $K_{fIk\_ESS}$ represents an integral coefficient of the proportional integrator (namely, the PI controller) for frequency regulation of the photovoltaic subarray.

The microgrid controller 201 of the first microgrid may allocate an active power adjustment amount of each photovoltaic subarray in the first microgrid based on the total active power adjustment amount $\Delta PZ_{MGk\_PV}$ of the photovoltaic subarray. A ratio of an active power adjustment amount of a photovoltaic subarray to the total active power adjustment amount $\Delta PZ_{MGk\_PV}$ of the photovoltaic subarray is a regulation proportion of the photovoltaic subarray. Optionally, active power adjustment amounts of all photovoltaic subarrays may be the same. The microgrid controller 201 of the first microgrid may send the allocated active power adjustment amount to each photovoltaic subarray, so that each photovoltaic subarray adjusts an output active power.

The microgrid controller 201 of the first microgrid may obtain an optimal active power operating point of each photovoltaic subarray. The microgrid controller 201 of the first microgrid may send an active power control instruction to a photovoltaic subarray, so that the photovoltaic subarray adjusts an active power output by the photovoltaic subarray to an active power indicated by the received active power control instruction. The active power control instruction for the photovoltaic subarray indicates a sum of an active power adjustment amount allocated to the photovoltaic subarray and an optimal active power operating point of the photovoltaic subarray.

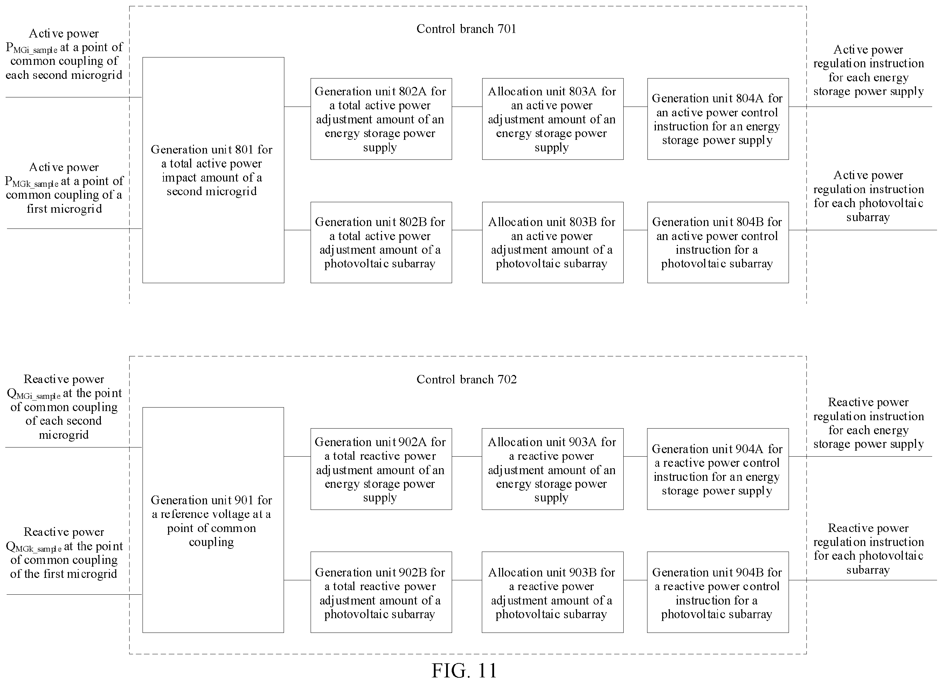

Based on the topologies of the microgrid cluster 100 provided in embodiments of this application, FIG. 11 shows a control loop of a microgrid controller of a first microgrid. The first microgrid is a non-critical voltage node in the microgrid cluster 100. As shown in FIG. 11, the control loop of the microgrid controller may include a control branch 701 and a control branch 702. For the control branch 701, refer to related descriptions in FIG. 8(a). Details are not described herein again. For the control branch 702, refer to related descriptions in FIG. 9(a). Details are not described herein again.

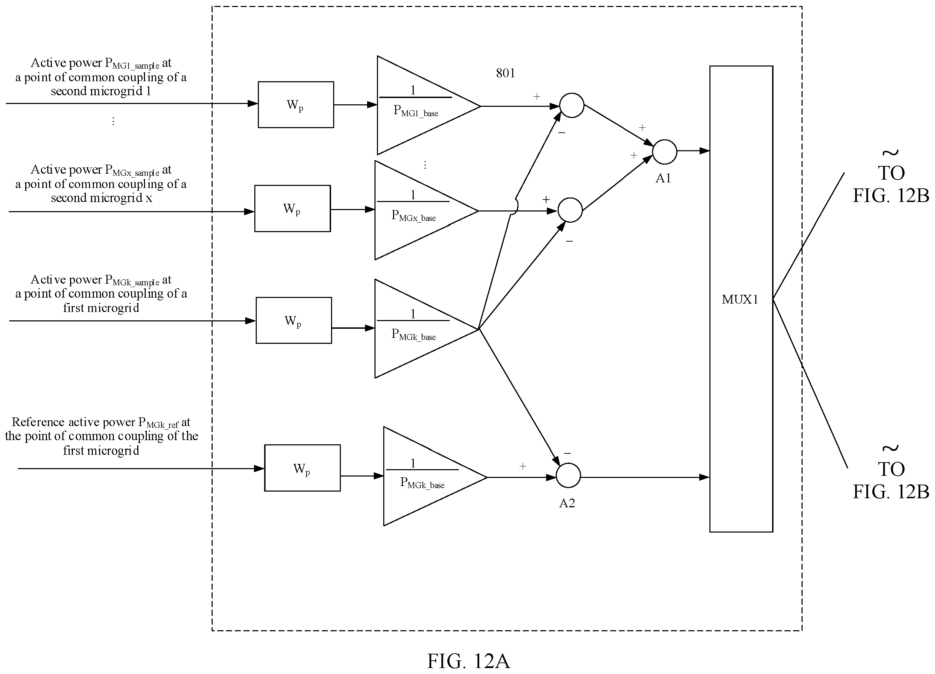

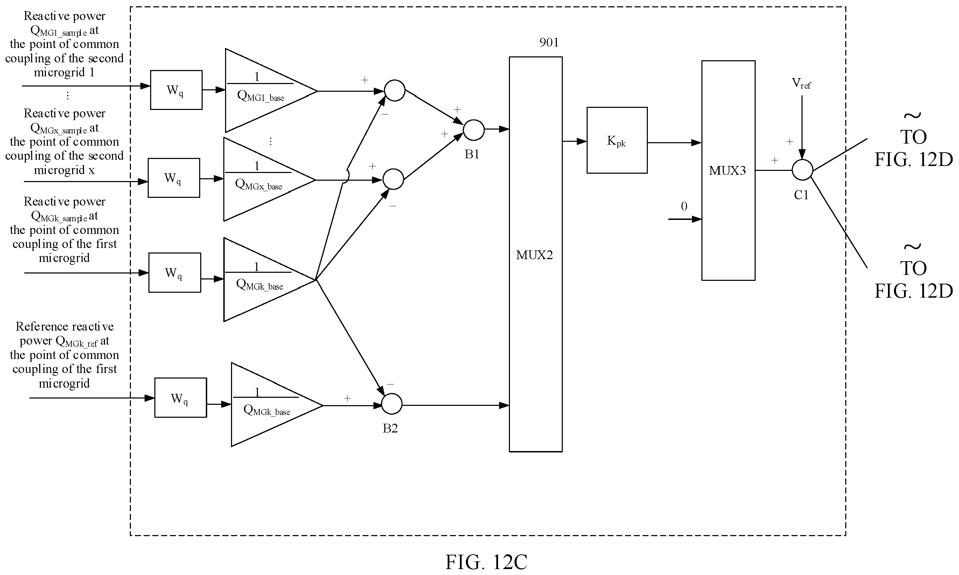

FIG. 12A to FIG. 12D are a detailed diagram of an example of the control loop of the microgrid controller.

In the control branch 701, a generation unit 801 for a total active power impact amount of a second microgrid may include a plurality of active power control loop filters $W_p$. The generation unit 801 for a total active power impact amount of a second microgrid may obtain a total active power impact amount of second microgrids in a cluster island operation mode through calculation based on the active power control loop filters $W_p$, active powers $P_{MG1\_sample}$ to $P_{MGx\_sample}$ at points of common coupling of second microgrids, and an active power $P_{MGk\_sample}$ at a point of common coupling of the first microgrid.

The generation unit 801 for a total active power impact amount of a second microgrid may obtain a total active power impact amount of the second microgrids in a cluster grid-connected operation mode through calculation based on the active power control loop filters $W_p$, a reference active power $P_{MGk\_ref}$ of the first microgrid, and the active power $P_{MGk\_sample}$ at the point of common coupling of the first microgrid.

An adder A1 may output the total active power impact amount $\sum_{1}^{n}(\frac{P_{MGi\_sample}}{P_{MGi\_base}} - \frac{P_{MGk\_sample}}{P_{MGk\_base}})$ of the second microgrids in the cluster island operation mode to a multiplexer MUX1. $P_{MGi\_sample}$ represents an active power at a point of common coupling of a second microgrid i. $P_{MGi\_base}$ represents an active power proportional parameter of the second microgrid i. $P_{MGk\_sample}$ represents the active power at the point of common coupling of the first microgrid. $P_{MGk\_base}$ represents an active power proportional parameter of the first microgrid. An adder A2 may output the total active power impact amount ($\frac{P_{MGk\_ref}}{P_{MGk\_base}} - \frac{P_{MGk\_sample}}{P_{MGk\_base}}$) of the second microgrids in the cluster grid-connected operation mode to the multiplexer MUX1. $P_{MGk\_ref}$ represents a reference frequency of the point of common coupling of the first microgrid. $P_{MGk\_sample}$ represents the active power at the point of common coupling of the first microgrid. $P_{MGk\_base}$ represents the active power proportional parameter of the first microgrid.

In the cluster island operation mode, the multiplexer MUX1 may provide data output by the adder A1, to a generation unit 802A for a total active power adjustment amount of an energy storage power supply. In the cluster grid-connected operation mode, the multiplexer MUX1 may provide data output by the adder A2, to the generation unit 802A for a total active power adjustment amount of an energy storage power supply and a generation unit 802B for a total active power adjustment amount of a photovoltaic subarray.

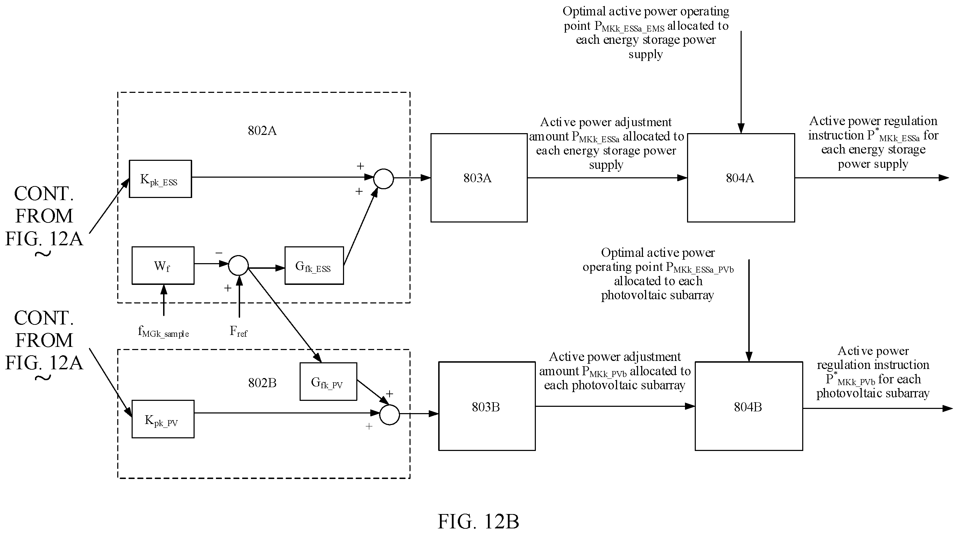

Optionally, either the generation unit 802A for a total active power adjustment amount of an energy storage power supply or the generation unit 802B for a total active power adjustment amount of a photovoltaic subarray may include a frequency control loop filter $W_f$ of the first microgrid. For example, in FIG. 12B, the generation unit 802A for a total active power adjustment amount of an energy storage power supply includes the frequency control loop filter $W_f$ of the first microgrid.

The generation unit 802A for a total active power adjustment amount of an energy storage power supply may further include both a proportional integrator $K_{pk\_ESS}$ that is for active power regulation and that corresponds to an energy storage power supply and a proportional integrator $G_{fk\_ESS}$ that is frequency regulation and that corresponds to the energy storage power supply. The generation unit 802A for a total active power adjustment amount of an energy storage power supply may obtain a total active power adjustment amount $\Delta PZ_{MGk\_ESS}$ of the energy storage power supply through calculation based on the data provided by the multiplexer MUX1, a reference frequency $F_{ref}$ of the cluster, and a frequency $f_{MGk\_sample}$ at the point of common coupling of the first microgrid, and provide the total active power adjustment amount $\Delta PZ_{MGk\_ESS}$ of the energy storage power supply to an allocation unit 803A for an active power adjustment amount of an energy storage power supply. For functions of the allocation unit 803A for an active power adjustment amount of an energy storage power supply and a generation unit 804A for an active power control instruction for an energy storage power supply, refer to related descriptions in the foregoing embodiments. Details are not described herein again.

The generation unit 802B for a total active power adjustment amount of a photovoltaic subarray may further include both a proportional integrator $K_{pk\_PV}$ that is for active power regulation and that corresponds to a photovoltaic subarray and a proportional integrator $G_{fk\_PV}$ that is frequency regulation and that corresponds to the photovoltaic subarray. The generation unit 802B for a total active power adjustment amount of a photovoltaic subarray may obtain a total active power adjustment amount $\Delta PZ_{MGk\_PV}$ of the photovoltaic subarray through calculation based on the data provided by the multiplexer MUX1, the reference frequency $F_{ref}$ of the cluster, and the frequency $f_{MGk\_sample}$ at the point of common coupling of the first microgrid, and provide the total active power adjustment amount $\Delta PZ_{MGk\_PV}$ of the

28

photovoltaic subarray to an allocation unit 803B for an active power adjustment amount of a photovoltaic subarray. For functions of the allocation unit 803B for an active power adjustment amount of a photovoltaic subarray and a generation unit 804B for an active power control instruction for a photovoltaic subarray, refer to related descriptions in the foregoing embodiments. Details are not described herein again.

In a control branch 702, a generation unit 901 for a reference voltage at a point of common coupling may include a plurality of reactive power control loop filters $W_q$ and a proportional integrator $K_{qk}$ for reactive power regulation of the first microgrid.

The generation unit 901 for a reference voltage at a point of common coupling may obtain a first reactive-power component of the first microgrid in the cluster island operation mode through calculation based on reactive powers $Q_{MG1\_sample}$ to $Q_{MGx\_sample}$ at the points of common coupling of the second microgrids, a reactive power $Q_{MGk\_sample}$ at the point of common coupling of the first microgrid, the reactive power control loop filters $W_q$, and the proportional integrator $K_{qk}$ for reactive power regulation of the first microgrid.

The generation unit 901 for a reference voltage at a point of common coupling may obtain a first reactive-power component of the first microgrid in the cluster grid-connected operation mode through calculation based on a reference reactive power $Q_{MGk\_ref}$ at the point of common coupling of the first microgrid, the reactive power $Q_{MGk\_sample}$ at the point of common coupling of the first microgrid, the reactive power control loop filters $W_q$, and the proportional integrator $K_{qk}$ for reactive power regulation of the first microgrid.

The generation unit 901 for a reference voltage at a point of common coupling may obtain a first reactive-power component that is of the first microgrid in the cluster island operation mode and that exists when the first microgrid is a non-critical voltage node, through calculation based on the reactive powers $Q_{MG1\_sample}$ to $Q_{MGx\_sample}$ at the points of common coupling of the second microgrids, the reactive power $Q_{MGk\_sample}$ at the point of common coupling of the first microgrid, the reactive power control loop filters $W_q$, and the proportional integrator $K_{qk}$ for reactive power regulation of the first microgrid.

An adder B1 may output, to a multiplexer MUX2, the first reactive-power component

$$\sum_1^n \left( \frac{Q_{MGi\_sample}}{Q_{MGi\_base}} - \frac{Q_{MGk\_sample}}{Q_{MGk\_base}} \right)$$ that is of the first microgrid in the cluster island operation mode and that exists when the first microgrid is a non-critical voltage node. $Q_{MGi\_sample}$ represents a reactive power at the point of common coupling of the second microgrid i. $Q_{MGi\_base}$ represents a reactive power proportional parameter of the second microgrid i. $Q_{MGk\_sample}$ represents the reactive power at the point of common coupling of the first microgrid. $Q_{MGk\_base}$ represents a reactive power proportional parameter of the first microgrid. An adder B2 may output the first reactive-power component (

$$\frac{Q_{MGk\_ref}}{Q_{MGk\_base}} - \frac{Q_{MGk\_sample}}{Q_{MGk\_base}}$$ ) of the first microgrid in the cluster grid-connected operation mode to the multiplexer MUX2.

$Q_{MGk\_sample}$ represents the reactive power at the point of common coupling of the first microgrid. $Q_{MGk\_base}$ represents the reactive power proportional parameter of the first microgrid. $Q_{MGk\_ref}$ represents the reference reactive power at the point of common coupling of the first microgrid.

The generation unit 901 for a reference voltage at a point of common coupling may further include the proportional integrator $K_{qk}$ for reactive power regulation of the first microgrid. In the cluster island operation mode, the multiplexer MUX2 provides, to the proportional integrator $K_{qk}$ for reactive power regulation, the first reactive-power component $$\sum_1^n \left( \frac{Q_{MGi\_sample}}{Q_{MGi\_base}} - \frac{Q_{MGk\_sample}}{Q_{MGk\_base}} \right)$$ that is of the first microgrid in the cluster island operation mode and that exists when the first microgrid is a non-critical voltage node. In the cluster grid-connected operation mode, the multiplexer MUX2 provides, to the proportional integrator $K_{qk}$ for reactive power regulation, the first reactive-power component (

$$\frac{Q_{MGk\_ref}}{Q_{MGk\_base}} - \frac{Q_{MGk\_sample}}{Q_{MGk\_base}}$$ ) of the first microgrid in the cluster grid-connected operation mode.

When the first microgrid is a non-critical voltage node, a multiplexer MUX3 in the generation unit 901 for a reference voltage at a point of common coupling provides, to an adder C1, data output by the proportional integrator $K_{qk}$ for reactive power regulation. When the first microgrid is a critical voltage node, a multiplexer MUX3 provides 0 to an adder C1.

The adder C1 may perform a summation operation on a reference voltage $V_{ref}$ of the cluster and data output by the multiplexer MUX3, to obtain a reference voltage $V_{MGK\_ref}$ at the point of common coupling of the first microgrid. The adder C1 may provide the reference voltage $V_{MGK\_ref}$ at the point of common coupling of the first microgrid to each of the generation unit 902A for a total reactive power adjustment amount of an energy storage power supply and the generation unit 902B for a total reactive power adjustment amount of a photovoltaic subarray.

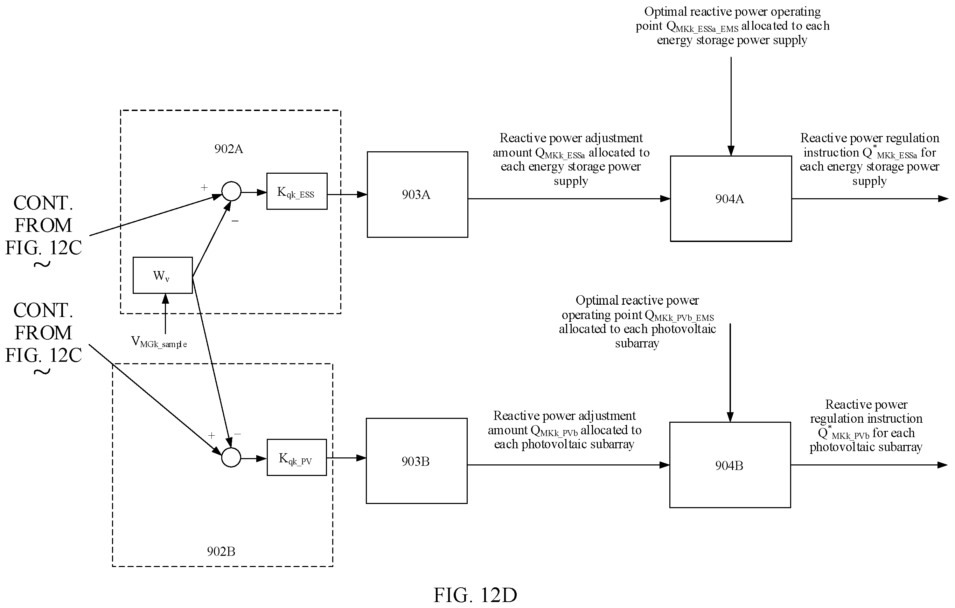

Optionally, either the generation unit 902A for a total reactive power adjustment amount of an energy storage power supply or the generation unit 902B for a total reactive power adjustment amount of a photovoltaic subarray may include a voltage control loop filter $W_v$ of the first microgrid. For example, in FIG. 12D, the generation unit 902A for a total reactive power adjustment amount of an energy storage power supply includes the voltage control loop filter $W_v$ of the first microgrid.

The generation unit 902A for a total reactive power adjustment amount of an energy storage power supply may further include a proportional integrator $K_{qk\_ESS}$ that is for voltage regulation and that corresponds to the energy storage power supply. The generation unit 902A for a total reactive power adjustment amount of an energy storage power supply may obtain a total reactive power adjustment amount $\Delta QZ_{MGk\_ESS}$ of the energy storage power supply through calculation based on data provided by the adder C1, the voltage control loop filter $W_v$, and the proportional integrator $K_{qk\_ESS}$ that is for voltage regulation and that corresponds to the energy storage power supply, and provide the total reactive power adjustment amount $\Delta QZ_{MGk\_ESS}$ of the energy storage power supply to an allocation unit 903A for a reactive power adjustment amount of an energy storage power supply. For functions of the allocation unit 903A for a reactive power adjustment amount of an energy storage power supply and a generation unit 904A for a reactive power control instruction for an energy storage power supply, refer to related descriptions in the foregoing embodiments. Details are not described herein again.

The generation unit 902B for a total reactive power adjustment amount of a photovoltaic subarray may further include a proportional integrator $K_{qk\_PV}$ that is for reactive power regulation and that corresponds to the photovoltaic subarray. The generation unit 902B for a total reactive power adjustment amount of a photovoltaic subarray may obtain a total reactive power adjustment amount $\Delta QZ_{MGk\_PV}$ of the photovoltaic subarray through calculation based on the data provided by the adder C1, the voltage control loop filter $W_v$, and the proportional integrator $K_{qk\_PV}$ that is for voltage regulation and that corresponds to the photovoltaic subarray, and provide the total reactive power adjustment amount $\Delta QZ_{MGk\_PV}$ of the photovoltaic subarray to an allocation unit 903B for a reactive power adjustment amount of a photovoltaic subarray. For functions of the allocation unit 903B for a reactive power adjustment amount of a photovoltaic subarray and a generation unit 904B for a reactive power control instruction for a photovoltaic subarray, refer to related descriptions in the foregoing embodiments. Details are not described herein again.

Based on the topologies of the microgrid cluster provided in embodiments of this application, an embodiment of this application further provides a microgrid control method, which may be applied to the microgrid cluster. A point of common coupling of any one microgrid is coupled to a tie line. The tie line is configured to transmit electric energy. The any one microgrid is communicatively connected to one or more other microgrids. Any one controller in the microgrid cluster may perform the microgrid control method according to this embodiment of this application, which is applied to the microgrid cluster. The microgrid cluster includes a plurality of microgrids. A point of common coupling of any one microgrid is coupled to a tie line. The tie line is configured to transmit electric energy. The any one microgrid is communicatively connected to one or more other microgrids. The microgrid includes a microgrid controller and a plurality of distributed energy resources. The plurality of distributed energy resources are coupled to the point of common coupling of the microgrid to which the plurality of distributed energy resources belong. The method includes:

The microgrid controller sends output power information of the microgrid to which the microgrid controller belongs, to a communicatively-connected microgrid controller in response to a cluster island operation mode; and the microgrid controller controls output powers of the plurality of distributed energy resources.

In a possible design, the output power information includes an active power at the point of common coupling of the microgrid; and after the microgrid controller sends the output power information of the microgrid to which the microgrid controller belongs, to the communicatively-connected microgrid controller in response to the cluster island operation mode, the method further includes:

The microgrid controller determines a total active power adjustment amount of the microgrid based on the active power at the point of common coupling of the microgrid and an active power or active powers at a point or points of common coupling of the one or more other microgrids; and the microgrid controller controls active powers output by the plurality of distributed energy resources in the microgrid to which the microgrid controller belongs, so that a variation of the active power at the point of common coupling of the microgrid is the total active power adjustment amount.

In a possible design, that the microgrid controller determines a total active power adjustment amount of the microgrid based on the active power at the point of common coupling of the microgrid and an active power or active powers at a point or points of common coupling of the one or more other microgrids includes:

determining a first active-power-adjustment component of the microgrid based on the active power at the point of common coupling of the microgrid and the active power or the active powers at the point or points of common coupling of the one or more other microgrids;
determining a second active-power-adjustment component of the microgrid based on a frequency at the point of common coupling of the microgrid and a reference frequency of the cluster; and
using a sum of the first active-power-adjustment component and the second active-power-adjustment component as the total active power adjustment amount of the microgrid.

In a possible design, the first active-power-adjustment component is used to adjust the active power output at the point of common coupling of the microgrid; and

the second active-power-adjustment component is used to adjust the output frequency at the point of common coupling of the microgrid.

In a possible design, that the microgrid controller controls active powers output at the plurality of distributed energy resources in the microgrid to which the microgrid controller belongs includes:

The microgrid controller obtains an active power adjustment amount of each distributed energy resource based on the total active power adjustment amount and a preset active power regulation proportional parameter of each distributed energy resource; and

the microgrid controller controls, based on the active power adjustment amount of each distributed energy resource, each distributed energy resource to adjust the output active power, so that the active power output by each distributed energy resource is a sum of an optimal active power of the distributed energy resource and the active power adjustment amount of the distributed energy resource.

In a possible design, the output power information includes a reactive power at the point of common coupling of the microgrid; and

after the microgrid controller sends the output power information of the microgrid to which the microgrid controller belongs, to the communicatively-connected microgrid controller in response to the cluster island operation mode, the method further includes:

The microgrid controller determines a reference voltage of the point of common coupling of the microgrid based on the reactive power at the point of common coupling of the microgrid, a reactive power or reactive powers at the point or points of common coupling of the one or more other microgrids, and a reference voltage of the cluster;

the microgrid controller determines a total reactive power adjustment amount of the microgrid based on a reference voltage of the microgrid and a voltage at the point of common coupling of the microgrid;

the microgrid controller obtains a reactive power adjustment amount of each distributed energy resource based on the total reactive power adjustment amount and a preset reactive power regulation proportional parameter of each distributed energy resource; and

the microgrid controller controls, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

In a possible design, the output power information includes a reactive power at the point of common coupling of the microgrid; and

after the microgrid controller sends the output power information of the microgrid to which the microgrid controller belongs, to the communicatively-connected microgrid controller in response to the cluster island operation mode, the method further includes:

determining, by the microgrid controller, a total reactive power adjustment amount of the microgrid based on a reference voltage of the cluster and a voltage at the point of common coupling of the microgrid;

allocating, by the microgrid controller, a reactive power adjustment amount of each distributed energy resource based on the total reactive power adjustment amount and a preset reactive power regulation proportional parameter of each distributed energy resource; and

controlling, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

In a possible design, the total reactive power adjustment amount of the microgrid is used to adjust the output voltage at the point of common coupling of the microgrid to the reference voltage of the cluster.

Based on the foregoing embodiments and a same concept, an embodiment of this application further provides a microgrid controller. The apparatus includes a processor and a memory. The memory is configured to store computer program instructions. The processor is configured to execute the computer program instructions stored in the memory, to implement the microgrid control method provided in the foregoing embodiments, or perform a function of the microgrid controller provided in the foregoing embodiments.

Based on the foregoing embodiments and a same concept, an embodiment of this application further provides a computer-readable storage medium. The computer-readable storage medium stores a computer program. When the computer program runs on a computer, the computer is enabled to perform the microgrid control method provided in the foregoing embodiments, or perform a function of the microgrid controller provided in the foregoing embodiments.

Based on the foregoing embodiments and a same concept, an embodiment of this application further provides a computer program product. The computer program product includes a computer program or instructions. When the computer program or the instructions are run on a computer, the computer is enabled to perform the microgrid control method provided in the foregoing embodiments. A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

It is clearly that the person skilled in the art can make various modifications and variations to this application without departing from the spirit and scope of this application. This application is intended to cover these modifications and variations of this application provided that they fall within the scope defined by the claims of this application and their equivalent technologies.

**Claims**

1. A microgrid cluster, comprising a plurality of microgrids, wherein a point of common coupling of any one microgrid is coupled to a tie line, the tie line is configured to transmit electric energy, and the any one microgrid is communicatively connected to one or more other microgrids;

   the microgrid comprises a microgrid controller and a plurality of distributed energy resources; the plurality of distributed energy resources are coupled to the point of common coupling of the microgrid to which the plurality of distributed energy resources belong, and the microgrid controller is configured to control output powers of the plurality of distributed energy resources; and
   the microgrid controller is communicatively connected to a microgrid controller or microgrid controllers of the one or more other microgrids, and the microgrid controller is configured to:
   send output power information of the microgrid to which the microgrid controller belongs, to the communicatively-connected microgrid controller in response to a cluster island operation mode.

2. The microgrid cluster according to claim 1, wherein the output power information comprises an active power at the point of common coupling of the microgrid; and
   the microgrid controller is further configured to:

   determine a total active power adjustment amount of the microgrid based on the active power at the point of common coupling of the microgrid and an active power or active powers at a point or points of common coupling of the one or more other microgrids; and
   control active powers output by the plurality of distributed energy resources in the microgrid to which the microgrid controller belongs, so that a variation of the active power at the point of common coupling of the microgrid is the total active power adjustment amount.

3. The microgrid cluster according to claim 1 or 2, wherein the microgrid controller is specifically configured to:

   determine a first active-power-adjustment component of the microgrid based on the active power at the point of common coupling of the microgrid and the active power or the active powers at the point or points of common coupling of the one or more other microgrids;
   determine a second active-power-adjustment component of the microgrid based on a frequency at the point of common coupling of the microgrid and a reference frequency of the cluster; and
   use a sum of the first active-power-adjustment component and the second active-power-adjustment component as the total active power adjustment amount of the microgrid.

4. The microgrid cluster according to claim 3, wherein

   the first active-power-adjustment component is used to adjust the active power output at the point of common coupling of the microgrid; and

the second active-power-adjustment component is used to adjust the output frequency at the point of common coupling of the microgrid.

5. The microgrid cluster according to any one of claims 2 to 4, wherein the microgrid controller is specifically configured to:

obtain an active power adjustment amount of each distributed energy resource based on the total active power adjustment amount and a preset active power regulation proportional parameter of each distributed energy resource; and

control, based on the active power adjustment amount of each distributed energy resource, each distributed energy resource to adjust the output active power, so that the active power output by each distributed energy resource is a sum of an optimal active power of the distributed energy resource and the active power adjustment amount of the distributed energy resource.

6. The microgrid cluster according to any one of claims 2 to 5, wherein the output power information comprises a reactive power at the point of common coupling of the microgrid; and
the microgrid controller is further configured to:

determine a reference voltage of the point of common coupling of the microgrid based on the reactive power at the point of common coupling of the microgrid, a reactive power or reactive powers at the point or points of common coupling of the one or more other microgrids, and a reference voltage of the cluster;
determine a total reactive power adjustment amount of the microgrid based on a reference voltage of the microgrid and a voltage at the point of common coupling of the microgrid;
obtain a reactive power adjustment amount of each distributed energy resource based on the total reactive power adjustment amount and a preset reactive power regulation proportional parameter of each distributed energy resource; and
control, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

7. The microgrid cluster according to any one of claims 2 to 5, wherein the microgrid controller is further configured to:

determine a total reactive power adjustment amount of the microgrid based on a reference voltage of the cluster and a voltage at the point of common coupling of the microgrid;
obtain a reactive power adjustment amount of each distributed energy resource based on the total reactive power adjustment amount and a preset reactive power regulation proportional parameter of each distributed energy resource; and
control, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

8. The microgrid cluster according to claim 7, wherein the total reactive power adjustment amount of the microgrid is used to adjust the output voltage at the point of common coupling of the microgrid to the reference voltage of the cluster.

9. A microgrid control method, applied to a microgrid cluster, wherein the microgrid cluster comprises a plurality of microgrids, a point of common coupling of any one microgrid is coupled to a tie line, the tie line is configured to transmit electric energy, the any one microgrid is communicatively connected to one or more other microgrids, the microgrid comprises a microgrid controller and a plurality of distributed energy resources, and the plurality of distributed energy resources are coupled to the point of common coupling of the microgrid to which the plurality of distributed energy resources belong; and
the method comprises:

sending, by the microgrid controller, output power information of the microgrid to which the microgrid controller belongs, to a communicatively-connected microgrid controller in response to a cluster island operation mode; and
controlling, by the microgrid controller, output powers of the plurality of distributed energy resources.

10. The method according to claim 9, wherein the output power information comprises an active power at the point of common coupling of the microgrid; and
after the sending, by the microgrid controller, output power information of the microgrid to which the microgrid controller belongs, to a communicatively-connected microgrid controller in response to a cluster island operation mode, the method further comprises:

> determining, by the microgrid controller, a total active power adjustment amount of the microgrid based on the active power at the point of common coupling of the microgrid and an active power or active powers at a point or points of common coupling of the one or more other microgrids; and
> controlling, by the microgrid controller, active powers output by the plurality of distributed energy resources in the microgrid to which the microgrid controller belongs, so that a variation of the active power at the point of common coupling of the microgrid is the total active power adjustment amount.

11. The method according to claim 10, wherein the determining, by the microgrid controller, a total active power adjustment amount of the microgrid based on the active power at the point of common coupling of the microgrid and an active power or active powers at a point or points of common coupling of the one or more other microgrids comprises:

> determining a first active-power-adjustment component of the microgrid based on the active power at the point of common coupling of the microgrid and the active power or the active powers at the point or points of common coupling of the one or more other microgrids;
> determining a second active-power-adjustment component of the microgrid based on a frequency at the point of common coupling of the microgrid and a reference frequency of the cluster; and
> using a sum of the first active-power-adjustment component and the second active-power-adjustment component as the total active power adjustment amount of the microgrid.

12. The method according to claim 11, wherein the first active-power-adjustment component is used to adjust the active power output at the point of common coupling of the microgrid; and
the second active-power-adjustment component is used to adjust the output frequency at the point of common coupling of the microgrid.

13. The method according to claim 10, wherein the controlling, by the microgrid controller, active powers output by the plurality of distributed energy resources in the microgrid to which the microgrid controller belongs comprises:

> obtaining, by the microgrid controller, an active power adjustment amount of each distributed energy resource based on the total active power adjustment amount and a preset active power regulation proportional parameter of each distributed energy resource; and
> controlling, by the microgrid controller based on the active power adjustment amount of each distributed energy resource, each distributed energy resource to adjust the output active power, so that the active power output by each distributed energy resource is a sum of an optimal active power of the distributed energy resource and the active power adjustment amount of the distributed energy resource.

14. The method according to claim 9 or 10, wherein the output power information comprises a reactive power at the point of common coupling of the microgrid; and
after the sending, by the microgrid controller, output power information of the microgrid to which the microgrid controller belongs, to a communicatively-connected microgrid controller in response to a cluster island operation mode, the method further comprises:

> determining, by the microgrid controller, a reference voltage of the point of common coupling of the microgrid based on the reactive power at the point of common coupling of the microgrid, a reactive power or reactive powers at the point or points of common coupling of the one or more other microgrids, and a reference voltage of the cluster;
> determining, by the microgrid controller, a total reactive power adjustment amount of the microgrid based on a reference voltage of the microgrid and a voltage at the point of common coupling of the microgrid;
> obtaining, by the microgrid controller, a reactive power adjustment amount of each distributed energy resource based on the total reactive power adjustment amount and a preset reactive power regulation proportional parameter of each distributed energy resource; and
> controlling, by the microgrid controller based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

15. The method according to claim 9 or 10, wherein the output power information comprises a reactive power at the point of common coupling of the microgrid; and
after the sending, by the microgrid controller, output power information of the microgrid to which the microgrid controller belongs, to a communicatively-connected microgrid controller in response to a cluster island operation mode, the method further comprises:

determining, by the microgrid controller, a total reactive power adjustment amount of the microgrid based on a reference voltage of the cluster and a voltage at the point of common coupling of the microgrid;
allocating, by the microgrid controller, a reactive power adjustment amount of each distributed energy resource based on the total reactive power adjustment amount and a preset reactive power regulation proportional parameter of each distributed energy resource; and
controlling, based on the reactive power adjustment amount of each distributed energy resource, each distributed energy resource to adjust an output reactive power, so that the reactive power output by each distributed energy resource is a sum of an optimal reactive power of the distributed energy resource and the reactive power adjustment amount of the distributed energy resource.

16. The method according to claim 15, wherein the total reactive power adjustment amount of the microgrid is used to adjust the output voltage at the point of common coupling of the microgrid to the reference voltage of the cluster.

FIG. 1

FIG. 2

| First microgrid | Output power information of the first microgrid → | Second microgrid 1 |
| | ← Output power information of the second microgrid 1 | |
| | Output power information of the first microgrid → | Second microgrid 2 |
| | ← Output power information of the second microgrid 2 | |
| | Output power information of the first microgrid → | Second microgrid n |
| | ← Output power information of the second microgrid n | |

FIG. 3

FIG. 4

FIG. 5

FIG. 6

Active power $P_{MGi\_sample}$ at a point of common coupling of each second microgrid

Active power $P_{MGk\_sample}$ at a point of common coupling of a first microgrid

Control loop of a microgrid controller

Control branch 701

Active power regulation instruction for each distributed energy resource

Reactive power $Q_{MGi\_sample}$ at the point of common coupling of each second microgrid

Reactive power $Q_{MGk\_sample}$ at the point of common coupling of the first microgrid

Control branch 702

Reactive power regulation instruction for each distributed energy resource

FIG. 7

Active power
$P_{MGi\_sample}$ at a
point of
common
coupling of
each second
microgrid

Active power
$P_{MGk\_sample}$ at a
point of
common
coupling of
a first microgrid

Control branch 701

Generation unit
801 for a total
active power
impact amount of
a second
microgrid

Generation unit
802A for a total
active power
adjustment amount
of an energy
storage power
supply

Allocation unit
803A for an active
power adjustment
amount of an
energy storage
power supply

Generation unit
804A for an active
power control
instruction for an
energy storage
power supply

Generation unit
802B for a total
active power
adjustment amount
of a photovoltaic
subarray

Allocation unit
803B for an active
power adjustment
amount of a
photovoltaic
subarray

Generation unit
804B for an active
power control
instruction for a
photovoltaic
subarray

Active power
regulation
instruction for
each energy
storage power
supply

Active power
regulation
instruction for
each
photovoltaic
subarray

FIG. 8(a)

FIG. 8(b)

EP 4 618 352 A1

Active power $P_{MGi\_sample}$ at a point of common coupling of each second microgrid

Active power $P_{MGk\_sample}$ at a point of common coupling of a first microgrid

Control branch 701

Generation unit 801 for a total active power impact amount of a second microgrid

Generation unit 802B for a total active power adjustment amount of a photovoltaic subarray

Allocation unit 803B for an active power adjustment amount of a photovoltaic subarray

Generation unit 804B for an active power control instruction for a photovoltaic subarray

Active power regulation instruction for each photovoltaic subarray

FIG. 8(c)

Control branch 702

Reactive power $Q_{MGi\_sample}$ at a point of common coupling of each second microgrid

Reactive power $Q_{MGk\_sample}$ at a point of common coupling of a first microgrid

Generation unit 901 for a reference voltage at a point of common coupling

Generation unit 902A for a total reactive power adjustment amount of an energy storage power supply

Allocation unit 903A for a reactive power adjustment amount of an energy storage power supply

Generation unit 904A for a reactive power control instruction for an energy storage power supply

Generation unit 902B for a total reactive power adjustment amount of a photovoltaic subarray

Allocation unit 903B for a reactive power adjustment amount of a photovoltaic subarray

Generation unit 904B for a reactive power control instruction for a photovoltaic subarray

Reactive power regulation instruction for each energy storage power supply

Reactive power regulation instruction for each photovoltaic subarray

FIG. 9(a)

Reactive power $Q_{MGi\_sample}$ at a point of common coupling of each second microgrid

Reactive power $Q_{MGk\_sample}$ at a point of common coupling of a first microgrid

Control branch 702

Generation unit 901 for a reference voltage at a point of common coupling

Generation unit 902A for a total reactive power adjustment amount of an energy storage power supply

Allocation unit 903A for a reactive power adjustment amount of an energy storage power supply

Generation unit 904A for a reactive power control instruction for an energy storage power supply

Reactive power regulation instruction for each energy storage power supply

FIG. 9(b)

Reactive power
Q$_{MGi\_sample}$ at a
point of
common
coupling of
each second
microgrid

Reactive power
Q$_{MGk\_sample}$ at a
point of
common
coupling of a
first microgrid

Control branch 702

Generation unit
901 for a
reference voltage
at a point of
common
coupling

Generation unit
902B for a total
reactive power
adjustment amount
of a photovoltaic
subarray

Allocation unit
903B for a reactive
power adjustment
amount of a
photovoltaic
subarray

Generation unit
904B for a reactive
power control
instruction for a
photovoltaic
subarray

Reactive power
regulation
instruction for
each
photovoltaic
subarray

FIG. 9(c)

EP 4 618 352 A1

Control branch 702

Reference voltage of a cluster

Generation unit 901 for a reference voltage at a point of common coupling

Generation unit 902A for a total reactive power adjustment amount of an energy storage power supply

Allocation unit 903A for a reactive power adjustment amount of an energy storage power supply

Generation unit 904A for a reactive power control instruction for an energy storage power supply

Reactive power regulation instruction for each energy storage power supply

Generation unit 902B for a total reactive power adjustment amount of a photovoltaic subarray

Allocation unit 903B for a reactive power adjustment amount of a photovoltaic subarray

Generation unit 904B for a reactive power control instruction for a photovoltaic subarray

Reactive power regulation instruction for each photovoltaic subarray

FIG. 10(a)

EP 4 618 352 A1

Control branch 702

Reference voltage of a cluster

| Generation unit 901 for a reference voltage at a point of common coupling | Generation unit 902A for a total reactive power adjustment amount of an energy storage power supply | Allocation unit 903A for a reactive power adjustment amount of an energy storage power supply | Generation unit 904A for a reactive power control instruction for an energy storage power supply |

Reactive power regulation instruction for each energy storage power supply

FIG. 10(b)

Control branch 702

Reference voltage of a cluster

Generation unit 901 for a reference voltage at a point of common coupling

Generation unit 902B for a total reactive power adjustment amount of a photovoltaic subarray

Allocation unit 903B for a reactive power adjustment amount of a photovoltaic subarray

Generation unit 904B for a reactive power control instruction for a photovoltaic subarray

Reactive power regulation instruction for each photovoltaic subarray

FIG. 10(c)

EP 4 618 352 A1

Active power
$P_{MGi\_sample}$ at a point of
common coupling of
each second microgrid

Control branch 701

Generation unit 801 for
a total active power
impact amount of a
second microgrid

Generation unit 802A for
a total active power
adjustment amount of an
energy storage power
supply

Allocation unit 803A for
an active power
adjustment amount of an
energy storage power
supply

Generation unit 804A for
an active power control
instruction for an energy
storage power supply

Active power
regulation instruction
for each energy
storage power supply

Active power
$P_{MGk\_sample}$ at a point of
common coupling of a
first microgrid

Generation unit 802B for
a total active power
adjustment amount of a
photovoltaic subarray

Allocation unit 803B for
an active power
adjustment amount of a
photovoltaic subarray

Generation unit 804B for
an active power control
instruction for a
photovoltaic subarray

Active power
regulation instruction
for each photovoltaic
subarray

Reactive power
$Q_{MGi\_sample}$ at the point
of common coupling
of each second
microgrid

Control branch 702

Generation unit 901 for
a reference voltage at a
point of common
coupling

Generation unit 902A for
a total reactive power
adjustment amount of an
energy storage power
supply

Allocation unit 903A for
a reactive power
adjustment amount of an
energy storage power
supply

Generation unit 904A for
a reactive power control
instruction for an energy
storage power supply

Reactive power
regulation instruction
for each energy
storage power supply

Reactive power
$Q_{MGk\_sample}$ at the point
of common coupling
of the first microgrid

Generation unit 902B for
a total reactive power
adjustment amount of a
photovoltaic subarray

Allocation unit 903B for
a reactive power
adjustment amount of a
photovoltaic subarray

Generation unit 904B for
a reactive power control
instruction for a
photovoltaic subarray

Reactive power
regulation instruction
for each photovoltaic
subarray

FIG. 11

FIG. 12A

FIG. 12B

EP 4 618 352 A1

Reactive power
$Q_{MG1\_sample}$ at
the point of common
coupling of the second
microgrid 1

$\vdots$

Reactive power
$Q_{MGx\_sample}$ at
the point of common
coupling of the second
microgrid x

Reactive power
$Q_{MGk\_sample}$ at
the point of common
coupling of the first
microgrid

Reference reactive
power $Q_{MGk\_ref}$ at
the point of common
coupling of the first
microgrid

$W_q$

$\dfrac{1}{Q_{MG1\_base}}$

$\dfrac{1}{Q_{MGx\_base}}$

$\dfrac{1}{Q_{MGk\_base}}$

$\dfrac{1}{Q_{MGk\_base}}$

901

B1

B2

MUX2

$K_{pk}$

0

MUX3

$V_{ref}$

C1

$\sim$
TO
FIG. 12D

$\sim$
TO
FIG. 12D

FIG. 12C

Optimal reactive power operating
point $Q_{MKk\_ESSa\_EMS}$ allocated to each
energy storage power supply

Reactive power adjustment
amount $Q_{MKk\_ESSa}$ allocated to
each energy storage power
supply

Reactive power regulation
instruction $Q^*_{MKk\_ESSa}$ for
each energy storage power
supply

902A

CONT.
FROM
FIG. 12C
~

$+$

$-$

$K_{qk\_ESS}$

903A

904A

$W_v$

$V_{MGk\_sample}$

CONT.
FROM
FIG. 12C
~

Optimal reactive power
operating point $Q_{MKk\_PVb\_EMS}$
allocated to each photovoltaic
subarray

Reactive power adjustment
amount $Q_{MKk\_PVb}$ allocated to
each photovoltaic subarray

Reactive power
regulation instruction
$Q^*_{MKk\_PVb}$ for each
photovoltaic subarray

$+$

$-$

$K_{qk\_PV}$

903B

904B

902B

FIG. 12D

# INTERNATIONAL SEARCH REPORT

| International application No. |
| --- |
| **PCT/CN2023/102935** |

**A. CLASSIFICATION OF SUBJECT MATTER**

H02J3/38(2006.01)i; H02J3/48(2006.01)i; H02J3/50(2006.01)i; H02J3/16(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 华为数字能源技术有限公司, 微电网, 微网, 集群, 并网, 控制器, 有功, 无功, 频率, 电压, 通信, 通讯, micro 2w electric, grid, control, group, reactive, active, communication

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115800363 A (SHANGHAI HUAWEI DIGITAL ENERGY TECHNOLOGY CO., LTD.) 14 March 2023 (2023-03-14) <br> claims 1-16 | 1-16 |
| X | CN 105576837 A (SOUTHEAST UNIVERSITY) 11 May 2016 (2016-05-11) <br> description, paragraphs 17-44, and figures 1-3 | 1, 2, 9, 10 |
| Y | CN 105576837 A (SOUTHEAST UNIVERSITY) 11 May 2016 (2016-05-11) <br> description, paragraphs 17-44, and figures 1-3 | 3-8, 11-16 |
| Y | CN 104238362 A (STATE GRID CORPORATION OF CHINA et al.) 24 December 2014 (2014-12-24) <br> description, paragraphs 57-81, and figures 1-3 | 3-8, 11-16 |
| A | CN 108565898 A (GUODIAN NANJING AUTOMATION CO., LTD.) 21 September 2018 (2018-09-21) <br> entire document | 1-16 |
| A | CN 108599379 A (CHINA SOUTHERN POWER GRID ELECTRIC POWER RESEARCH INSTITUTE CO., LTD.) 28 September 2018 (2018-09-28) <br> entire document | 1-16 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2023** | **12 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

# EP 4 618 352 A1

**INTERNATIONAL SEARCH REPORT**

International application No.

**PCT/CN2023/102935**

### C. DOCUMENTS CONSIDERED TO BE RELEVANT

| Category* | Citation of document, with indication, where appropriate, of the relevant passages | Relevant to claim No. |
|---|---|---|
| A | JP 2009207225 A (TOKYO ELECTRIC POWER CO., INC.) 10 September 2009 (2009-09-10)<br>entire document | 1-16 |

Form PCT/ISA/210 (second sheet) (July 2022)

58

| International application No. |
| --- |
| **PCT/CN2023/102935** |

| Patent document cited in search report | | | Publication date (day/month/year) | Patent family member(s) | | Publication date (day/month/year) |
| --- | --- | --- | --- | --- | --- | --- |
| CN | 115800363 | A | 14 March 2023 | None | | |
| CN | 105576837 | A | 11 May 2016 | None | | |
| CN | 104238362 | A | 24 December 2014 | None | | |
| CN | 108565898 | A | 21 September 2018 | None | | |
| CN | 108599379 | A | 28 September 2018 | None | | |
| JP | 2009207225 | A | 10 September 2009 | JP 4968105 | B2 | 04 July 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211430310